# EUROPÄISCHE PATENTSCHRIFT

(11) **EP 3 924 113 B1**
(45) Veröffentlichungstag und Bekanntmachung des Hinweises auf die Patenterteilung: **26.11.2025**
(21) Anmeldenummer: 20706086.4
(22) Anmeldetag: 09.02.2020
(51) Int. Cl.: B09B 3/00, C08J 11/00, B09B 5/00, B29B 17/02, B29B 17/04, C02F 11/00, B09B 3/10

(54) **MECHANOCHEMISCHES VERFAHREN**
MECHANOCHEMICAL PROCESS
PROCÉDÉ MÉCANO-CHIMIQUE

(30) Priorität: 12.02.2019 DE 102019000987
(43) Veröffentlichungstag der Anmeldung: 22.12.2021
(73) Patentinhaber: Smart Material Printing B.V., 7532 XJ Enschede (NL); Münch, Elke, 55452 Dorsheim (DE)
(72) Erfinder: LUTHE, Gregor, Costa da Caparica 2825 384 (PT)
(74) Vertreter: Meissner Bolte Düsseldorf Patentanwälte Rechtsanwälte Partnerschaft mbB
(86) Internationale Anmeldenummer: PCT/EP2020/000035
(87) Internationale Veröffentlichungsnummer: WO 2020/164792

(56) Entgegenhaltungen:
- EP-A2- 0 553 776
- WO-A1-94/14503
- DE-A1- 10 261 204
- US-B2- 8 324 523

## Beschreibung

### Gebiet der Erfindung

Die vorliegende Erfindung betrifft ein mechanochemisches Verfahren zur Dekontamination und/oder Eliminierung von problembehafteten, synthetischen, biogenen und biologischen Materialien.

### Stand der Technik

Die speziellen physikalisch chemischen Effekte und Mechanismen der Mechanochemie sind Gegenstand zahlreicher theoretischer Untersuchungen wie zum Beispiel die Artikel von
- V. V. Boldyrev, Mechanochemistry and mechanical activation of solids, in Russian Chemical Reviews, 75 (3) 177-189 (2006);
- P. Yu. Butygain und A. N. Streletskii, The Kinetics and Energy Balance of Mechanochemical Transformations, in Physics of the Solid State, Vol. 47, No. 5, 2005, 856-852;
- J. Fontaine et al. Tribochemistry between hydrogen and diamond-like carbon films, in Surface Coatings Technology 146-147 (2001) 286-291;
- L. Takacs, Mechanochemistry and the Other Branches of Chemistry: Similarities and Differences, in Acta Physica Polonica A, Vol. 121 (2012), 3, 711-714;
- S. A. Steiner III et al., Circumventing the Mechanochemical Origins of Strength Loss in the Synthesis of Hierarchical Carbon Fibers, in Applied Materials & Intefaces, 2013, 4892-4903; oder
- Materialsgate Newsletter 12.9.2017, Tribologie: Simulation zeigt auf molekularer Ebene bislang unbekannte Reibungsmechanismen.

Des Weiteren geben Review-Artikel einen Überblick über die geschichtliche Entwicklung und die Perspektiven der Mechanochemie wie etwa die Artikel von
- S. L. James et al., Mechanochemistry: opportunities for new and cleaner synthesis, in Chem. Soc. Rev., 2012, 41, 413-447, worin Synthesen anorganischer Materialien wie Legierungen, Oxide, Halogenide, Sulfide, Nitride und Komposite, Cokristalle wie Charge-Transfer-Cokristalle, Säure-Base-Cokristalle, ionische Cokristalle und die organische Katalyse durch Cokristallisation, neue Formen von Arzneimitteln wie pharmazeutische Cokristalle und organische Synthesen mit Kohlenstoff-Kohlenstoff- und Kohlenstoff-X-Bindungsbildung wie stöchiometrische organische Reaktionen, Metall katalysierte organische Reaktionen, organokatalytische asymmetrische Reaktionen, Synthesen von Liganden und Wirt-Gast-Systemen, die Synthese von Metallkomplexen und die Synthese von Koordinationspolymeren (MOFs) referiert werden;
- P. Balaz et al., Hallmarks of mechanochemistry: from nanoparticles to technology, in Chem. Soc. Rev., 42, 2013, 7571-7637; oder
- Tomislav Friscic, Supramolecular concepts and new techniques in mechanochemistry: cocrystals, cages, rotoxanes, open metal-organic frameworks, in Chem. Soc. Rev., 2012, 41, 3493-3510.

Die Mechanochemie wird auch zur Lösung spezieller Probleme und für Synthesen verwendet.

So beschreiben F. Cavalierie und F. Padella in dem Artikel Development of composite materials by mechanochemical treatment of post-consumer plasic waste, in Waste Management, 22 (2002) 913-916, das aus Gemischen aus Polypropylen und Polyethylen durch Mahlen in flüssigem Kohlendioxid ein Komposit hergestellt werden kann, das keine Unverträglichkeit zwischen den beiden Polymeren mehr zeigt und das bessere Eigenschaften als die Ausgangspolymeren aufweist.

So beschreiben Haoliang Jia et al. in ihrem Artikel Formation of nanocrystalline TiC from titanium and different carbon sources by mechanical alloying in Journal of Alloys and Compounds, 472 (2009) 97-103, die Herstellung von nanokristallinem Titancarbid aus Titanpulvern und verschiedenen Kohlenstoffquellen.

Tan Xing et al. beschreiben in ihrem Artikel Ball milling: a green approach for synthesis of nitrogen doped carbon nanoparticles in Nanoscale, 2013, 5, 7970-7976, ein industriell anwendbares Syntheseverfahren zur Herstellung von stickstoffdotierten Kohlenstoffnanopartikeln.

L. Borchardt et al. beschreiben in ihrem Artikel Mechano-chemistry assisted synthesis of hierarchical porous carbon applied as supercapacitors in Beilstein Journal of Organic Cemistry, 2017, 13, 1332, die Herstellung von porösem Kohlenstoff aus Pflanzenmaterialien zur Verwendung in Kondensatoren und Elektroden.

In ihrem Artikel Mechanochemical surface modification of carbon fibers using a simple rubbing method in Journal of Composite Materials 0 (0) 1-8, beschreiben S. Motozuka et al. die Oberflächenmodifizierung von Kohlenstofffasern auf der Basis von Polyacrylnitril durch mechanische Reibung.

In ihrem Artikel Mechanochemical polymerization - controlling a polycondensation reaction between a diamine and a dialdehyde in a ball mill in RCS Adv., 2016, 6, 64799-64802, beschreiben S. Grätz und L. Borchardt die mechanochemische Polykondensation zwischen einem Diamin und einem Dialdehyd, die eine attraktive Alternative zu herkömmlichen Verfahren bietet.

In dem Konferenzbericht AIP Conference Proceedings, Volume1664, Issue 1, 150008 (2015), Recyclig and Processing of several typical crosslinked polymer scraps with enhanced mechanical properties based on solid state mechanochemical milling, beschreiben die Autoren die Vermahlung von teilweise devulkanisierten oder entvernetzten Reifengummischnitzeln, nachvulkanisierten Fluorkautschukschnitzeln und vernetzten Polyethylenschnitzeln von Kabelabfällen, bei der sie Material mit verbesserter Verarbeitbarkeit und besseren mechanischen Eigenschaften erhalten.

Weitere Beispiel betreffend die Verwendbarkeit der Mechanochemie auf unterschiedlichen Gebieten gehen aus den folgenden Patentschriften hervor.

So offenbart die deutsche Offenlegungsschrift DE 10 2014 101 766 A1 ein Verfahren zur Rückgewinnung und gegebenenfalls Trennung von Lanthaniden als Chloride oder Oxide aus mineralischen Abfällen und Reststoffen. Bei diesem Verfahren werden zunächst Pulverpartikel hergestellt, die anschließend mechanochemisch aktiviert werden.

Aus dem europäischen Patent EP 1 830 824 B1 geht ein Verfahren zum Herstellen einer Nanopartikelzusammensetzung hervor, die Nanopartikel eines therapeutischen Wirkstoffs umfasst. Dabei wird ein Gemisch einer Vorläuferverbindung und eines Coreaktionsmittels unter Verwendung eines Mahlmediums in einer Mahlvorrichtung vermahlen.

Aus der amerikanischen Patentanmeldung US 2017/0036967 A1 geht ein Verfahren zur Herstellung von Düngemitteln auf der Basis von Huminsäuren aus Braunkohle und Leonardit in einem mechanochemischen Reaktor für hochviskose Medien hervor.

In der internationalen Patentanmeldung WO/072527 A2 wird die mechanochemische Herstellung von Zeolithen beschrieben.

Aus der europäischen Patentanmeldung EP 1 681 270 A2 geht die mechanochemische Herstellung von weitgehend eisenfreien Metallchalkogeniden oder -arseniden aus eisenfreien Metallpulvern und Schwefel, Selen, Tellur oder Arsen hervor.

Das europäische Patent EP 1 303 460 B1 beschreibt die mechanochemische Synthese von lithiiertem Mangandioxid aus Mangandioxid und Lithiumssalzen.

Die Übersetzung der europäischen Patentschrift EP 0 963 825 B1, DE 699 11 502 T2, beschreibt die mechanochemische Behandlung von Kunststoffen wie Polyethylenterephthalat, Polystyrol, Polypropylen oder Polyethylen in der Gegenwart von flüssigem Kohlendioxid für die Kompatibilisierung und das Recycling von heterogenen Kunststoffen, die aus städtischen oder gewerblichen Abfällen gewonnen werden.

Aus der deutschen Offenlegungsschrift DE 42 40 545 A1 geht ein Verfahren zur Herstellung von Peptiden mithilfe proteolytischer Enzyme hervor, bei der Amino-geschützte Aminosäuren als Acylierungskomponente mit Carboxyl-geschützten Aminosäuren in der Gegenwart einer Kristallwasser enthaltenden Substanz wie Na₂CO₃ x 10H₂O durch Vermahlen miteinander umgesetzt werden.

Aus dem japanischen Patent JP 3099064 B2 geht ein mechanochemisches Verfahren zur Herstellung eines thermoplastischen Komposits aus einem nicht thermoplastischen, natürlichen Polymer, wie Cellulose oder Chitin, und aus 5 bis 20 Gew.-% eines synthetischen Thermoplasten hervor. Das resultierende Kompositmaterial selbst ist thermoplastisch.

In der älteren deutschen Patentanmeldung Aktenzeichen 10 2018 000 418.0 mit dem Anmeldetag vom 20.1.2017 wird ein mechanochemisches Verfahren zur Herstellung von Wertprodukten, die von persistenten organischen Schadstoffen und anderen Organohalogenverbindungen frei sind, beschrieben. Sie werden aus Abfällen von sortenreinen und nicht sortenreinen Kunststoffen und Kunststofflaminaten, die mit persistenten organischen Schadstoffen kontaminiert sind und/oder andere Organohalogenverbindungen enthalten, hergestellt, wobei bei dem mechanochemischen Verfahren
(i) die Abfälle zerkleinert werden, sodass eine möglichst enge Teilchengrößenverteilung resultiert,
(ii) die zerkleinerten Abfälle in eine Mühle gefüllt werden, die Mahlkugeln enthält, und durch Mahlen weiter zerkleinert werden,
(iii) mindestens ein Dehalogenierungsmittel in einem bezüglich der vorhandenen Mengen an persistenten organischen Schadstoffen und/oder anderen Organohalogenverbindungen molaren Überschuss zugesetzt wird,
(iv) die Mischung aus gemahlenen zerkleinerten Abfällen und Dehalogenierungsmittel weiter vermahlt und die Mahlung nach einer vorgewählten Zeit beendet,
(v) die resultierenden von persistenten organischen Schadstoffen und anderen Organohalogenverbindungen freien Wertprodukte von den Mahlkugeln abtrennt und die entstandenen, halogenhaltigen, wasserlöslichen Produkte durch Waschen mit wässrigen Lösungsmitteln abtrennt und/oder die entstandenen, halogenhaltigen, wasserunlöslichen Produkte nicht auswäscht, sondern als Füllstoffe in den Wertprodukten belässt und
(vi) die gewaschenen Wertprodukte nach der Trocknung sowie die nicht gewaschenen Wertprodukte überprüft, ob sie noch persistente organische Schadstoffe und/oder andere Organohalogenverbindungen enthalten, wobei man
(vii) vor und/oder nach dem Verfahrensschritt (iv) mindestens einen Zusatzstoff hinzugibt.

Ein weiteres Problem des Recyclings von Kunststoffen, insbesondere von sortenunreinen Kunststoffen und Kunststofflaminaten ist ihr hoher Gehalt an organisch gebundenen Halogenen, wenn zum Beispiel PVC, PVDF, PTFE oder chlorfluorierte Thermoplaste in den Kunststoffabfällen enthalten sind.

G. Cagnetta et al. beschreiben in ihrem Artikel Mechanochemical conversion of brominated POPs into useful oxybromides: a greener approach, in Sci. Rep., 2016, 6, 28394 die Zersetzung von bromierten persistenten organischen Schadstoffen durch die Umsetzung mit stöchiometrischen Mengen an Wismutoxid oder Lanthanoxid unter Bildung der entsprechenden Oxybromide und amorphem Kohlenstoff.

In ihrem Artikel Simultaneous treatment of PVC and oyster-shell wastes by mechanochemical means, in Waste Management 28 (2008) 484-488, beschreiben W. Tonganmp et al. Die Dechlorierung von PVC mit Austernschalenabfall, die Calciumchlorid und organische Produkte mit Doppelbindungen liefert.

Aus dem deutschen Patent DE 197 42 297 C2 geht ein mechanochemisches Verfahren zur reduktiven Dehalogenierung von halogenorganischen Stoffen hervor, wobei der Stoff oder das Stoffgemisch unter Zusatz von elementarem Alkalimetall, Erdalkalimetall, Aluminium, oder Eisen als Reduktionsmittel und Ethern, Polyethern, Ammoniak, Aminen, Amiden, Trialkylsilanen, Polyalkylhydrogensiloxanen oder Metallnitriden, einzeln oder in Kombination als Wasserstoffquelle in einem Schritt vermahlen wird. In dieser Weise können mit PCB oder Chlophen kontaminierte Sande oder Böden mechanochemisch dekontaminiert werden.

Aber nicht nur der hohe Organohalogengehalt von Kunststoffen wie PVC, sondern auch ein niedrigerer Organohalogengehalt kann beim Recycling von Kunststoff und Kunststofflaminaten Probleme bereiten. Denn selbst wenn die Abfälle keine organisch gebundenen Halogene enthalten, sammeln sich nach langer Gebrauchsdauer der Kunststoffe und der Laminate im Freien im Laufe der Zeit unweigerlich ubiquitäre persistente organische Schadstoffe oder langlebige organische Schadstoffe oder POP (persistent organic pollutants) wie Organochlor-Insektizide der 1. Generation wie zum Beispiel Chlordan, DDT, Dieldrin oder Toxaphen, industriell hergestellte Chemikalien wie PCB oder Nebenprodukte von Herstellungs- und Verbrennungsprodukten wie chlorierte und bromierte Dioxine und Dibenzofurane. Vertreter dieser Verbindungsklassen werden auch als das "Dreckige Dutzend" bezeichnet. Die POP sind semivolatil und können sowohl in der Gasphase als auch an Staubpartikel gebunden vorkommen und werden durch Ferntransportmechanismen weltweit verteilt. Wegen ihrer Lipophilie kommt es zur Bioakkumulation in den Fettgeweben von Tieren und Menschen. Einige der POP gelten als endokrine Disruptoren oder sind kanzerogen und werden auch mit Unfruchtbarkeit, Verhaltensauffälligkeiten und Immundefekten in Verbindung gebracht. So kontaminieren sie auch in Spuren großtechnische Produkte wie Titandioxidnanopartikel, die als Farbpigmente in Kosmetika, Tinten und Kunststoffen verwendet werden. Die Mengen mögen zwar im Einzelnen gering erscheinen, wegen der in Rede stehenden Mengen an Titandioxid können sie nicht vernachlässigt werden.

(Vgl. hierzu den Artikel von Georgios Ctistis, Peter Schön, Wouter Bakker und Gregor Luthe, PCDDs, PCDFs, and PCBs co-occurence in TiO₂ nanoparticles, in Environmental Science and Pollution Research, DOI 10.1007/s11356-015-5628-7)

In dem Artikel "A mini-review on mechanochemical treatment of contaminated soil: From laboratory to large-scale", in Critical Reviews in Environmental Science and technology, August 2018, Seiten 1 bis 51, gibt G. Cagnetta einen Überblick über die mechanochemische Dekontaminierung von Böden.

Aus der deutschen Patentanmeldung DE 102 61 204 A1 ist ein Verfahren zur Dekontamination bzw. Detoxifizierung von mit Umweltgiften wie polyhalogenierten Verbindungen oder chlororganischen Stoffen wie zum Beispiel Dioxinen, Dibenzofuranen und Beipodukten (Congeneren) oder PCBs belasteten festen oder flüssigen Produkten mittels hochkinetischer Prozesse bekannt, bei denen die kontaminierten Produkte unter Verwendung sogenannter Tribomaterialien einer hochkinetischen Feinstzerkleinerung durch vielfache Einwirkung von Prall- oder Scherkräften unterzogen werden. Als Tribomaterialien werden alle Sorten von Glas von Duran/Solidex bis zu Fensterglas verwendet. Außerdem können Sandkörner, Granitpartikel oder Quarzporphyrpartikel sowie Email als Scherbenpartikel oder Sodalit oder Keramik gegebenenfalls in Mischung verwendet werden. In diesen Fällen sind die Partikel bis zu 5 mm groß. Es können aber auch Oxide wie Siliziumdioxid, Calciumoxid, Magnesiumoxid, Titandioxid, Eisenoxide, Zirkonoxid oder Boroxid, Sulfide wie Pyrit, Eisensulfid und Antimonsulfid, Nitride wie Bornitrid, und Siliziumnitrid, Carbide wie Borcarbid, Siliziumcarbid und Wolframcarbid, Silicide wie Eisensilicid und Titansilicid oder Silicium und Bor gegebenenfalls in Mischung verwendet werden. Die Partikelgrößen liegen hierbei zwischen 10 µm und 1 mm. In Beispiel 3 der Patentanmeldung wurden 10 g Aktivkohle, an die 0,17 TCDD (2,3,7,8-Tetrachlordibenzo [1,4]dioxin) und 0,23 g Congeneren absorbiert waren, mit 200 g Duran Glasscherben und 2 kg Stahlkugeln (CR 6) vermahlen. Nach dem Mahlen ließen sich keine Giftstoffe und flüchtige organische Verbindungen mehr nachweisen.

Aus der Firmenschrift "HUBER Technology Waste Water Solution, Vierte Reinigungsstufe: HUBER-Lösungen zur Elimination von Mikroverunreinigungen", aus dem Internet heruntergeladen am 30.12.2018, sind Verfahren zur Entfernung von Spurenstoffen bekannt. Diese verwenden Aktivkohlefilter, die die durch Auswaschen regeneriert wird. Allerdings steigt mit fortschreitendem Betrieb des Filters die Beladung der inneren Oberfläche der Aktivkohle mit Mikroverunreinigungen. Das Verfahren mit Aktivkohlefilter kann auch mit einer Ozonisierung oder mit einer Sandfiltration des Wassers aus den Nachklärbecken kombiniert werden.

Jährlich fallen allein in Deutschland Millionen Tonnen an Gülle, getrockneter Gülle, Jauche, Gärresten, Trockenfermenten, Klärschlämme, Fermenten, Bioabfall, Wasser aus Nachklärbecken, trockene Konzentrate der biologischen Reinigungsstufen und Abfällen und Rückständen von chemischen Wäschern, Filtern und Elektrofiltern, Abfällen und Rückständen aus der Abluftbehandlung und aus Klimaanlagen. Diese enthalten unter anderem Nitrate, Nitrite, Nitrosamine, Ammoniumsalze, Ammoniak, Schwefelverbindungen, Pestizide, Medikamente und deren Rückstände und Metaboliten, Schwermetalle und radioaktive Metalle und ihre Verbindungen, Viren, Bakterien und weitere toxische Materialien.

Von Seiten des Deutschen Gesetzgebers und der Europäischen Union werden daher immer strengere Maßstäbe an die Emission von diesen Schadstoffen angelegt. Hierauf müssen sich Produzenten, Abfallaufbereiter und Abfallverwender einstellen.

Besonders problematisch ist Gülle und ihre traditionelle und übliche Verwertungsweise wie die Ausbringung als wirtschaftseigener Düngernge auf Äckern und Grünland mit einem Güllefass, dass die Gülle auf der Oberfläche verteilt oder direkt in den Boden einimpft. Wird die Gülle im Übermaß ausgebracht oder zu Jahreszeiten, in denen die Vegetation wie im Winter die enthaltenen Nährstoffe nicht aufnehmen kann, steigt die Gefahr der Nährstoffauswaschung in tiefere Bodenschichten und der Einsickerung oder Abschirmung und Erosion in Grund- und Oberflächenwasser. Ammoniumsalze, Nitrate und andere Gülle-Inhaltsstoffe können durch Eutrophierung in Gewässern beispielsweise Algenblüten verursachen und Fischsterben auslösen. Nicht zuletzt ist die Ausbringung auf der Bodenoberfläche - insbesondere beim Einsatz von Breitverteilern - mit Nährstoffverlusten verbunden, der leichtlösliche Stickstoffverbindungen und vor allem Ammoniumsalze in Form von Ammoniak verloren gehen.

Gülle kann auch Rückstände von Tierarzneimitteln, insbesondere Antibiotika, enthalten. Vor allem in der Intensivtierhaltung, in der Antibiotika in großem Umfang eingesetzt werden, scheiden die Tiere ein Großteil der Stoffe im Kot und Urin wieder unverändert aus. Durch die Ausbringung solcher Gülle gelangen die Arzneimittel auch in die Umwelt, wie dem Grundwasser. Für den Gemüse- und Obstbau verbietet sich die Gülledüngung grundsätzlich, da über den Tierkot gefährliche Krankheitserreger wie zum Beispiel EHEC-Bakterienstämme in die Erde gelangen können.

Als Gärreste wird der flüssige oder feste Rückstand bezeichnet, der bei der Vergärung von Biomasse in einer Biogasanlage zurückbleibt. Auch die Bezeichnungen Biogasgülle oder Gärprodukt werden verwendet. Wegen ihres hohen Gehaltes an Nährstoffen werden die Gärreste meist als landwirtschaftlicher Dünger verwendet. Bei anderen Verwertungswegen werden die Gärreste zunächst getrocknet, bevor sie auf landwirtschaftlichen Flächen ausgebracht werden. Häufig werden die Trocknungsanlagen für die Gärreste mit Wärme aus der Biogasverstromung betrieben. Da die Gärreste noch einen gewissen Anteil an schwer abbaubaren Kohlenhydraten wie Cellulose und Lignocellulose enthalten kann, können sie nach dem Trocknen auch als Brennstoff interessant sein. Indes verursachen die hohen mineralischen Anteile und die enthaltenen Schwefel- und Stickstoffverbindungen einen hohen Anfall an Schlacke und Korrosion.

Ein weiterer Problemkreis ist Klärschlamm. Dabei handelt es sich um eine Mischung aus Fest- und Flüssigstoffen, die bei der Abwasserreinigung durch Sedimentation anfallen. In dem flüssigen Medium liegen neben Wasser eine Vielzahl von chemischen Verbindungen gelösten Zustand vor. Klärschlamm ist im Ausgangszustand dünnflüssig und dunkel gefärbt. Durch Sedimentation (Schwerkrafteinwirkung) werden Feststoffgehalte von etwa 2 % bis 5 % erzielt

Bei dem Klärschlamm unterscheidet man Rohschlamm und behandelten Klärschlamm. Schlammfelder auf Kläranlagen als primär Schlamm in der mechanischen Reinigungsstufe oder als Überschussschlamm in der biologischen Stufe an. Überschuss Schlamm besteht überwiegend aus Mikroorganismen wie Protesten und Bakterien. Durch aerobe und anaerobe Stabilisierung des Rohschlamms erhält man den weniger geruchsintensiven, behandelten Klärschlamm. Die anaerobe Behandlung erfolgt in größeren Kläranlagen in Faultürmen und liefert den Faulschlamm.

Durch Flockung und Fällung mit Hilfsstoffen wie Eisen(III)-chlorid oder Kalk der Klärschlamm so aufbereitet, dass er beispielsweise durch Zentrifugen- und Siebbandanlagen auf Feststoffgehalte von bis zu 35 % entwässert werden kann. Mithilfe von Kammerfilterpressen sind auch noch höhere Entwässerungsgrade erreichbar.

Der Klärschlamm ist reich an Nährstoffen, da die Bakterien in der biologischen Stufe die Abwasserinhaltsstoffe zum Aufbau der Biomasse verwenden. Von besonderer Bedeutung sind insbesondere für die Landwirtschaft Nitrate, die bis zu 1300 mg/Liter vorhanden sind, Phosphate und andere Nährsalze.

Klärschlamm enthält aber auch Stoffe, die für Umwelt und Mensch problematisch sein können. Insbesondere sind es sie Schwermetalle, die unter anderem durch Rücklösungen aus Rohrleitungen vorkommen. Organische Schadstoffe sind ebenfalls nicht zu vernachlässigen das Problem. Im Klärschlamm kann eine Vielzahl von organischen Verbindungen mit verschiedenen Eigenschaften und Wirkungen, die durch anthropogene Prozesse in das Abwasser gelangen, vorhanden sein. Diese Stoffe können beispielsweise krebserzeugend, mutagen, toxisch oder hormonell wirksam sein. Die Klärschlammverordnung gibt Grenzwerte für die Summenparameter AOX (absorbierbare organisch gebundene Halogene), PCB (polychlorierte Biphenyle) und PCDD (polychlorierte Dioxine und Dibenzofurane) vor. Sind solche Stoffe im Abwasser vorhanden, tritt eine besondere Gefahr auf, da sie sich bereits in geringen Konzentrationen nach der landwirtschaftlichen Aufbringung durch Bioakkumulation anreichern und in die Nahrungskette gelangen können. Zwar sind durch die zwischenzeitlich erlassenen gesetzlichen Verbote zur Verwendung einiger Unkraut- und Schädlingsbekämpfungsmittel einige dieser Verbindungen in den Klärschlämmen aktuell nicht mehr nachweisbar. Jedoch sind sonstige toxische organische Verbindungen noch immer in den Klärschlämmen vorhanden.

Wie bei der Gülle sind keine wirtschaftlichen Verfahren bekannt, durch die die Schwermetalle und die anderen toxischen Substanzen unschädlich gemacht und gleichzeitig die Phosphate und die anderen Nährsalze in biologisch verfügbarer Form wiedergewonnen werden können.

Noch ein weiterer Problemkreis ist Phosphor. Phosphor ist eine endliche Ressource, deren leicht gewinnbaren mineralischen Vorräte in 80 bis 120 Jahren aufgebracht sein dürften. In deutschen Abwässern steckt ein jährliches Potenzial von rund 70.000 t Phosphor zur Rückgewinnung, während etwa 120.000 t pro Jahr allein in Deutschland verbraucht werden. Phosphorrecycling wird nun für große Wasserbehandlungsanlagen ab 50.000 Einwohnerwerten zur Pflicht. Auch die Aufnahme von Phosphor und von Mikronährelementen wie Kalium und Magnesium kann durch Nitrifikationshemmer, die die Ammoniumphase des in den Boden eingebrachten Stickstoffs verlängern, erhöht werden.

Gülleaufarbeitungen durch Verbrennung oder Pyrolyse der Gülle, wandeln das darin enthaltene Phosphat durch Verglasung um, wodurch es nicht mehr biologisch verfügbar und für die Düngung verloren ist.

Kohlen sind dafür bekannt, dass sie Phosphate binden und dann wieder für die Pflanzen biologisch verfügbar machen. Pflanzenkohle und Biokohle werden hierfür genutzt, genauso wie Braunkohle, die jedoch viele toxische polyzyklische aromatische Kohlenwasserstoffe (PAK) enthält.

Eine weitere sekundäre Phosphatquelle sind Baustoffe wie phosphathaltige Zemente, Betone, Ziegel, Kunststeine und Ringspaltmörtel sowie phosphathaltige Lebensmittel wie Milchprodukte, Wurstwaren und Fischkonserven. Für die Rückgewinnung von Phosphat in biologisch verfügbarer Form stehen aber nur schlecht funktionierende und daher unwirtschaftliche Verfahren zur Verfügung.

Pro Jahr werden 200.000.000 t Gülle und zusätzlich Gärreste, Trockenfermente und Konzentrate aus Abluftwäschern in Deutschland auf die Äcker verbracht. Dies entspricht 34.000.000 t/Jahr an Ammonium, 36.000.000 t/Jahr an Nitrat und 20.000.000 t/Jahr und Phosphat allein aus der Gülle.

Die Ammoniumform des Ammoniaks geht indes nicht über die Gasphase verloren, da sie nicht flüchtig ist. Ihre Mobilität ist jedoch geringer als die von Nitrat, da es sich als Kation an die negativgeladenen Bodenpartikel ionisch binden kann.

In wassergesättigten Böden und bei hohen Temperaturen wird die Denitrifikation zu Distickstoffmonoxid (Lachgas) und Stickoxiden NOx begünstigt, bei denen es sich um Treibhausgase handelt.

Man versucht daher momentan Gülle zu verbrennen und/oder zu pyrolisieren, Nitrat zu vernichten, Ammoniak durch Trocknung zu binden oder Nitrifikationshemmer einzusetzen oder Gülle unter Druck zu sterilisieren.

Die Pyrolyse und die Verbrennung der Gülle benötigen hohe Energien, weil das Wasser verdampft werden muss. Außerdem muss mit Filtern der Feinstaub zurückgehalten werden. Phosphate gehen verloren, da diese verglasen und daher nicht mehr biologisch verfügbar sind. Wichtige Stickstoffdünger gehen verloren und wandeln sich in Stickoxiden NOx um, die Umwelt gefährden sind und Säuren bilden. Die Verfahren müssen zentral durchgeführt werden, dass sie nur großtechnisch umgesetzt werden können und mit hohen Investitionen verbunden sind. Dies führt zu zusätzlichen Transportkosten und Emissionen. Der Verlust an Stickstoffdünger muss durch Kunstdünger kompensiert werden. An und für sich sind nicht die Nitrate und das Ammonium das eigentliche Problem, sondern ihre ungleiche Verteilung über das Jahr und ihre ungleiche Aufnahme durch die Pflanzen sowie die Auswaschung. Diese Probleme werden durch die Pyrolyse und die Verbrennung nicht gelöst.

Bei der Vernichtung des Nitrats mit biologischen und chemischen Verfahren gehen wichtige Stickstoffdünger verloren, was wieder durch Kunstdünger kompensiert werden muss. Die Verfahren sind sehr kostenintensiv und lösen nicht das Problem der Langzeitdüngung.

Die Bindung des Ammoniaks in Trocknern durch Wasser und Säuren und anschließendem biologischen Abbau ist ebenfalls nicht zielführend. Zwar wird das Ammoniak bei der Gülle- und Biogasresttrocknung durch Wasser und/oder Säure gebunden und kann dann mit Bakterien zu Nitraten oxidiert werden. Diese Flüssigdünger kann auch während der Vegetationsperiode aufgebracht und an den Bedarf der Pflanzen angepasst werden. Nachteilig ist jedoch der enorme Energieaufwand um 200.000.000 t Wasser zu verdampfen und wieder zu kondensieren und Säure zu binden. Einfache Berechnungen ergeben, dass der Energiebedarf der zwölffachen Menge an Erdgas entsprechen würde, die in Deutschland selbst produziert werden. Aus diesen Gründen wäre diese Lösung energetisch nicht sinnvoll, ganz zu schweigen von dem Kohlendioxid-Fußabdruck, der damit verbunden wäre.

Die Reduktion des Düngemittelverlusts durch Nitrifikationshemmer ist ein einfaches Verfahren, das dezentralisiert durchgeführt werden kann. Dabei bleiben Phosphate, Kalium und Magnesium biologisch verfügbar, wodurch ein verbesserter Ertrag gewährleistet wird und weniger Nitrat ins Grundwasser gelangt. Die eingesetzten Nitrifikationshemmer sind jedoch als wassergefährdend eingestuft und wasserlöslich, weswegen sie das Grundwasser verseuchen. Wäre Nitrate,aus dem Grundwasser über die biologische Reinigung wieder entzogen werden kann, reichern sich die Nitrifikationshemmer im Grundwasser und in der Nahrungskette an und sind daher auf Dauer gefährdend.

Bei der Filtration von Gülle mit CNF-Filtern setzen sich die Nanoporen direkt zu, sodass sie für Gülle ohne eine vorherige Mikro- und Nanofiltration nicht durchgängig sind und auch das Nitrat nicht binden können.

CNF bindet zwar in der anionischen Form Schwermetalle, jedoch müssen diese gemeinsam mit der CNF aus der Gülle entfernt werden, da sie ansonsten beim biologischen Abbau der CNF im Boden wieder frei werden.

Kohlen binden Phosphate und andere Nährstoffe und geben diese zeitverzögert ab. Das Problem sind aber die hohen Herstellkosten zum Beispiel der Aktivkohle mit etwa 2000,00 €/Tonne oder der hohe Grad der Verunreinigung der Braunkohlen.

Weitere umweltbelastende organische Materialien enthaltende Abfälle sind die Schlämme aus der Erdölförderung. Auch hier ist noch keine befriedigende Lösung gefunden worden, diese Art von Abfällen in Wertprodukte umzuwandeln.

Seit der industriellen Revolution ist die Konzentration des Treibhausgases Kohlendioxid in der Erdatmosphäre kontinuierlich angewachsen und hat inzwischen einen kritischen Wert erreicht, der zu einer spürbaren Erwärmung der Erdatmosphäre führt. Dies hat bereits zur Folge, dass beispielsweise die Permafrostböden schmelzen und die Gletscher als Wasserreserven zurückgehen. Als weitere Folge könnte beispielsweise die Entwicklung von Methan - ein noch wirksameres Treibhausgas - aus Methaneis eintreten, dessen negative Folgen unabsehbar sind.

Es fehlt daher nicht dann Versuchen, die Bildung von Kohlendioxid zu verringern und/oder das einmal gebildete Kohlendioxid der Atmosphäre zu entziehen. Die entsprechenden Verfahren sind jedoch teuer, aufwendig und ihr Erfolg fraglich. Es fehlt daher nicht dann Versuchen, Kohlendioxid bei vergleichsweise niederen Temperaturen in Sauerstoff und Kohlenstoff zu spalten, wie aus den folgenden Publikationen hervorgeht:
- H. Kato et al., JOURNAL OF MATERIALS SCIENCE (1994), 29:5689, "Decomposition of carbon dioxide to carbon by hydrogen-reduced Ni(II)-bearing ferrite";
- Kodama et al., Journal of Solid State Chemistry, 1995, "XRD and Mössbauer studies on oxygen deficient Ni(II)-bearing ferrite with a high reactivity for CO2 decomposition to carbon";
- Kodama et al., Materials Research Bulletin, 1995, "CO2 decomposition to carbon by ultrafine Ni(II) bearing ferrite at 300 °C";
- Masamichi Tsuji et al., Applied Catalysis A: General, Vol. 142 (1), 1996, 31-45, "Catalytic acceleration for CO2 decomposition into carbon by Rh, Pt or Ce impregnation onto Ni(ii)-bearing ferrite";
- Chun-lei Zhang et al., Materials Chemistry and Physics, Vol. 62 (1), 2000, 52-61, "Studies on the decomposing carbon dioxide into carbon with oxygen deficient magnetite: II. The effects of magnetite on activity of decomposition CO2 and mechanism of the reaction";
- Dorna Esrafilzadeh et al., Nature Communications 10, Article number: 865 (2019), "Room temperature CO2 reduction to solid carbon species on liquid metals featuring atomically thin ceria interfaces".

Diese Verfahren benötigen jedoch noch der weiteren Entwicklung, um industriell einsatzfähig zu werden.

Des Weiteren sind die Abfälle von kohlefaserverstärkten Kunststoffen (Carbon fibre-reincorced Plastics; CFRP) schwer zu recyceln, um die teueren Kohlefasern zur weiteren Verwendung wiederzugewinnen. Beispielsweise werden kohlefaserverstärkte Polyepoxide mit überkritischem Wasser oder Lösemitteln behandelt, um die Kohlefasern freizusetzen. Aus der amerikanischen Patentanmeldung US 2019/0203013 A1 ist ein Aufarbeitungsverfahren bekannt, bei dem die CFRP aerob depolymerisiert werden. Die freigesetzten Kohlefasern können weiterverwendet werden und die resultierenden Monomere können wieder polymerisiert werden. Allerdings ist das vergleichsweise aufwändig. Insbesondere die Abtrennung der Monomere ist sicherheitstechnisch problematisch. Das aus der amerikanischen Patentanmeldung US 2019/0039266 A1 bekannte Verfahren und die bekannte Vorrichtung umgehen dieses Problem, indem die CFRP pyrolisiert werden, wodurch die Kohlefasern wieder freigesetzt werden - allerdings zu dem Preis der Eliminierung der Kunstoffmatrix.

Es wäre deshalb wünschenswert, wenn man die CFRP direkt in neue Wertprodukte umwandeln könnte. Die bisher bekannten Verfahren und Vorrichtungen sind hierfür jedoch nicht geeignet.

Aus dem Artikel von S. Amirjylayer et al., Understanding the Mechanocatalytic Conversion of Biomass: A Low-Energy One-Step Reaction Mechanism by Applying Mechanical Force, Angewandte Chemie International Edition, Bd. 58, Heft 16, ist ein säurekatalysiertes mechanochemisches Verfahren bekannt, mit dem Cellulosen in niedermolekulare Zucker abgebaut werden können. Inwieweit dieses Verfahren zur industriellen Herstellung von verkäuflichen Wertprodukten verwendet werden kann, ist nicht bekannt.

Auch WO 94/14503 A1, EP 0 553 776 A2 und US 8,324,523 B2 können als Stand der Technik genannt werden.

Insgesamt sind Verfahren des Standes der Technik somit nur schlecht oder gar nicht für die Dekontamination oder Eliminierung von problembehafteten synthetischen, biogenen und biologischen Materialien, zur Immobilisierung von Metallen, zum Aufschluss von Phosphaten, zur Spaltung von Kohlendioxid und Kohlenmonoxid in die Elemente und zur Gewinnung von Wertprodukten geeignet.

### Aufgabe der vorliegenden Erfindung

Der vorliegenden Erfindung lag die Aufgabe zu Grunde, ein breit anwendbares Verfahren zu finden, das es ermöglicht, in einfacher Weise natürliche, synthetische, biologische und biogene Materialien zu dekontaminieren und/oder zu eliminieren.

Insbesondere aber soll Aktivkohle gewonnen werden, die wieder in das Verfahren zurückgeführt werden oder zur Herstellung von Terra preta oder als Kohlendioxidsenke verwendet werden kann.

### Erfindungsgemäße Lösung

Demgemäß wurde die Aufgabe der vorliegenden Erfindung mithilfe des mechanochemischen Verfahrens zur Dekontamination und/oder Eliminierung von problembehafteten, synthetischen, biogenen und biologischen Materialien gemäß dem unabhängigen Patentanspruch 1 gelöst. Vorteilhafte Ausführungsformen finden sich in den hierauf zurückbezogenen abhängigen Patentansprüchen.

### Vorteile der vorliegenden Erfindung

Im Hinblick auf den Stand der Technik war es überraschend und für den Fachmann nicht vorhersehbar, dass die Aufgabe, die der vorliegenden Erfindung zu Grunde lag, mithilfe des erfindungsgemäßen mechanochemischen Verfahrens gelöst werden konnte. Insbesondere überraschte, dass das erfindungsgemäße mechanochemische Verfahren nicht mehr die Nachteile des Standes der Technik aufwies, sondern dass es außerordentlich breit anwendbar war und es ermöglichte in einfacher Weise synthetische, biologische und biogene Materialien zu dekontaminieren und/oder zu eliminieren.

Insbesondere aber konnte Aktivkohle gewonnen werden, die wieder in das mechanochemische Verfahren zurückgeführt werden konnte. Dadurch war eine Erniedrigung des Kohlendioxidfußabdrucks möglich, da Biomasse dauerhaft in Kohle umgewandelt werden konnte. Außerdem konnten die hergestellten Düngemittel wegen der Kohle die Belebung von Mikroorganismen im Boden intensivieren. Außerdem konnte sogar Braunkohle für das erfindungsgemäße mechanochemische Verfahren verwendet werden.

Insbesondere überraschte, dass sich bei dem mechanochemischen Verfahren keine polycyclischen aromatischen Kohlenwasserstoffe (PAK; PAH), Nitrosamine, Teere und andere schädliche Stoffe mehr bildeten und durch anwesende Chloride und Bromide sich keine bromierten und/oder chlorierten Dioxine, Dibenzofuranen und giftige lipophile Verbindungen, die radikalischen oxidativen Stress (ROS) erzeugen, mehr entstanden. Darüber hinaus konnten Medikamentenrückstände, Giftstoffe jeder Art, Biozide, Viren, Bakterien, Algen, Giftpflanzen und Teile davon sowie giftige Tiere und Teile davon vernichtet und eliminiert werden. Dabei war es der besondere Vorteil, dass das erfindungsgemäße mechanochemische Verfahren organische Materialien jeglicher Art in Kohlenstoff, insbesondere Aktivkohle, umwandelte, die beispielsweise in die vierte Reinigungsstufe von Kläranlagen zurückgeführt werden konnte oder für Batteriespeicher verwendet werden konnte. Mit Kunststoffen und erhöhten Sandanteilen oder Zementanteilen konnten neue Mauersande und Mauerzemente erzeugt werden. Insbesondere die Mauerzemente wiesen keine Zementausblühungen und/oder Zementschleier mehr auf. Außerdem konnte der Zement als Phosphatquelle und als Rohstoff für die Düngemittelherstellung verwendet werden. Als Nebenprodukte konnten Anastas und Diamanten auftreten. Die pulverförmigen Produkte des erfindungsgemäßen mechanochemischen Verfahrens konnten direkt zu Granulaten und Pellets verarbeitet werden.

Die pulverförmigen Produkte des erfindungsgemäßen mechanochemischen Verfahren konnten für die Herstellung von Trennmitteln für die Kunststoffformgebung aus Membranen von Brennstoffzellen, für das Recycling von Kunststoffen aus Elektronikmaterialien und der Herstellung von sortenreinen Kunststoffen durch Bakterien verwendet werden.

Des Weiteren konnte das erfindungsgemäße mechanochemische Verfahren der Umwandlung von Duroplasten in Thermoplaste dienen und/oder Duroplaste an ihrer Oberfläche durch die Bildung reaktiver radikalischer Zentren und/oder funktioneller Gruppen aktivieren, sodass sie als Pfropfgrundlagen für die Pfropfmischpolymerisation dienten.

Es überraschte außerdem, dass auch Explosivstoffe und pyrotechnische Materialien mithilfe des erfindungsgemäßen mechanochemischen Verfahren problemlos entsorgt werden konnten.

Insgesamt erforderte die Durchführung des erfindungsgemäßen mechanochemischen Verfahrens eine vergleichsweise geringe Energie, geringere Kosten und geringere Transportkosten und trug zur Schonung der Phosphatreserven bei.

### Ausführliche Beschreibung der Erfindung

Die vorliegende Erfindung betrifft ein mechanochemisches Verfahren, das mithilfe mechanischer Mühlen durchgeführt wird. Für das erfindungsgemäße Verfahren können die üblichen und bekannten mechanischen Mühlen verwendet werden. Beispiele geeigneter mechanischer Mühlen sind Kugelmühlen, Hammermühlen, Pinned-Disk-Mühlen, Jet-Mühlen, Vibrationsmühlen, Schüttelmühlen, Horizontalmühlen, Attritoren und Planetenmühlen. Beispielsweise kann die in der deutschen Offenlegungsschrift DE 195 04 540 A1, Figuren 1a bis 4b, beschriebene mechanische Mühle verwendet werden.

Die Mittel zur Agitation der Mahlkörper in einem energiereichen Massestrom zusammen mit dem Mahlgut kann außer den Attritoren gemäß der vorstehend genannten deutschen Patentanmeldung unterschiedliche Formen haben, die vorzugsweise bezüglich der mindestens einen, insbesondere einen, Antriebswelle symmetrisch sind. Vorzugsweise sind diese Agitationsmittel aus Metallen, Legierungen, Keramiken und mit Keramiken und beschichteten Metallen und Legierungen aufgebaut.

So kann die Kraftübertragung durch planare Schlagflügel erfolgen, die mindestens zwei Schlagenden aufweisen, die zur Antriebswelle symmetrisch angeordnet sind, damit keine Unwucht entsteht. Die Schlagflügel können auf der Antriebswelle auf Lücke und/oder auf Deckung angeordnet sein und vorzugsweise kreisförmigen Löchern im Bereich ihrer Enden aufweisen.

Es können aber auch planare Schlagscheiben verwendet werden, die vorzugsweise einen kreisförmigen Umfang haben und vorzugsweise kreisförmige, ovale, elliptische und/oder parallel zum Kreisumfang gebogene, längliche Löcher aufweisen, die vorzugsweise im Kreis und vorzugsweise in gleichem Abstand zueinander angeordnet sind. Die Schlagscheiben können auf der Antriebswelle so angeordnet sein, dass die Löcher auf Lücke und/oder auf Deckung stehen.

Die planaren Schlagscheiben können aber auch auf ihrer Oberfläche erhabene Stege aufweisen, die symmetrisch angeordnet sind und von der Antriebswelle bis zur kreisförmigen Kante geradlinig und/oder vorzugsweise in Drehrichtung gebogen verlaufen. Dabei sind die Anfänge und die Enden der Stege vorzugsweise in gleichem Abstand zueinander angeordnet. Vorzugsweise werden mindestens vier dieser Stege verwendet. In einer weiteren Ausführungsform sind diese Stege auf den beiden gegenüberliegenden Seiten der planaren Schlagscheiben angeordnet. Die Stege können einen 4-eckigen, einen 3-eckigen oder einen halbkreisförmigen Querschnitt haben. Die Schlagscheiben können auf der Antriebswelle so angeordnet sein, dass die Stege auf Lücke und/oder auf Deckung stehen.

Die Kraftübertragung auf die Mahlkörper kann aber auch durch symmetrisch zur Antriebswelle angeordnete Schlagfächer erfolgen. Diese werden von einem Ring, der die Antriebswelle umschließt, und mindestens zwei von diesem Ring ausstrahlenden Schlagfächern gebildet. In einer weiteren Ausführungsform verbreitert sich der Ring an mindestens zwei symmetrisch zur Antriebswelle angeordneten Flächen, von denen jede in mindestens zwei nach außen ausstrahlenden Schlagfächer übergeht. Vorzugsweise sind die Kanten gebogen und liegen auf einem gedachten Kreis um die gesamte Anordnung. Somit kann es sich um n-fache Einfachschlagfächer oder um n-fache Mehrfachschlagfächer handeln, wobei n = mindestens 2.

Bei einer weiteren Ausführungsform können die Schlagfächer auf jeweils einer Seite oder auf jeweils zwei gegenüberliegenden Seiten erhabene Stege aufweisen, die symmetrisch zueinander angeordnet sind und sich von der Antriebswelle bis zur jeweiligen Kante der Schlagfächer erstrecken. Die Stege können 3-eckige, 4-eckige oder halbkreisförmige Profile haben.

Bei noch einer weiteren Ausführungsform können diese Stege parallel zu den gebogenen Kanten der Schlagfächer verlaufen.

Die vorstehend beschriebenen Agitationsmittel haben vorzugsweise einen Abstand von mindestens einer Breite eines Mahlkörpers. Die Breite der Agitationsmittel in Querrichtung zur Antriebswelle gesehen liegt vorzugsweise bei dem 0,1-fachen bis 8-fachen der Breite der jeweiligen Mahlkörper. Die Agitationsmittel können auf der Antriebswelle parallel zueinander oder versetzt angeordnet sein.

Anstelle der vorstehend beschriebenen Agitationsmittel können auch Schlagkeulen verwendet werden, die symmetrisch und der Antriebswelle angeordnet sind und die Schlagkörper aufweisen, die mit dem die Antriebswelle umschließenden Ring durch gleichlange oder unterschiedlich lange, geradlinig oder gebogen verlaufende Stäbe verbunden sind. Die Schlagkörper können quaderförmige, schaufelförmige, kugelförmige oder tropfenförmige Körper oder Ellipsoide sein. Damit keine Unwucht beim Drehen entsteht, habe sie vorzugsweise dasselbe Gewicht.

Der Antriebswellen selbst können Keilwellen, Hohlwellen, Zapfwellen, Schneckenwellen, Kegelwellen, konische Wellen oder Dreieckswellen sein.

Anstelle der Anordnungen aus einer Antriebswelle und den darum angeordneten, vorstehend beschriebenen Agitationsmittel können mindestens zwei parallel zueinander in Längsrichtung des Mahlraums angeordnete, sich gegeneinander drehende Walzen verwendet werden. Die Mahlung des Mahlguts erfolgt in dem Bereich, in dem sich die Walzen berühren.

Bei einer Ausführungsform sind die Walzen schräg zu der Längsachse des Mahlraums angeordnet, wodurch sich eine zusätzliche Torsion des Mahlguts ergibt.

In noch einer weiteren Ausführungsform dreht sich die Walze gegen eine Abriebfläche, sodass die Mahlung im Bereich des Kontakts zwischen Walze und Abriebfläche erfolgt.

Bei weiteren Ausführungsformen können die Oberflächen der Walzen und die Abriebflächen Strukturen aufweisen, wie zum Beispiel Zacken, Nippel und/oder Vertiefungen.

Bei noch einer weiteren Ausführungsform können der Schlageffekt und die Passfügung durch eine Federung der Walzenoberfläche verbessert werden. Dies kann dadurch erzielt werden, dass die Walzen insgesamt gegeneinander federnd angeordnet sind. Es können aber auch einzelne Stellen der Walzenoberfläche separat federnd ausgestaltet werden. Dies kann beispielsweise dadurch erzielt werden, indem die Walzen im Bereich ihrer Oberfläche Vertiefungen haben, in denen Kugeln angeordnet sind, die durch Spiralfedern aus den Vertiefungen gedrückt werden. Die Vertiefungen können eine größere lichte Weite als der Radius der Kugel haben, sodass das Mahlgut, das in die Vertiefungen gelangt, beim Weiterdrehen der Walzen wieder aus den Vertiefungen herausrieselt.

Der Mahlraum, worin die Agitationsmittel angeordnet sind, ist vorzugsweise rohrförmig gestaltet und hat bevorzugt einen kreisförmigen Umfang. Im Falle der Verwendung der vorstehend beschriebenen Walzen kann der Mahlraum auch einen durch zwei einander gegenüberliegende, parallele, gerade Wände, die sich in einem Abstand über die Breite der Walzen erstrecken und die durch zwei einander gegenüberliegenden gebogenen Wände verbunden sind, begrenzt werden.

In Längsrichtung, d. h. längs der Antriebswelle gesehen, kann sich der Umfang des Mahlraums mindestens einmal einschnüren, sodass mindestens zwei hintereinander angeordnete kugelschnittförmige Mahlräume, die durch eine kreisförmige Öffnung miteinander verbunden sind, resultieren. Die Abmessungen der Agitationsmittel werden dann in den einzelnen Mahlräumen dem Verlauf der Wände entsprechend angepasst, sodass die Agitationsmittel am größten Durchmesser der kugelschnittförmigen Mahlräume ebenfalls am größten sind, wobei ihre Abmessungen nach links und nach rechts, der Rundung der Mahlräume folgend, abnehmen.

Die mechanischen Mühlen können direkt durch die Energie angetrieben werden, die von Windkraftanlagen, Wasserturbinen und Gezeitenkraftwerken geliefert wird.

Für das stoßfreie Anfahren großer mechanischer Mühlen haben sich die Repulsionsmotoren bewährt. Diese können dann bei dem nachfolgenden Dauerbetrieb in ihrer Leistungsabgabe gedrosselt werden.

Es kann auch eine Kombination eines starken Motors zum Anfahren, der nach dem Anfahren abgeschaltet wird, und eines schwächeren Motors für den Dauerbetrieb verwendet werden.

Außerdem können Gasturbinen und mit fossilen oder biotechnologisch gewonnenen Kraftstoffen betriebene Verbrennungsmotoren verwendet werden.

Geeignet sind auch Asynchronmotoren, Gleichstrommotoren (Kommutatormotoren), Wechsel- und Drehstrommotoren, Drehfeld- und Wanderfeld-Maschinen, Drehstrom-Asynchronmaschinen, Schleifringläufermotoren, Drehstrom-Synchronmaschinen, Kaskadenmaschinen, Schrittmotoren, bürstenlose Gleichstrommotoren, Linearmotoren, Wechselstrommotoren, Kondensatormotoren, Spaltpolmotoren, Synchronmotoren Einphasenasynchronmotoren, Reluktanzmotoren, Magnetmotoren, Transversalflussmaschinen, Stromwender- bzw. Kommutator-Maschinen, Gleichstrommotoren, Universalmotoren (für Gleich- und Wechselstrom), permanent erregte Gleichstrommotoren, elektrisch erregte (fremderregte) Gleichstrommotoren, Reihenschlussmotoren, Nebenschlussmaschinen, Verbundmotoren, Kugellagermotoren, Unipolarmaschinen, Homopolarmotoren und Barlow-Räder.

Bevorzugt werden Elektromotoren gemäß der internationalen Patentanmeldung WO 2017/055246A2 verwendet. Diese umfassen mindestens ein Elektromaschinen-Bauteil mit wenigstens einer Wicklung zur Erzeugung eines magnetischen Feldes, die mindestens einen Hohlleiter umfasst, der einen Mantel und einen inneren Hohlraum aufweist, durch welchen ein Kühlmittel leitbar ist, wobei die Wicklung zwei Enden aufweist, an denen eine elektrische Betriebsspannung angeschlossen wird und wobei
- die Hohlleiter rundrohrförmig ausgebildet sind und einen Außendurchmesser in einem Bereich von 3 mm aufweisen,
- die Enden der Wicklung jeweils als Kühlmitteleinlass oder Kühlmittelauslass dienen und
- die Enden der Wicklung an einem Anschlussstück angeschlossen sind, dass einen Kühlmitteleingang und/oder einen Kühlmittelausgang, mehrere Hohlleiter Anschlüsse zum Anschließen von Hohlleitern, einen Verteilerkanal, über den das Kühlmittel in wenigstens einem Hohlleiter eingespeist wird, und/oder einen Sammelkanal umfasst, in den das aus wenigstens einem Hohlleiter austretende Kühlmittel hineinfließt und zum Kühlmittelausgang des Anschlussstücks geleitet wird.

Elektromotoren dieser Art werden von der Dynamic E Flow GmbH, Kaufbeuren, Deutschland, unter der Marke capcooltech^{®} vertrieben. Bevorzugt werden die Typen HC und LC verwendet.

Es können aber auch durch Druckluft angetriebene Motoren verwendet werden, die insbesondere in ex-geschützten Bereichen in Betracht kommen.

Die Mahlung kann bei einer Temperatur der Mahlkörper und des Mahlguts von -273 °C bis +1200 °C betragen. Dabei können die Temperaturen in den sogenannten Hotspots und in den Plasmen bis zu 15.000 °C betragen.

Die Dauer der Mahlung kann breit variieren und so hervorragend der jeweiligen Aufgabenstellung angepasst werden. Vorzugsweise liegt die Mahldauer bei 0,5 Minuten bis 1000 Stunden, bevorzugt 10 Minuten bis 500 Stunden, besonders bevorzugt 10 Minuten bis 100 Stunden und insbesondere 10 Minuten bis 50 Stunden.

Die Mahlung kann in der Gegenwart von mindestens einem, insbesondere einem, inerten Stoff durchgeführt werden. Beispiele geeigneter inerter Stoffe sind gasförmiger, flüssiger und fester Stickstoff, gasförmiges, flüssiges und festes Kohlendioxid unter Bedingungen, unter denen es nicht in die Elemente gespalten wird, und Schwefelhexafluorid sowie die gasförmigen, flüssigen und festen Edelgase Neon, Argon, Krypton und Xenon und gasförmiges und flüssiges Helium.

Bei der Mahlung im Inneren der Mühlen, d.h. im Mahlraum, ist ein Plasma zugegen.

Das Plasma kann durch die Erzeugung von Triboplasma mittels Gasentladung, Hotspots, elektrostatischer Aufladung, Emission von Exoelektronen, Tribolumineszenz, Kristallgitterdefekte, Schreddern, Dislokationen, Kristallgittervibrationen, Bruchstellenbildung, Schneidevorgänge, Stauchungen, Abschmirgeln, Bohren, Schleifen, Abrieb, hohe Drücke, Reibung, metastabile Zustände und Hotspots aufgrund des Zusammenpralls der Festkörper und/oder der Reibung der Festkörper aneinander sowie durch katalytisch wirksame und/oder piezoelektrische Partikel und Beschichtungen auf den Mahlkörpern und/oder den Wänden des Mahlraums und/oder auf den Agitationsmitteln und/oder in dem Mahlraum der mechanischen Mühlen, fokussierte Laserstrahlung, Elektronenstrahlung, radioaktive Strahlung, Röntgenstrahlung, UV-Strahlung, IR-Strahlung, Mikrowellenstrahlung, Ultraschall, chemische und nukleare Reaktionen, elektrostatische Felder, elektromagnetische Felder, Gleichspannung, kapazitive elektrische Anregung, Drahtexplosionen, Gasentladungen, Lichtbögen, Funkenentladungen, Vakuumfunkenentladungen, Zyklotronresonanz, kapazitive Glasrohrentladung und den Pinch-Effekt erzeugt werden.

Die Strahlung kann durch mechanisch stabile, kratzfeste, strahlungsdurchlässige Fenster, über die Antriebswelle und/oder die Agitationsmittel in den Mahlraum eingestrahlt werden.

Zusätzlich kann noch IR-Strahlung und UV-Strahlung vorzugsweise mit spezifischen Wellenlängen, die Bindungen anregen, verwendet werden.

Durch die Akustophorese oder Akkustoaggregation insbesondere durch stehende Ultraschallwellen kann das Mahlgut während der Mahlung verändert werden, um neue mechanochemische Prozesswege zu eröffnen. So können die resultierenden Nanopartikel und Mikropartikel des Mahlguts wieder aggregiert werden, um in neuer Weise mechanochemisch zu reagieren.

Bevorzugt wird das Plasma durch piezoelektrische Partikel erzeugt. Besonders bevorzugt werdendie piezoelektrischen Partikel aus der Gruppe, bestehend aus Kohlenstoff, Quarz, Glas Bariumtitanat (BTO), Bleizirkonattitanat (PZT), Bleimagnesiumniobate (PMN), Galliumorthophosphat, Berlinit, Turmaline, Seignettesalz, piezoelektrische Dünnschichten aus Zinkoxid, Aluminiumnitrid, Siliziumnitrid, Siliziumcarbid, Aluminiumoxid, Zirkoniumoxid und Titannitrid, Polyvinylidenfluorid (PVDF) sowie ferroelektrischen, polykristallinen Keramiken, ausgewählt. Insbesondere werden Kohlenstoff, Quarz und Glas verwendet.

In einer besonderen Ausführungsform können die piezoelektrischen Partikel bzw. Materialien auf die Oberflächen der Mahlkörper, der Wandungen, der Antriebswellen und/oder der Agitationsmittel aufgebracht und/oder in die Mahlräume der mechanischen Mühlen eingebracht werden.

Ebenso können die katalytisch wirksamen Partikel und/oder die Beschichtungen auf den Mahlkörpern, den Antriebswellen, den Wänden des Mahlraums und/oder auf den Agitationsmitteln aufgebracht und/oder in den Mahlraum der mechanischen Mühlen eingebracht.

Vorzugsweise werden die katalytisch wirksamen Partikel aus der Gruppe, bestehend aus Metallen, Metalllegierungen, Metallverbindungen und mikroporösen Materialien, verwendet.

### Als Metalle können

Actinium, Symbol: Ac, Ordnungszahl: 89
Aluminium, Symbol: Al, Ordnungszahl: 13
Americium, Symbol: Am, Ordnungszahl: 95
Antimon, Symbol: Sb, Ordnungszahl: 51
Arsen, Symbol: As, Ordnungszahl: 33
Astat, Symbol: At, Ordnungszahl: 85
Barium, Symbol: Ba, Ordnungszahl: 56
Berkelium, Symbol: Bk, Ordnungszahl: 97
Beryllium, Symbol: Be, Ordnungszahl: 4
Bismut, Symbol: Bi, Ordnungszahl: 83
Blei, Symbol: Pb, Ordnungszahl: 82
Bohrium, Symbol: Bh, Ordnungszahl: 107
Bor, Symbol: B, Ordnungszahl: 5
Cadmium, Symbol: Cd, Ordnungszahl: 48
Caesium, Symbol: Cs, Ordnungszahl: 55
Calcium, Symbol: Ca, Ordnungszahl: 20
Californium, Symbol: Cf, Ordnungszahl: 98
Cer, Symbol: Ce, Ordnungszahl: 58
Chrom, Symbol: Cr, Ordnungszahl: 24
Cobalt, Symbol: Co, Ordnungszahl: 27
Copernicium, Symbol: Cn, Ordnungszahl: 112
Curium, Symbol: Cm, Ordnungszahl: 96
Darmstadtium, Symbol: Ds, Ordnungszahl: 110
Dubnium, Symbol: Db, Ordnungszahl: 105
Dysprosium, Symbol: Dy, Ordnungszahl: 66
Einsteinium, Symbol: Es, Ordnungszahl: 99
Eisen, Symbol: Fe, Ordnungszahl: 26
Erbium, Symbol: Er, Ordnungszahl: 68
Europium, Symbol: Eu, Ordnungszahl: 63
Fermium, Symbol: Fm, Ordnungszahl: 100
Flerovium, Symbol: Fl, Ordnungszahl: 114
Francium, Symbol: Fr, Ordnungszahl: 87
Gadolinium, Symbol: Gd, Ordnungszahl: 64
Gallium, Symbol: Ga, Ordnungszahl: 31
Germanium, Symbol: Ge, Ordnungszahl: 32
Gold, Symbol: Au, Ordnungszahl: 79
Hafnium, Symbol: Hf, Ordnungszahl: 72
Hassium, Symbol: Hs, Ordnungszahl: 108
Holmium, Symbol: Ho, Ordnungszahl: 67
Indium, Symbol: In, Ordnungszahl: 49
lod, Symbol: I, Ordnungszahl: 53
Iridium, Symbol: Ir, Ordnungszahl: 77
Kalium, Symbol: K, Ordnungszahl: 19
Kohlenstoff, Symbol: C, Ordnungszahl: 6
Kupfer, Symbol: Cu, Ordnungszahl: 29
Lanthan, Symbol: La, Ordnungszahl: 57
Lawrencium, Symbol: Lr, Ordnungszahl: 103
Lithium, Symbol: Li, Ordnungszahl: 3
Livermorium, Symbol: Lv, Ordnungszahl: 116
Lutetium, Symbol: Lu, Ordnungszahl: 71
Magnesium, Symbol: Mg, Ordnungszahl: 12
Mangan, Symbol: Mn, Ordnungszahl: 25
Meitnerium, Symbol: Mt, Ordnungszahl: 109
Mendelevium, Symbol: Md, Ordnungszahl: 101
Molybdän, Symbol: Mo, Ordnungszahl: 42
Moscovium, Symbol: Mc, Ordnungszahl: 115
Natrium, Symbol: Na, Ordnungszahl: 11
Neodym, Symbol: Nd, Ordnungszahl: 60
Neptunium, Symbol: Np, Ordnungszahl: 93
Nickel, Symbol: Ni, Ordnungszahl: 28
Nihonium, Symbol: Nh, Ordnungszahl: 113
Niob, Symbol: Nb, Ordnungszahl: 41
Nobelium, Symbol: No, Ordnungszahl: 102
Oganesson, Symbol: Og, Ordnungszahl: 118
Osmium, Symbol: Os, Ordnungszahl: 76
Palladium, Symbol: Pd, Ordnungszahl: 46
Phosphor, Symbol: P, Ordnungszahl: 15
Platin, Symbol: Pt, Ordnungszahl: 78
Plutonium, Symbol: Pu, Ordnungszahl: 94
Polonium, Symbol: Po, Ordnungszahl: 84
Praseodym, Symbol: Pr, Ordnungszahl: 59
Promethium, Symbol: Pm, Ordnungszahl: 61
Protactinium, Symbol: Pa, Ordnungszahl: 91
Quecksilber, Symbol: Hg, Ordnungszahl: 80
Radium, Symbol: Ra, Ordnungszahl: 88
Rhenium, Symbol: Re, Ordnungszahl: 75
Rhodium, Symbol: Rh, Ordnungszahl: 45
Roentgenium, Symbol: Rg, Ordnungszahl: 111
Rubidiu, Symbol: Rb, Ordnungszahl: 37
Ruthenium, Symbol: Ru, Ordnungszahl: 44
Rutherfordium, Symbol: Rf, Ordnungszahl: 104
Samarium,Symbol: Sm, Ordnungszahl: 62
Scandium, Symbol: Sc, Ordnungszahl: 21
Seaborgium, Symbol: Sg, Ordnungszahl: 106
Selen, Symbol: Se, Ordnungszahl: 34
Silber, Symbol: Ag, Ordnungszahl: 47
Silicium, Symbol: Si, Ordnungszahl: 14
Strontium, Symbol: Sr, Ordnungszahl: 38,
Tantal, Symbol: Ta, Ordnungszahl: 73
Technetium, Symbol: Tc, Ordnungszahl: 43
Tellur, Symbol: Te, Ordnungszahl: 52
Tenness, Symbol: Ts, Ordnungszahl: 117
Terbium, Symbol: Tb, Ordnungszahl: 65
Thallium, Symbol: TI, Ordnungszahl: 81
Thorium, Symbol: Th, Ordnungszahl: 90
Thulium, Symbol: Tm, Ordnungszahl: 69
noch Titan, Symbol: Ti, Ordnungszahl: 22
Uran, Symbol: U, Ordnungszahl: 92
Vanadium, Symbol: V, Ordnungszahl: 23
Wasserstoff, Symbol: H, Ordnungszahl: 1
Wolfram, Symbol: W, Ordnungszahl: 74
Ytterbium, Symbol: Yb, Ordnungszahl: 70
Yttrium, Symbol: Y, Ordnungszahl: 39
Zink, Symbol: Zn, Ordnungszahl: 30
Zinn, Symbol: Sn, Ordnungszahl: 50
Zirconium, Symbol: Zr, Ordnungszahl: 40
verwendet werden. Bei der Verwendung reaktiver Metalle wie Alkali- und Erdalkalimetalle und radioaktive Metalle müssen die entsprechenden üblichen und bekannten Vorsichtsmaßnahmen getroffen werden.

Als Metalllegierungen können die folgenden verwendet werden:

### Aluminiumlegierungen:

- Legierungen mit Kupfer, Magnesium, Silicium oder Mangan als Hauptlegierungselement
- Duraluminium ist eine Knetlegierung aus Aluminium, Kupfer, Magnesium, Mangan und Silicium.
- Partinium
- Aluminium-Mangan-Legierung
- Aluminium-Magnesium-Legierung
- Hydronalium: Handelsbezeichnung für eine Aluminiumgusslegierung mit 3-12 % Magnesium
- Aluminium-Silicium-Legierung, vor allem als Gusslegierung
- Silumin: Markenbezeichnung für eine Reihe untereutektischer bis eutektischer Aluminium
- -Silicium-Gusslegierungen.
- Aluminium-Lithium-Legierung (Sind besonders leicht.)
- Aluminium-Zink-Magnesium-Legierung
- Titanal

### Bleilegierungen:

- Hartblei besteht aus Blei und Antimon
- Schrot bezeichnet eine Legierung aus Blei, Arsen und Antimon.
- Lötzinn ist eine Blei-Zinn-Legierung. Seit einiger Zeit finden auch kupfer- oder silberhaltige Zinnlegierungen Anwendung.
- Natrium-Blei-Legierungen finden als Trocknungsmittel und bei der Herstellung von Tetraethylblei Verwendung.

### Bismut (Wismut)legierungen:

- Roses Metall besteht aus Bismut, Blei und Zinn
- Woodsches Metall besteht aus Bismut, Blei, Zinn und Cadmium
- Lipowitzmetall,
- Orionmetall,
- Schnelllot,
- Darcotmetall
- Cobalt (Kobalt)legierungen
- Stellite sind Hartlegierungen aus 20 - 68 % Cobalt. Weitere, wesentliche Bestandteile in unterschiedlichen Mengen sind Chrom, Wolfram, Nickel, Molybdän und fallweise bis zu 2,5 % Kohlenstoff.
- Vitallium ist eine Metalllegierung aus Kobalt, Chrom und Molybdän (siehe Chrom-Kobalt-Molybdän-Legierung)

### Eisenlegierungen:

- Stahl ist eine Sammelbezeichnung für plastisch verformbare Eisen-KohlenstoffLegierungen und höchstens 2,06 Prozent Kohlenstoff.
- Gusseisen ist eine Sammelbezeichnung für nicht plastisch verformbare Eisen-KohlenstoffLegierungen und mindestens 2,06 % C (meist um 4 % Prozent Kohlenstoff.)
- Eisen-Nickel-Legierung
- Invar besteht (hauptsächlich) aus Eisen und Nickel.
- Kovar besteht (hauptsächlich) aus Eisen, Nickel und Cobalt.
- Ferrolegierung

### Aluminiumlegierung:

- Devardas Legierung

### Galliumlegierung:

- Galinstan ist eine eutektische Legierung aus Gallium, Indium und Zinn.

### Goldegierungen:

- Titangold: Legierung: 99 % Gold, 1 % Titan, wird vor allem bei der Herstellung von Trauringen und in der Medizintechnik verwendet. Farblich ist es mit 750er Gelbgold vergleichbar, jedoch etwas grauer.
- Farbgold (allgemein) ist eine Legierung aus Gold, Silber (zur Aufhellung des Gelb und zur Verbesserung der mechanischen Verarbeitbarkeit) und Kupfer (für die "edle" intensive Goldfarbigkeit bzw. für die Rot-Tönung).
- Gelbgold: der Anteil von Silber entspricht dem von Kupfer.
- Rotgold: der Anteil von Silber ist wesentlich geringer als der von Kupfer (regional auch Türkengold genannt).
- Russengold: etwas helleres Rotgold mit dem ungewöhnlichen Goldanteil von 583.
- Blassgold: der Anteil von Silber ist wesentlich höher als der von Kupfer.
- Grüngold Gold mit überwiegend oder ausschließlich Silber. Häufig werden zur Intensivierung des Grüntons kleine Mengen an Cadmium zugesetzt, was jedoch seit 2011 EU-weit verboten ist.
- Weißgold und Graugold sind Legierungen aus Gold, mit Platin, Palladium oder Silber. Es gibt aber auch Weißgoldlegierungen mit Cobalt, Chrom, Mangan-Germanium und anderen Metallen. Früher wurde auch Nickel verwendet.
- Elektrum ist eine schon in der Antike bekannte Legierung aus Gold und Silber. Die Bezeichnung wird auch für Bernstein verwendet. Elektron ist seit 1920 die geschützte Bezeichnung für eine Magnesiumlegierung der damaligen I.G. Farbenindustrie, Werk Griesheim.
- Normmetall oder Norm-Metall (in der Schweiz auch: Garantiemetall) ist eine goldhaltige Legierung mit weniger als 333 ‰ Goldanteil.
- Hartgold: Gold aus galvanotechnischer Herstellung mit geringen Anteilen (einige Atom-%) Kobalt, Nickel oder Eisen.

### Kupferlegierungen:

- Bronzen oder Messinge, wobei Zinn die Bronzen und Zink die Messinge bestimmen.
- Bronze (echte Bronze) ist eine Legierung, die nur aus Kupfer und Zinn besteht.
- Aluminiumbronze ist eine Legierung, die aus Kupfer und Aluminium sowie aus Anteilen von Nickel und Eisen bestehen kann.
- Messing ist eine Legierung aus Kupfer und Zink, verbreitet als Walz- und Knetmaterial mit einer Beimengung von Blei, auch Aluminium.
- Als Tombak wird kupferreiches Messing bezeichnet
- Bleibronze ist eine Legierung aus Kupfer, Zinn und Blei.
- Isabellin ist eine Legierung aus Kupfer, Nickel und Mangan, vornehmlich für thermisch resistente Drähte (Heizleiterlegierung)
- Konstantan ist eine vergleichbare Legierung aus Kupfer, Nickel und Mangan.
- Nickelin ist eine vergleichbare Legierung aus Kupfer, Nickel und Mangan.
- Neusilber (Alpaka, Pakfong) ist eine Legierung aus Kupfer, Nickel und Zink.
- Rotguss ist eine u. a. für Armaturen verwendete Legierung aus Kupfer, Zinn, Zink und Blei.
- Berylliumkupfer aus Kupfer und Beryllium wurde besonders für funkenfreie Werkzeuge im Bergbau verwendet.
- Weißkupfer ist eine helle Kupfer-Arsen-Legierung.

### Magnesiumlegierungen:

- Elektron ist eine in den 1920er Jahren geschützte Bezeichnung für eine Magnesiumlegierung.

### Nickelbasislegierungen:

- Plessit besteht aus miteinander verwachsenem Kamacit (Balkeneisen) und Taenit (Bandeisen) und kommt in Nickel-Eisen-Meteoriten vor
- Chronin bezeichnet Legierungen aus Nickel und Chrom.
- Monel ist eine Legierung aus Nickel, Kupfer, Eisen und Mangan.
- Inconel und Incoloy sind bis 800 °C hitzebeständige Legierungen aus Nickel, Chrom und bis zu 5 % Eisen.
- Supermalloy ist eine Legierung aus Nickel, Eisen und Molybdän.

### Quecksilberlegierungen:

- Silberamalgam
- Goldamalgam als Verbindung von Quecksilber mit Gold ist keine zweckgebundene Legierung, sondern lediglich eine umweltschädliche Zwischenstufe der Goldgewinnung

### Silberlegierungen:

- Sterlingsilber: Legierung mit 925/1000 Silber, das mit Kupfer oder anderen Materialien legiert wird. Diese Legierung wird meist zur Herstellung von Münzen, Schmuck und Besteck verwendet.
- Vermeil: Silber, das feuervergoldet wurde.
- Niello (Tulasilber): (vor allem im Mittelalter für Kunstwerke und Tafelgeschirr verwendet) wird mit Silber, Kupfer, Blei, Schwefel, sowie Ammoniumchlorid hergestellt.
- Tibetsilber: Legierung mit sehr geringem Silberanteil von 250/1000.

### Wolframlegierungen oder Verbundwerkstoffe:

- Wolfram gehört zu den Refraktärmetallen, die sich aufgrund ihres hohen Schmelzpunktes (SMWolfram = 3422 °C) nur schwer mit anderen Metallen legieren lassen und wird daher meist zu Verbundwerkstoffen gesintert wie z. B. Hartmetalle zur spanenden Bearbeitung von Werkstoffen.
- Widia, die geschützte Bezeichnung für ein Hartmetall, bestehend aus Wolfram, Cobalt, Kohlenstoff und Titan.
- Ein Wolfram-Silber-Verbundwerkstoff wird irreführend auch als Schwitzkühllegierung bezeichnet.
- Zu den echten Legierungen zählen dagegen unter anderem Wolfram-MolybdänLegierungen, hochdichte Wolframlegierungen mit den Legierungsbestandteilen Nickel, Kupfer, Eisen, Molybdän in wechselnden Zusammensetzungen.
- Als Legierungselement mit einem Anteil von wenigen Gewichtsprozent ist Wolfram meist ein Bestandteil sowohl hochwertiger Stähle (siehe auch Liste der Legierungselemente), als auch zu Leuchtzwecken genutzter Drahtlegierungen (Bsp. die Marke Osram^{®} als Zusammenziehung von Osmium und Wolfram).

### Zinklegierung:

- Zamak-Legierung
- Feinzink - Gußlegierungen werden überwiegend für Druckguss-teile, auch solche im Feinguss verwendet.
- Titanzink ist eine bevorzugt für Verzinkung verwendete Zinklegierung mit sehr geringem Kupfer- und Titananteil.
- Alzen (ZnAl35), auch Alzeen sind Markennamen von Zink-Aluminiumlegierungen.

### Zinnlegierungen:

- Britannia-Metall ist eine Legierung aus 90-95 % Zinn mit bis zu 9 % Antimon und einem Prozent Kupfer. Laut "Gießereilexikon" (früher) Verwendung für Haushaltswaren und Ziergegenstände ("falsche Bronzen").
- Hartzinn (Pewter) ist eine Legierung aus Zinn, Kupfer und/oder Blei.
- Lötzinn ist eine Blei-Zinn-Legierung. Seit einiger Zeit finden auch kupfer- oder silberhaltige Zinnlegierungen Anwendung.
- "Potin gris" ist eine historische, französische Bronze (Kupferlegierung mit Zinnanteil).

### Intermetallische Verbindungen:

- Zintl-Phasen.
- Laves-Phasen.
- Hume-Rothery-Phasen.

### Magnetische und magnetisierbare Legierungen:

Legierungen des Eisens mit mindestens einem Metall, das aus der Gruppe, bestehend aus Ruthenium, Osmium, Kobalt, Rhodium, Iridium, Nickel, Palladium, Platin, Kupfer, Silber, Gold, Zink, Cadmium Scandium, Yttrium, Lanthan, Cer, Praseodym, Neodym, Samarium, Europium, Gadolinium Terbiumoxid, Dysprosium, Holmium, Erbium, Thulium, Ytterbium, Lutetium, Titan, Zirkonium, Hafnium, Vanadium, Niob, Tantal, Chrom, Molybän, Wolfram, Mangan, Rhenium, Aluminium, Gallium, Indium, Thallium, Germanium, Zinn, Blei, Antimon und Wismut, ausgewählt sind; Beispiele geeigneter Metallegierungen sind weichmagnetische Metallegierungen wie Permalloy^{®} auf der Basis von Nickel und Eisen, Nickel-Eisen-Zink-Legierungen oder Sendust auf der Basis von Aluminium, Silicium und Eisen; RE_{1-yLay})Fe_{100-v-w-x-z}CO_{w}M_{z}Bₓ, worin RE für ein Seltenerdmetall aus der Gruppe Cer, Praseodym, Neodym, Samarium, Europium, Gadolinium, Terbiumoxid, Terbiumoxid, Dysprosium, Holmium, Erbium, Thulium, Ytterbium und Lutetium und M für ein Metall aus der Gruppe Titan, Zirkonium, Hafnium, Vanadium, Niob, Tantal, Chrom, Molybän und Wolfram stehen und v = 5-15, w ≥ 5, x = 9-30, y = 0,05-0,5 und z = 0,1-5; die vorstehend genannten Metalle und Metallegierungen können noch mindestens ein weiteres Metall und/oder Nichtmetall, das oder die aus der Gruppe, bestehend aus Lithium, Natrium, Kalium, Rubidium, Cäsium, Beryllium, Magnesium, Calcium, Strontium, Barium, Bor, Kohlenstoff, Silicium, Stickstoff, Phosphor, Arsen, Sauerstoff, Schwefel, Selen, Tellur, Fluor, Chlor, Brom und Jod, ausgewählt ist oder sind in nichtstöchiometrischen Mengen enthalten. Ein besonders gut geeignetes Material dieser Art ist NdFeB.

Beispiele geeigneter katakytisch wirksamer Metallverbindungen sind die Boride, Oxide, Sulfide, Selenide, Telluride, Carbide Silicide, Germanide, Nitride, Phosphide, Arsenide, Antimonide, Fluoride, Chloride, Bromide und Iodide, Koordinationsverbindungen mit organischen und/oder anorganischen Liganden, Isopolysäuren und Heteropolysäuren (Polyoxometallate; POM) sowie kovalente organische Metallorganyle, Sandwichverbindungen und Carbene.

Insbesondere werden Hämatit, nichtstöchiometrische Hämatite, Ferrite, Nickelferrite, Nickelsalze und Polyoxometallate (POM) verwendet.

Beispiele geeigneter POM sind aus der internationalen Patentanmeldung WO 2016/116259 A1, Seite 14, Zeile 32, bis Seite 23, Zeile 17, und insbesondere aus der Tabelle 1, "Summenformeln von geeigneten POM", bekannt.

Beispiele geeigneter mikroporöser Materialien sind Zeolithe und metallorganische Gerüstverbindungen (Metal-Organic Frameworks; MOFs). Insbesondere werden zinkmodifizierte Zeolithe verwendet.

Durch die Mahlung werden der katalytisch wirksamen Partikeln werden Nanopartikel und Mikropartikel erzeugt und/oder die Oberflächen der Antriebswellen, der Wände, der Mahlkörper, der Agitationsmittel und/oder der Walzen immer wieder frisch aktiviert, wodurch die katalytischen Wirkungen erhöht werden. Auch werden die Metalle und die Metalllegierungen immer wieder durch die Reduktion mithilfe der anwesenden kohlenstoffhaltigen Materialien neu erzeugt. Dadurch können auch durch Torsion und Gitterbaufehler neue aktive Zentren auf den Katalysatoren resultieren und sie können durch piezoelektrische Eigenschaften mit Elektronen für Redoxreaktionen versorgt werden.

Die Mahlkörper oder Mahlkugeln bestehen aus einem hoch- und tieftemperaturbeständigen, schlagfesten, abriebfesten Material einer hohen Härte und eines sehr hohen Schmelzpunkts. Geeignete Mahlkörper bestehen beispielsweise aus Aluminiumoxid, Steatit, Porzellan, Zirkoniumoxid, Glas, Flintstein, Stählen, Chromstählen, Wolframcarbid, Siliziumcarbid, Siliziumnitrid, Bornitrid oder Borcarbid oder sie enthalten diese Materialien.

Die Mahlkörper können beliebige Durchmesser aufweisen, die insbesondere von der Größe und Konstruktion der Mühle, der Art der Beschleunigung, beispielsweise durch Drehung der Mühlenwand, durch Rotieren oder Vibrieren das den Mahlraum umschließenden Behälters, durch Fliehkräfte, durch Druckluft, durch Schläge oder durch elektrostatische und/oder magnetische Anziehung sowie den zu vermahlenden Materialien abhängen. Die Durchmesser können deshalb in vorteilhafter Weise der jeweiligen Aufgabe optimal angepasst werden. Vorzugsweise liegen die Durchmesser bei 0,5 cm bis 10 cm.

So können die Mahlkörper Kugeln oder Ellipsoide sein oder unregelmäßige Formen haben, sodass sich pro Zusammenstoß verschiedene Kontaktmöglichkeiten ergeben. Außerdem können die Mahlkörper glatte oder aufgeraute Oberflächen haben oder näpfchenförmige Vertiefungen wie ein Golfball aufweisen, wobei sich in den Näpfchen Mahlgut ansammeln kann. Die Oberfläche der Mahlkörper kann eine Schicht aus dem Mahlgut aufweisen oder hiermit dotiert sein.

Vorzugsweise werden Mahlkugeln als Mahlkörper verwendet.

Werden dagegen die vorstehend beschriebenen Walzen zur Mahlung des Mahlguts verwendet, werden keine der vorstehend beschriebenen Mahlkörper verwendet. Die Walzen, die massiv oder hohl sein können, sind vorzugsweise aus denselben harten Materialien wie die Mahlkörper aufgebaut.

Das erfindungsgemäße mechanochemische Verfahren dient der Dekontaminierung, der Eliminierung, der Regenerierung, der Immobilisierung, dem Aufschluss und/oder der Umwandlung in Wertprodukte von natürlichen, synthetischen, biogenen und biologischen Materialien.

Vorzugsweise enthalten, die besagten Materialien Phosphate, insbesondere glasförmige Phosphate, die mithilfe des erfindungsgemäßen mechanochemischen Verfahrens wieder in biologisch verfügbarer Form wiedergewonnen werden können.

In dem ersten Verfahrensschritt des erfindungsgemäßen mechanochemischen Verfahrens wird als Mahlgut mindestens eine, insbesondere eine, Suspension oder pastöse Mischung , mindestens eine, insbesondere eine, feinteilige feste Mischung und/oder mindestens ein, insbesondere ein, Gas bereitgestellt.

Im Rahmen der vorliegenden Erfindung wird ein festes Material oder eine feste Mischung als feinteilig angesehen, wenn sie aus Partikeln einer mittleren Teilchengröße d₅₀ von 1 nm bis 2 cm besteht.

Die mindestens eine feinteilige feste Mischung, die entweder suspendiert ist oder als Paste oder als feinteiliges festes Pulver vorliegt, enthält vorzugsweise mindestens ein Material, das mindestens ein, insbesondere ein, Phosphat enthält oder hieraus besteht.

Vorzugsweise wird das mindestens eine Material aus der Gruppe, bestehend aus natürlichen, synthetischen, biogenen und biologischen Materialien, die kontaminiert, ökologisch problematisch und bedenklich, schädlich, intensiv riechend, giftig, brennbar, brandfördernd radioaktiv und/oder explosiv sind, Gemischen und Abfällen sowie kontaminierten mineralischen Kohlen, Biokohlen, Aktivkohlen und Kohlenstofflieferanten, ausgewählt.

Vorzugsweise werden die Materialien aus der Gruppe, bestehend aus getrockneten Güllen, Jauchen, Gärresten, Trockenfermenten Klärschlämmen, Fermenten, Komposten, Bioabfällen, pflanzlichen Abfällen, Laub, Schnittholz, Bauholz, Maischen, Trestern, Lebensmittelindustrieabfällen, biotechnologischen Abfällen, gentechnologischen Abfällen, tierischen Abfällen, Abfällen aus der Metallgewinnung, radioaktiven Abfällen, Abfällen von kohlefaserverstärkten Kunststoffen (Carbon fibre-reincorced Plastics; CFRP), Cellulosen, Hemicellulosen, Liginocellulosen, Cellulosen, Hemicellulosen und/oder Liginocellulosen enthaltenden Biomassen und Abfällen, hochmolekularen Eiweißen und Struktureiweißen, trockenen Konzentraten der biologischen Reinigungsstufen von Kläranlagen, chemischen Wäschern und Filtern, Abwässern, Resten der Abluftbehandlung, Stickstoffverbindungen, Schwefelverbindungen, Phosphorverbindungen, polycyclischen aromatischen Kohlenwasserstoffen (PAH), flüchtigen organischen Verbindungen (VOC), reaktiven Gasen, Medizinprodukten, Hormonen, Mikroverunreinigungen, phosphathaltigen Baustoffen, phosphathaltigen Körperbestandteilen, phosphathaltigen Lebensmitteln und Futtermitteln, sonstigen Phosphatquellen, synthetischen und natürlichen, intensiv riechenden Stoffen, synthetischen und natürlichen Giftstoffen, Bioziden, pyrotechnischen Materialien, Explosivstoffen, Viren, Bakterien, Mycoplasmen, Prionen, Algen, Giftpflanzen und Teilen davon sowie giftigen Tieren und Teilen davon, ausgewählt.

Insbesondere werden die Stickstoffverbindungen aus der Gruppe, bestehend aus Ammoniak, aliphatischen Aminen, cycloaliphatischen Aminen, olefinisch ungesättigten Aminen, aromatischen Aminen, gesättigten, ungesättigten und aromatischen heterocyclischen Aminen sowie ihren Ammoniumverbindungen, Amiden, Aminoxiden, Amminkomplexen, Azoverbindungen, Carbodiimiden, Hydrazinen, Hydrazonen, Hydrazidhydrazonen, Guanidinen, Harnstoffen, Biureten, Triureten, Semicarbaziden, Carbodiazonen, Carbazidsäure-Derivaten, Isosemicarbaziden Iminen, Isocyaniden, N-Hydroxyverbindungen, Carbonsäureamiden, Carbonsäurehydraziden, Imid-, Hydrazon-, Hydroxim- und Hydroxamsäuren Nitraten, Nitriten, Nitriden, Nitrilen, Nitrosoverbindungen, Nitrosylverbindungen, Nitroverbindungen, Tetrazenen und Urethanen, ausgewählt. Insbesondere handelt es sich bei den Stickstoffverbindungen um Nitrate, Nitrite und Nitrosamine.

Insbesondere werden die Schwefelverbindungen aus der Gruppe, bestehend aus den Allotropen des Schwefels, Schwefelwasserstoff, Thiolen, Sulfiden, Schwefelhalogeniden, Sulfoxiden, Sulfonen, Sultonen, Schwefelsäureestern, Sulfonsäuren, Sulfonsäureester, Schwefel-Stickstoffverbindungen und Sulfoniumverbindungen, ausgewählt

Insbesondere werden die Phosphorverbindungen aus der Gruppe, bestehend aus Phosphorallotropen, Phosphinen, Phosphoniumverbindungen, Phosphiten, Phosphaten, Phosphonaten, Phosphorhalogeniden und Phosphazenen, insbesondere aber Phosphaten, ausgewählt.

Insbesondere werden die Fluide aus der Gruppe bestehend aus industriellen Lösemitteln und Resten von industriellen Lösemitteln, insbesondere Lösemitteln aus der Lackindustrie, der Automobilindustrie, der Chipherstellung und der industriellen niedermolekularen und hochmolekularen organischen Synthese, ausgewählt.

Insbesondere werden die flüchtigen organischen Verbindungen (VOC) aus der Gruppe bestehend aus Aldehyden und Ketonen wie Ethanal, Propionaldehyd, Thioaldehyd, Butyraldehyd, Heptanal Methylethylketon, Cyclohexanon und Formaldehyd, Alkanen und Cycloalkanen, wie Hexan, Heptan, Octan, Nonan, Dekan, Cyclohexanon und Methylcyclohexan, Aromaten wie Benzol, Toluol, Ethylbenzol, Xylol, Kresol und Styrol, Phenolen wie Phenol und Kresol, leichtflüchtigen halogenierten Kohlenwasserstoffen (LHKW), wie partiell und vollständig chlorierten Kohlenwasserstoffen, fluorierten Kohlenwasserstoffen und chlorfluorierten Kohlenwasserstoffen wie Trifluorchlormethan Tetrachlorkohlenstoff, Tetrafluorkohlenstoff, Chloroform, Trichlorethan, Tetrachlorethan und Dichlorbenzol, ausgewählt.

Insbesondere werden die reaktiven Gase, die vorstehend noch nicht erwähnt sind, aus der Gruppe, bestehend aus Methan, Ethan, Propan, Butan, Ethylen, Propylen, Blausäure, Dicyan, Phosgen, Acetylen, Vinylfluorid, Vinylchlorid, Vinylidenchlorid, Vinylidenfluorid, Stickstofftrifluorid, Tetrafluorhydrazin, cis- und trans-Difluordiazin, Schwefeltetrafluorid und Kohlenmonoxid, ausgewählt.

Unter den geeigneten Bedingungen zählt Kohlendioxid ebenfalls zu den reaktiven Gasen.

Insbesondere werden die PAH aus der Gruppe, bestehend aus Pentalen, Inden, Naphthalen, Azulen, Heptalen, Biphenylen, asymmetrisches Indacen, symmetrisches Indacen, Acenaphthylen, Fluoren, Phenalen, Phenanthren, Anthracen, Acephenanthrylen, Aceanthrylen, Triphenylen, Pyren, Chrysen, Naphthacen, Plejaden, Picen, Perylen, Pentaphen, Pentacen, Tetraphenylen, Hexaphen, Hexacen, Rubicen, Coronen, Trinaphthylen, Heptaphen, Heptacen, Octacen, Ovalen, Superphenalen, Benzo[a]anthracen, Benzob[b]fluoranthen, Benzo[k]fluoranthen, Benzo[a]pyren, Dibenzo[a,h]anthracen, Indeno[1,2,3-cd]pyren und Benzo[ghi]perylen, ausgewählt.

Insbesondere werden die Medizinprodukte aus der Gruppe, bestehend aus den Medikamenten, inklusive Hormonen, die in der "GELBEN LISTE Pharmaindex" und der "Roten Liste" aufgeführt sind, nicht humanzugelassenen Medikamenten, Veterinärmedikamenten, Medikamenten im Forschungsstadium, in der Entwicklung und in der klinischen Prüfung sowie ihren Abfällen und ihren Metaboliten, ausgewählt.

Insbesondere werden die Mikroverunreinigungen aus der Gruppe, bestehend aus Medizinprodukten, Industriechemikalien und Hormonen in Konzentrationen von µg/Liter bis ng/Liter und Mikroplastik, ausgewählt. Insbesondere werden die phosphathaltigen Baustoffe aus der Gruppe, bestehend aus phosphathaltigen Zementen, Betonen, Ziegeln, Kunststeinen, Steinen, Brettern, Kompositmaterialien mit Holz und Ringspaltmörtel, ausgewählt.

Insbesondere werden die weiteren Phosphatquellen aus der Gruppe, bestehend aus Waschmitteln, Korrosionsschutzmitteln, Zähnen, Zahnmehl, Knochen, Knochenmehl, Apatit und Hydroxylapatit, ausgewählt.

Insbesondere werden die phosphathaltigen Lebensmittel und Futtermittel aus der Gruppe, bestehend aus Milchprodukten, Wurstwaren, Limonaden, Fertiggerichten, Fischkonserven und phosphathaltigen Futtermitteln für Tiere, ausgewählt.

Insbesondere werden die intensiv riechenden Stoffe aus der Gruppe, bestehend aus synthetischen, organischen und anorganischen Stickstoff-, Schwefel-, Selen-, Tellur-, Phosphor- und Arsenverbindungen, tierischen sympathischen und antiphatischen Duftstoffen und pflanzlichen sympathischen und antipatischen Duftstoffen, ausgewählt.

Insbesondere werden die synthetischen Giftstoffe aus der Gruppe, bestehend aus Kampfstoffen, Zyankali, Beryllium, Selen, Tellur, Thallium, weißer Phoshor, Arsen, Arsenverbindungen, Cadmium, Quecksilber, Quecksilberverbindungen, Polonium, Plutonium sowie polyhalogenierten Aromaten, Dioxinen und Dibenzofuranen, ausgewählt.

Insbesondere werden die natürlichen Giftstoffe aus der Gruppe, bestehend aus pflanzlichen, tierischen, pilzlichen und bakteriellen Giftstoffen sowie Algengiftstoffen, ausgewählt.

Insbesondere werden die Biozide aus der Gruppe, bestehend aus Pestiziden, Herbiziden, Viruziden gegen Viren, Bakteriziden gegen Bakterien, Akariziden gegen Milben, Algiziden gegen Algen, Fungiziden gegen Pilze, Insektiziden gegen Insekten, Mikrobiziden gegen Keime, Molluskiziden gegen Schnecken, Nematiziden gegen Fadenwürmer (Nematoden), Rodentiziden gegen Nagetiere, Aviziden gegen Vögel und Pisciziden gegen Fische, ausgewählt.

Insbesondere werden die pyrotechnischen Materialien aus der Gruppe, bestehend aus Feuerwerkskörpern und Theaterfeuerwerk sowie den darin verwendeten Oxidationsmittel, Brennstoffen und Hilfsstoffen, ausgewählt.

Insbesondere werden die Explosivstoffe aus der Gruppe, bestehend aus Chloraten, Perchloraten, Xenonoxiden, organischen und anorganischen Stickstoffhalogenverbindungen Peroxiden Salpetersäureestern, Nitroverbindungen, Nitraminen, Nitrosaminen, hochenergetischen Stickstoffverbindungen, Initialsprengstoffen und rauchschwachen Pulvern, ausgewählt. Beispiele solcher Explosivstoffe werden beispielsweise in dem Lehrbuch von Thomas M. Klapötke, Chemistry of High-Energy Materials, Walter de Gruyter, Berlin/New York, 2011, beschreiben.

Insbesondere werden die Giftpflanzen und die Teile davon aus der Gruppe, bestehend aus den Pflanzen Blauer Eisenhut, Hundspetersilie, Aronstab, Tollkirsche, Engelstrompete, Brunfelsia, Buchsbaum, Taumelkälberkropf, Wasserschierling, Herbstzeitlose, Schierling, gefleckter Schierling, Maiglöckchen, Alpenveilchen, Echter Seidelbast, Strichapfel, Hoher Rittersporn, Roter Fingerhut, Dieffenbachien, Wurmfarne, Goldlack, kalifornischer Mohn, Pfaffenhütchen, Weihnachtsstern, Gummibaum, Ruhmeskrone, Efeu, Stinkende Nieswurz, Christrose, Bärenklau, Hyazinthe, Bilsenkraut, Stechpalmen, Iris, Goldregen, Tränendes Herz, Oleander, Tabak, Einbeere, Gartenbohne, Adlerfarn, Aprikosen, Marille, Kirschlorbeer, Hahnenfuß, Rhabarber, Wunderbaum, Rhododendron, Robinie, Holunder, Bittersüßer Nachtschatten, Kartoffel, Ignatius-Brechnuß, Rainfarn, Schellenbaum, Ongaonga, Weißer Germer, Blauregen, Tomate, Aubergine, Eiben und Taxusgewächse, ausgewählt.

Insbesondere werden die giftigen Tiere und die Teile davon aus der Gruppe, bestehend aus Schwämmen, Blumentieren, Hydrozoen, Schirmquallen, Vielborster, Schnecken, Kopffüßern, Insekten, Spinnentieren, Fischen, Amphibien, Reptilien, Vögeln und Säugetieren, ausgewählt.

Beispiele für Strukturproteine sind Keratin der Haare, Nägel, Hufe und Hörner von Säugetieren, der Federn von Vögeln und Hornschuppen von Reptilien, Kollagen der Bindegewebe und der extrazellulären Matrix aller Gewebetiere, Elastin, fibrilläre (faserige) Strukturproteine wie Myosin und Tropomyosin, die die Kontraktion der Muskelzellen bewirken (diese werden meist als Bewegungsproteine bezeichnet), faserförmige Seidenproteine von Insekten (Fibroin und Sericin) oder Spinnen (Spidroin 1 und Spidroin 2), Arthropodin und Sklerotin (mit Phenol gegerbtes Arthropodin), neben Chitin Hauptbestandteil der Körperhülle (Cuticula) der Arthropoden (Gliederfüßer), Zentriolen und Mikrotubuli der meisten Lebewesen und Mikrofilamente des Zytoskeletts der meisten Lebewesen.

Bevorzugt werden die kohlenstoffliefernden Materialien aus der Gruppe, bestehend aus den vorstehend beschriebenen pflanzlichen Materialien sowie aus Spelzen, Holzspänen, Sägemehl, Heu, Gras, Getreide, Grannen, Silage, Nussschalen, Rinden, getrockneten Blättern und Nadeln und Naturfasern wie Samenfasern wie Baumwolle (CO), Kapok (KP), Pappelflaum, Akon, Bambusfasern, Brennnesselfasern, Hanffasern (HA), Jute (JU), Kenaf, Leinen (LI), Hopfen, Ramie (RA) und Hanf, Hartfasern wie Ananas, Caroá, Curauá, Henequen, Neuseeländer Flachs, Sisal (SI) und Kokos (CC) und Fasern aus natürlichen Polymeren wie cellulosische Fasern, wie beispielsweise Viskose (CV), Modal (CMD), Lyocell (CLY), Cupro (CUP), Acetat (CA) und Triacetat (CTA), ausgewählt.

Außerdem enthält das mindestens eine vorzugsweise phosphathaltige, Material mindestens einen Typ von Kohlenstoff, der aus der Gruppe bestehend aus reiner, feinteiliger, mineralischer Kohle, reiner, feinteiliger Biokohle, reiner, feinteiliger Aktivkohle, kontaminierter, feinteiliger, mineralischer Kohle, kontaminierter, feinteiliger Biokohle, kontaminierter, feinteiliger Aktivkohle, feinteiliger . Braunkohle und reiner und kontamin feinteiliger Kohlenstofflieferanten sowie aus den vorstehend genannten, angefeuchteten Materialien, ausgewählt wird.

Die mindestens eine, insbesondere eine feinteilige feste Mischung kann des Weiteren mindestens einen festen feinteiligen oder im Falle der mindestens einen Suspension mindestens einen gelösten, emulgierten oder suspendierten Zusatzstoff enthalten, der sich stofflich von den vorstehend beschriebenen Materialien unterscheidet. Vorzugsweise wird der mindestens eine Zusatzstoff aus der Gruppe, bestehend aus anorganischen und organischen Salzen, Säuren, Basen, Oxiden, Reduktionsmitteln, Oxidationsmitteln, Wasserdampf, Heißdampf, Zeolithen und Schichtsilikaten zugesetzt werden. Beispiele geeigneter anorganischer und organischer Salze sind die Lithium-, Natrium-, Kalium-, Magnesium- und Kalziumsalze der Salzsäure, Schwefelsäure, Salpetersäure, salpetrigen Säure, Essigsäure, Propionsäure, Buttersäure, Benzoesäure, Benzolsulfonsäure und Benzolphosphonsäure. Beispiele geeigneter Säuren sind die vorstehend genannten. Beispiele geeigneter Basen sind Lithium- Natrium-, Kalium-, Magnesium- und Kalziumhydroxyd. Beispiele geeigneter Oxide sind die Eisenoxide, Aluminiumoxid, Galliumoxid, Indiumoxid, Siliziumoxid, Sande, Germaniumoxid, Zinnoxid, Bleioxid, Antimonoxid und Bismutoxid. Beispiele geeigneter Reduktionsmittel sind Wasserstoff, Lithiumaluminiumnitrid, Natriumborhydrid, Natriumsulfit, Natriumdithionit und Natriumthiosulfat. Beispiele geeigneter Oxidationsmittel sind Sauerstoff, Wasserstoffperoxid und organische Peroxide, Natriumpercarbonat, Kaliumpermanganat, Kaliumdichromat und die Halogene.

Die genannten Oxdidationsmittel haben den Vorteil, dass sie die Kohlen G mit funktionellen Gruppen versehen können, die die Adsorption und die Chemiesorption verbessern und neue Reaktionswege eröffnen.

Insbesondere werden Natriumchlorid, Kaliumchlorid und Schichtsilikate verwendet.

Die Schichtsilikate liegen vorzugsweise als Nanopartikel und/oder Mikropartikel einer mittleren Teilchengröße d₅₀ von 1 nm bis <1000 µm, vorzugsweise 10 nm bis 900 µm, Insbesondere 300 nm bis 1000 nm, besonders Insbesondere 650 ± 200 nm, ganz besonders Insbesondere 650 ± 150 nm und insbesondere 650 ± 100 nm vorliegen.

Die elementare Zusammensetzung und die Struktur der Schichtsilikat-Mikro- und/oder Nanopartikel können ebenfalls sehr weit variieren. Bekannt ist beispielsweise die Einteilung der Silikate in die folgenden Strukturen:
- Inselsilikate
- Gruppensilikate
- Ringsilikate
- Ketten- und Bandsilikate
- Übergangsstrukturen zwischen Ketten- und Schichtsilikaten
- Schichtsilikate
- Gerüstsilikate.

Schichtsilikate sind Silikate, deren Silikationen aus Schichten eckenverknüpfter SiO₄₋ Tetraeder bestehen. Diese Schichten und/oder Doppelschichten sind untereinander nicht weiter verknüpft. Die technisch wichtigen und in Sedimentgestein verbreiteten Tonminerale sind ebenfalls Schichtsilikate. Der schichtartige Aufbau dieser Minerale bestimmt die Form und die Eigenschaften der Kristalle. Sie sind meist tafelig bis blättrig mit guter bis perfekter Spaltbarkeit parallel zu den Schichten. Die Zähligkeit der Ringe, aus denen sich die Silikatschichten zusammensetzen, bestimmt oft die Symmetrie und Form der Kristalle. Zwischen den Schichten können sich Wassermoleküle, große Kationen und/oder Lipide einlagern.

Beispiele geeigneter Schichtsilikate gehen aus der nachfolgenden Tabelle 1 hervor. Die Aufzählung ist beispielhaft und nicht abschließend.

**Tabelle 1: Summenformeln von geeigneten Schichtsilikaten ^{a)}**

| **Nr.** | **Typ** | **Summenformel** |
|---|---|---|
| 1 | Martinit | (Na,Ca)₁₁ Ca₄(Si,S,B)₁₄B₂O₄₀F₂·4(H₂O) |
| 2 | Apophyllit-(NaF) | NaCa₄Si₈O₂₀F·8H₂O |
| 3 | Apophyllit-(KF) | (K,Na)Ca₄Si₈O₂₀(F,OH)·8H₂O |
| 4 | Apophyllit-(KOH) | KCa₄Si₈O₂₀(OH,F)·8H₂O |
| 5 | Cuprorivait | CaCuSi₄O₁₀ |
| 6 | Wesselsit | (Sr,Ba)Cu[Si₄O₁₀] |
| 7 | Effenbergerit | BaCu[Si₄O₁₀] |
| 8 | Gillespit | BaFe²⁺Si₄O₁₀ |
| 9 | Sanbornit | BaSi₂O₅ |
| 10 | Bigcreekit | BaSi₂O₅·4H₂O |
| 11 | Davanit | K₂TiSi₆O₁₅ |
| 12 | Dalyit | K₂ZrSi₆O₁₅ |
| 13 | Fenaksit | KNaFe²⁺Si₄O₁₀ |
| 14 | Manaksit | KNaMn²⁺[Si₄O₁₀] |
| 15 | Ershovit | K₃Na₄(Fe,Mn,Ti)₂[Si₈O₂₀(OH)₄]·4H₂O |
| 16 | Paraershovit | Na₃K₃Fe³⁺₂Si₈O₂₀(OH)₄·4H₂O |
| 17 | Natrosilit | Na₂Si₂O₅ |
| 18 | Kanemit | NaSi₂O₅·3H₂O |
| 19 | Revdit | Na₁₆Si₁₆O₂₇(OH)₂₆·28H₂O |
| 20 | Latiumit | (Ca,K)₄(Si,Al)₅O₁₁(SO₄,CO₃) |
| 21 | Tuscanit | K(Ca,Na)₆(Si,Al)₁₀O₂₂(SO₄,CO₃,(OH)₂)·H₂O |
| 22 | Carletonit | KNa₄Ca₄Si₈O₁₈(CO₃)₄(OH,F)·H₂O |
| 23 | Pyrophyllit | Al₂Si₄O₁₀(OH)₂ |
| 24 | Ferripyrophyllit | Fe³⁺Si₂O₅(OH) |
| 25 | Macaulayit | (Fe³⁺,Al)₂₄Si₄O₄₃(OH)₂ |
| 26 | Talk | Mg₃Si₄O₁₀(OH)₂ |
| 27 | Minnesotait | Fe²⁺₃Si₄O₁₀(OH)₂ |
| 28 | Willemseit | (Ni,Mg)₃Si₄O₁₀(OH)₂ |
| 29 | Pimelit | Ni₃Si₄O₁₀(OH)₂·4H₂O |
| 30 | Kegelit | Pb₄Al₂Si₄O₁₀(SO₄)(CO₃)₂(OH)₄ |
| 31 | Aluminoseladonit | K(Mg,Fe²⁺)Al[(OH)₂\|Si₄O₁₀] |
| 32 | Ferroaluminoseladonit | K(Fe²⁺,Mg)(Al,Fe³⁺)[(OH)₂\|Si₄O₁₀] |
| 33 | Seladonit | K(Mg,Fe²⁺)(Fe³⁺,Al)Si₄O₁₀(OH)₂ |
| 34 | Chromseladonit | KMgCr[(OH)₂\|Si₄O₁₀] |
| 35 | Ferroseladonit | K(Fe²⁺,Mg)(Fe³+,Al)[(OH)₂\|Si₄O₁₀] |
| 36 | Paragonit | NaAl₂(Si₃Al)O₁₀(OH)₂ |
| 37 | Boromuskovit | KAl₂(Si₃B)O₁₀(OH,F)₂ |
| 38 | Muskovit | KAl₂(Si₃Al)O₁₀(OH,F)₂ |
| 39 | Chromphyllit | K(Cr,Al)₂[(OH,F)₂\|AlSi₃O₁₀] |
| 40 | Roscoelith | K(V,Al,Mg)₂AlSi₃O₁₀(OH)₂ |
| 41 | Ganterit | (Ba,Na,K)(Al,Mg)₂[(OH,F)₂\|(Al,Si)Si₂O₁₀] |
| 42 | Tobelith | (NH₄,K)Al₂(SbAl)O₁₀(OH)₂ |
| 43 | Nanpingit | CsAl₂(Si,Al)₄O₁₀(OH,F)₂ |
| 44 | Polylithionit | KLi₂AlSi₄O₁₀(F,OH)₂ |
| 45 | Tainiolith | KLiMg₂Si₄O₁₀F₂ |
| 46 | Norrishit | KLiMn³⁺₂Si₄O₁₂ |
| 47 | Shirokshinit | KNaMg₂[F₂\|Si₄O₁₀] |
| 48 | Montdorit | KMn_{0.5}²⁺Fe_{1.5}²⁺Mg_{0.5}[F₂\|Si₄O₁₀] |
| 49 | Trilithionit | KLi_{1.5}Al_{1.5}[F₂\|AlSi₃O₁₀] |
| 50 | Masutomilith | K(Li,Al,Mn²⁺)₃(Si,Al)₄O₁₀(F,OH)₂ |
| 51 | Aspidolith-1M | NaMg₃(AlSi₃)O₁₀(OH)₂ |
| 52 | Fluorophlogopit | KMg₃(AlSi₃)O₁₀F₂ |
| 53 | Phlogopit | KMg₃(Si₃Al)O₁₀(F,OH)₂ |
| 54 | Tetraferriphlogopit | KMg₃[(F,OH)₂\|(Al,Fe³⁺)Si₃O₁₀] |
| 55 | Hendricksit | K(Zn,Mn)₃Si₃AlO₁₀(OH)₂ |
| 56 | Shirozulith | K(Mn²⁺,Mg)₃[(OH)₂\|AlSi₃O₁₀] |
| 57 | Fluorannit | KFe₃²⁺[(F,OH)₂\|AlSi₃O₁₀] |
| 58 | Annit | KFe²⁺₃(Si₃Al)O₁₀(OH,F)₂ |
| 59 | Tetraferriannit | KFe²⁺₃(Si₃Fe³⁺)O₁₀(OH)₂ |
| 60 | Ephesit | NaLiAl₂(Al₂Si₂)O₁₀(OH)₂ |
| 61 | Preiswerkit | NaMg₂Al₃Si₂O₁₀(OH)₂ |
| 62 | Eastonit | KMg₂Al[(OH)₂[Al₂Si₂O₁₀] |
| 63 | Siderophyllit | KFe₂²⁺Al(Al₂Si₂)O₁₀(F,OH)₂ |
| 64 | Anandit | (Ba,K)(Fe²⁺,Mg)₃(Si,Al,Fe)₄O₁₀(S,OH)₂ |
| 65 | Bityit | CaLiAl₂(AlBeSi₂)O₁₀(OH)₂ |
| 66 | Oxykinoshitalith | (Ba,K)(Mg,Fe²⁺Ti⁴⁺)₃(Si,Al)₄O₁₀O₂ |
| 67 | Kinoshitalith | (Ba,K)(Mg,Mn,Al)₃Si₂Al₂O₁₀(OH)₂ |
| 68 | Ferrokinoshitalith | Ba(Fe²⁺,Mg)₃[(OH,F)₂\|Al₂Si₂O₁₀] |
| 69 | Margarit | CaAl₂(Al₂Si₂)O₁₀(OH)₂ |
| 70 | Chernykhit | BaV₂(Si₂Al₂)O₁₀(OH)₂ |
| 71 | Clintonit | Ca(Mg,Al)₃(Al₃Si)O₁₀(OH)₂ |
| 72 | Wonesit | (Na,K,)(Mg,Fe,Al)₆(Si,Al)₈O₂₀(OH,F)₄ |
| 73 | Brammallit | (Na,H₃O)(Al,Mg,Fe)₂(Si,Al)₄O_{10[}(OH)₂,H₂O] |
| 74 | Illit | (K,H₃O)Al₂(Si₃Al)O₁₀(H₂O,OH)₂ |
| 75 | Glaukonit | (K,Na)(Fe³⁺,Al,Mg)₂(Si,Al)₄O₁₀(OH)₂ |
| 76 | Agrellit | NaCa₂Si₄O₁₀F |
| 77 | Glagolevit | NaMg₆[(OH,O)₈\|AlSi₃O₁₀]·H₂O |
| 78 | Erlianit | Fe²⁺₄Fe³⁺₂Si₆O₁₅(OH)₈ |
| 79 | Bannisterit | (Ca,K,Na)(Mn²⁺,Fe²⁺,Mg,Zn)₁₀(Si,Al)₁₆O₃₈(OH)₈·nH₂O |
| 80 | Bariumbannisterit | (K,H₃O)(Ba,Ca)(Mn²⁺,Fe²⁺,Mg)₂₁(Si,Al)₃₂O₈₀(O,OH)₁₆·4-12 H₂O |
| 81 | Lennilenapeit | K₆₋₇(Mg,Mn,Fe²⁺,Fe³⁺,Zn)₄₈(Si,Al)₇₂(O,OH)₂₁₆·16H₂O |
| 82 | Stilpnomelan | K(Fe²⁺,Mg,Fe³⁺,Al)₈(Si,Al)₁₂(O,OH)₂₇·2H₂O |
| 83 | Franklinphilit | (K,Na)₁₋ₓ(Mn²⁺,Mg,Zn,Fe³⁺)₈(Si,Al)₁₂(O,OH)₃₆·nH₂O |
| 84 | Parsettensit | (K,Na,Ca)_{7.5}(Mn,Mg)₄₉Si₇₂O₁₆₈(OH)₅₀·nH₂O |
| 85 | Middendorfit | K₃Na₂Mn₅Si₁₂(O,OH)₃₆·2H₂O |
| 86 | Eggletonit | (Na,K,Ca)₂(Mn,Fe)₈(Si,Al)₁₂O₂₉(OH)₇·11H₂O |
| 87 | Ganophyllit | (K,Na)ₓMn²⁺₆(Si,Al)₁₀O₂₄(OH)₄·nH₂O {x = 1-2}{n = 7-11} |
| 88 | Tamait | (Ca,K,Ba,Na)₃₋₄Mn²⁺₂₄[(OH)₁₂\|{(Si,Al)₄(O,OH)₁₀}₁₀]·21H₂O |
| 89 | Ekmanit | (Fe²⁺,Mg,Mn,Fe³⁺)₃(Si,Al)₄O₁₀(OH)₂·2H₂O |
| 90 | Lunijianlait | Li_{0.7}Al_{6.2}(Si₇AlO₂₀)(OH,O)₁₀ |
| 91 | Saliotit | Na_{0.5}Li_{0.5}Al₃[(OH)₅\|AlSi₃O₁₀] |
| 92 | Kulkeit | Na_{0.35}Mg₈Al(AlSi₇)O₂₀(OH)₁₀ |
| 93 | Aliettit | Ca_{0.2}Mg₆(Si,Al)₈O₂₀(OH)₄·4H₂O |
| 94 | Rectorit | (Na,Ca)Al₄(Si,Al)₈O₂₀(OH)₄·2H₂O |
| 95 | Tarasovit | (Na,K,H₃O,Ca)₂Al₄[(OH₂\|(Si,Al)₄O₁₀]₂·H₂O |
| 96 | Tosudit | Na_{0.5}(Al,Mg)₆(Si,Al)₈O₁₈(OH)₁₂·5H₂O |
| 97 | Corrensit | (Ca,Na,K)(Mg,Fe,Al)₉(Si,Al)₈O₂₀(OH)₁₀·nH₂O |
| 98 | Brinrobertsit | (Na,K,Ca)_{0.3}(Al,Fe,Mg)₄(Si,Al)₈O₂₀(OH)₄·3.5H₂O |
| 99 | Montmorillonit | (Na,Ca)_{0.3}(Al,Mg)₂Si₄O₁₀(OH)₂·ₙH₂O |
| 100 | Beidellit | (Na,Ca_{0.5})_{0.3}Al₂(Si,Al)₄O₁₀(OH)₂·4H₂O |
| 101 | Nontronit | Na_{0.3}Fe2³⁺(Si,Al)₄O₁₀(OH)₂·4H₂O |
| 102 | Volkonskoit | Ca_{0.3}(Cr³⁺,Mg,Fe³⁺)₂(Si,Al)₄O₁₀(OH)₂·4H₂O |
| 103 | Swinefordit | (Ca,Na)_{0.3}(Al,Li,Mg)₂(Si,Al)₄O₁₀(OH,F)₂·2H₂O |
| 104 | Yakhontovit | (Ca,Na,K)_{0.3}(CUFe²⁺Mg)₂Si₄O₁₀(OH)₂·3H₂O |
| 105 | Hectorit | Na_{0.3}(Mg,Li)₃Si₄O₁₀(F,OH)₂ |
| 106 | Saponit | (Ca\|₂,Na)_{0.3}(Mg,Fe²⁺)₃(Si,Al)₄O₁₀(OH)₂·4H₂O |
| 107 | Ferrosaponit | Ca_{0.3}(Fe²⁺,Mg,Fe³⁺)₃[(OH)₂\|(Si,Al)Si₃O₁₀]·4H₂O |
| 108 | Spadait | MgSiO₂(OH)₂·H₂O |
| 109 | Stevensit | (Ca\|₂)_{0.3}Mg₃Si₄O₁₀(OH)₂ |
| 110 | Sauconit | Na_{0.3}Zn₃(Si,Al)₄O₁₀(OH)₂·4H₂O |
| 111 | Zinksilit | Zn₃Si₄O₁₀(OH)₂·4H₂O |
| 112 | Vermiculit | Mg_{0.7}(Mg,Fe,Al)₆(Si,Al)₈O₂₀(OH)₄·8H₂O |
| 113 | Rilandit | (Cr³⁺,Al)₆SiO₁₁·5H₂O |
| 114 | Donbassit | Al_{2.3}[(OH)₈\|AlSi₃O₁₀] |
| 115 | Sudoit | Mg₂Al₃(Si₃Al)O₁₀(OH)₈ |
| 116 | Klinochlor | (Mg,Fe²⁺)₅Al{Si₃Al)O₁₀(OH)₈ |
| 117 | Chamosit | (Fe²⁺,Mg,Fe³⁺)₅Al(Si₃Al)O₁₀(OH,O)₈ |
| 118 | Orthochamosit | (Fe²⁺,Mg,Fe³⁺)₅Al(Si₃Al)O₁₀(OH,O)₈ |
| 119 | Baileychlor | (Zn,Fe²⁺,Al,Mg)₆(Si,Al)₄O₁₀(OH)₈ |
| 120 | Pennantit | Mn²⁺₅Al(Si₃Al)O₁₀(OH)₈ |
| 121 | Nimit | (Ni,Mg,Fe²⁺)₅Al(SbAl)O₁₀(OH)₈ |
| 122 | Gonyerit | Mn²⁺₅Fe³⁺(Si₃Fe³⁺O₁₀)(OH)₈ |
| 123 | Cookeit | LiAl₄(Si₃Al)O₁₀(OH)₈ |
| 124 | Borocookeit | Li_{1-1.5}Al_{4-3.5}[(OH,F)₈\|(B,Al)Si₃O₁₀] |
| 125 | Manandonit | Li₂Al₄[(Si₂AlB)O₁₀](OH)₈ |
| 126 | Franklinfurnaceit | Ca₂(Fe³⁺Al)Mn³⁺Mn₃²⁺Zn₂Si₂O₁₀(OH)₈ |
| 127 | Kämmererit(Var.v. Klinochlor) | Mg₅(Al,Cr)₂Si₃O₁₀(OH)₈ |
| 128 | Niksergievit | (Ba, Ca)₂Al_{3[}(OH)₆\|CO₃\|(Si, Al)₄O₁₀]:0.2 H₂O |
| 129 | Surit | Pb₂Ca(Al,Mg)₂(Si,Al)₄O₁₀(OH)₂(CO₃,OH)₃·0.5 H₂O |
| 130 | Ferrisurit | (Pb,Ca)₂₋₃(Fe³⁺,Al)₂[(OH,F)_{2.5-3}\|(CO₃)_{1.5-2}\|Si₄O₁₀]·0.5 H₂O |
| 131 | Kaolinit | Al₂Si₂O₅(OH)₄ |
| 132 | Dickit | Al₂Sᵢ₂O₅(OH)₄ |
| 133 | Halloysit-7Å | Al₂Si₂O₅(OH)₄ |
| 134 | Sturtit | Fe³⁺(Mn²⁺,Ca,Mg)Si₄O₁₀(OH)₃·10 H₂O |
| 135 | Allophan | Al₂O₃·(SiO2)_{1.3-2}·(H₂O)_{2.5-3} |
| 136 | Imogolith | Al₂SiO₃(OH)₄ |
| 137 | Odinit | (Fe³⁺,Mg,Al,Fe²⁺,Ti,Mn)_{2.4}(Si_{1.8}Al_{0.2})O₅(OH)₄ |
| 138 | Hisingerit | Fe₂³⁺Si₂O₅(OH)₄·2H₂O |
| 139 | Neotokit | (Mn,Fe²⁺)SiO₃·H₂O |
| 140 | Chrysotil | Mg₃Si₂O₅(OH)₄ |
| 141 | Klinochrysotil | Mg₃Si₂O₅(OH)₄ |
| 142 | Maufit | (Mg,Ni)Al₄Si₃O₁₃·4H₂O |
| 143 | Orthochrysotil | Mg₃Si₂O₅(OH)₄ |
| 144 | Parachrysotil | Mg₃Si₂O₅(OH)₄ |
| 145 | Antigorit | (Mg,Fe²⁺)₃Si₂O₅(OH)₄ |
| 146 | Lizardit | Mg₃Si₂O₅(OH)₄ |
| 147 | Karyopilit | Mn²⁺₃Si₂O₅(OH)₄ |
| 148 | Greenalith | (Fe²⁺,Fe³⁺)₂₋₃Si₂O₅(OH)₄ |
| 149 | Berthierin | (Fe²⁺,Fe³⁺Al)₃(Si,Al)₂O₅(OH)₄ |
| 150 | Fraipontit | (Zn,Al)₃(Si,Al)₂O₅(OH)₄ |
| 151 | Zinalsit | Zn₇Al₄(SiO₄)₆(OH)₂·9H₂O |
| 152 | Dozyit | Mg₇(Al,Fe³⁺,Cr)₂[(OH)₁₂\|Al₂Si₄O₁₅] |
| 153 | Amesit | Mg₂Al(SiAl)O₃(OH)₄ |
| 154 | Kellyit | (Mn²⁺,Mg,Al)₃(Si,Al)₂O₅(OH)₄ |
| 155 | Cronstedtit | Fe₂²⁺Fe³⁺(SiFe³⁺)O₅(OH)₄ |
| 156 | Karpinskit | (Mg,Ni)₂Si₂O₅(OH)₂ |
| 157 | Népouit | (Ni,Mg)₃Si₂O₃(OH)₄ |
| 158 | Pecorait | Ni₃Si₂O₃(OH)₄ |
| 159 | Brindleyit | (Ni,Mg,Fe²⁺)₂Al(SiAl)O₅(OH)₄ |
| 160 | Carlosturanit | (Mg,Fe²⁺,Ti)₂₁(Si,Al)₁₂O₂₈(OH)₃₄·H₂O |
| 161 | Pyrosmalith-(Fe) | (Fe²⁺,Mn)₈Si₆O₁₅(Cl,OH)₁₀ |
| 162 | Pyrosmalith-(Mn) | (Mn,Fe²⁺)₈Si₆O₁₅(OH,Cl)₁₀ |
| 163 | Brokenhillit | (Mn,Fe)₈Si₆O₁₅(OH,Cl)₁₀ |
| 164 | Nelenit | (Mn,Fe²⁺)₁₆Si₁₂As³⁺₃O₃₆(OH)₁₇ |
| 165 | Schallerit | (Mn²⁺,Fe²⁺)₁₆Si₁₂As³⁺₃O₃₆(OH)₁₇ |
| 166 | Friedelit | Mn²⁺₈Si₆O₁₅(OH,C0)₁₀ |
| 167 | Mcgillit | Mn²⁺₈Si₆O₁₅(OH)₈Cl₂ |
| 168 | Bementit | Mn₇Si₆O₁₅(OH)₈ |
| 169 | Varennesit | Na₃(Mn,Fe³⁺,Ti)₂[(OH,Cl)₂\|(Si₂O₅)₅]·12H₂O |
| 170 | Naujakasit | Na₆(Fe²⁺,Mn)Al₄Si₈O₂₆ |
| 171 | Manganonaujakasit | Na₆(Mn²⁺,Fe²⁺)Al₄[Si₈O₂₆] |
| 172 | Spodiophyllit | (Na,K)₄(Mg,Fe²⁺)₃(Fe³⁺,Al)₂(Si₈O₂₄) |
| 173 | Sazhinit-(Ce) | Na₂CeSi₆O₁₄(OH)·nH₂O |
| 174 | Sazhinit-(La) | Na₃La[Si₆O₁₅]·2H₂O |
| 175 | Burckhardtit | Pb₂(Fe³⁺Te⁶⁺)[AlSi₃O₈]O₆ |
| 176 | Tuperssuatsiait | Na₂(Fe³⁺,Mn²⁺)₃Si₈O₂₀(OH)₂·4H₂O |
| 177 | Palygorskit | (Mg,Al)₂Si₄O₁₀(OH)·4H₂O |
| 178 | Yofortierit | Mn²⁺₅Si₈O₂₀(OH)₂·7H₂O |
| 179 | Sepiolith | Mg₄Si₆O₁₅(OH)₂·6H₂O |
| 180 | Falcondoit | (Ni,Mg)₄Si₆O₁₅(OH)₂·6H₂O |
| 181 | Loughlinit | Na₂Mg₃Si₆O₁₆·8H₂O |
| 182 | Kalifersit | (K,Na)₅Fe₇³⁺[(OH)_{3\|}Si₁₀O₂₅]₂·12H₂O |
| 183 | Minehillit | (K,Na)₂₋₃Ca₂₈(Zn₄Al₄Si₄₀)O₁₁₂(OH)₁₆ |
| 184 | Truscottit | (Ca,Mn)₁₄Si₂₄O₅₈(OH)₈·2H₂O |
| 185 | Orlymanit | Ca₄Mn₃²⁺Si₈O₂₀(OH)₆·2H₂O |
| 186 | Fedorit | (Na,K)₂₋₃(Ca,Na)₇[Si₄O₈(F,Cl,OH)2\|(Si₄O₁₀)₃]·3.5H₂O |
| 187 | Reyerit | (Na,K)₄Ca₁₄Si₂₂Al₂O₅₈(OH)₈·6H₂O |
| 188 | Gyrolith | NaCa₁₆Si₂₃AlO₆₀(OH)₈·14H₂O |
| 189 | Tungusit | Ca₁₄Fe₉²⁺[(OH)₂₂\|(Si₄O₁₀)₆] |
| 190 | Zeophyllit | Ca₄Si₃O₈(OH,F)₄·2H₂O |
| 191 | Armstrongit | CaZr(Si₆O₁₅)· 3 H₂O |
| 192 | Jagoit | Pb₁₈Fe³⁺₄[Si₄(Si,Fe³⁺)₆][Pb₄Si₁₆(Si,Fe)₄]O₈₂Cl₆ |
| 193 | Hyttsjöit | Pb₁₈Ba₂Ca₅Mn₂²⁺Fe₂³⁺[Cl\|(Si₁₅O₄₅)₂]·6H₂0 |
| 194 | Maricopait | Ca₂Pb₇(Si₃₆,Al₁₂)(O,OH)₉₉·n(H₂O,OH) |
| 195 | Cavansit | Ca(VO)Si₄O₁₀·4H₂O |
| 196 | Pentagonit | Ca(VO)Si₄O₁₀·4H₂O |
| 197 | Weeksit | (K,Ba)₂[(UO₂)₂\|Si₅O₁₃]·4H₂O |
| 198 | Coutinhoit | Th_{0.5}(UO₂)₂Si₅O₁₃·3H₂O |
| 199 | Haiweeit | Ca[(UO₂)₂\|Si₅O₁₂(OH)₂]·6H₂O |
| 200 | Metahaiweeit | Ca(UO₂)₂Si₆O₁₅·nH₂O |
| 201 | Monteregianit-(Y) | KNa₂YSi₈O₁₉·5H₂O |
| 202 | Mountainit | KNa₂Ca₂[Si₈O₁₉(OH)]·6H₂O |
| 203 | Rhodesit | KHCa₂Si₈O₁₉·5H₂O |
| 204 | Delhayelith | K₇Na₃Ca₅Al₂Si₁₄O₃₈F₄Cl₂ |
| 205 | Hydrodelhayelith | KCa₂AlSi₇O₁₇(OH)₂·6H₂O |
| 206 | Macdonaldit | BaCa₄Si₁₆O₃₆(OH)₂·10H₂O |
| 207 | Cymrit | Ba(Si,Al)₄(O,OH)₈·H₂O |
| 208 | Kampfit | Ba₁₂(Si₁₁Al₅)O₃₁(CO₃)₈Cl₅ |
| 209 | Lourenswalsit | (K,Ba)₂(Ti,Mg,Ca,Fe)₄(Si,Al,Fe)₆O₁₄(OH)₁₂ |
| 210 | Tienshanit | (Na,K)₉₋₁₀(Ca,Y)₂Ba₆(Mn²⁺,Fe²⁺,Ti⁴⁺,Zn)₆(Ti,Nb) [(O,F,OH)₁₁\|B₂O₄\|Si₆O₁₅]₆ |
| 211 | Wickenburgit | Pb₃CaAl[Si₁₀O₂₇]·3H₂O |
| 212 | Silhydrit | Si₃O₆·H₂O |
| 213 | Magadiit | Na₂Si₁₄O₂₉·11H₂O |
| 214 | Strätlingit | Ca₂Al[(OH)₆AlSiO₂(OH)₄]·2.5 H₂O |
| 215 | Vertumnit | Ca₄Al₄Si₄O₆(OH)₂₄·3H₂O |
| 216 | Zussmanit | K(Fe²⁺,Mg,Mn)₁₃(Si,Al)₁₈O₄₂(OH)₁₄ |
| 217 | Coombsit | K(Mn²⁺,Fe²⁺,Mg)₁₃[(OH)₇\|(Si,Al)₃O₃\|Si₆O₁₈]₂ |

vgl. Mineralienatlas, Mineralklasse VIII/H - Schichtsilikate (Phyllosilikate), Strunz 8 Systematik

Insbesondere wird Bentonit aus der Gruppe der Montmorillonite ((Na,Ca)_{0.3}(Al,Mg)₂Si₄O₁₀(OH)₂·nH₂O) verwendet. Bentonit ist eine Mischung aus verschiedenen Tonmineralien und enthält als wichtigsten Bestandteil Montmorillonit. Natrium-Bentonit kann ein Vielfaches seines eigenen Trockengewichtes an Wasser aufnehmen. Des Weiteren kann Calciumbentonit Fette und/oder Öle aufnehmen.

Die vorstehend beschriebenen Schichtsilikat-Mikro- und/oder -Nanopartikel sind funktionalisiert, nicht funktionalisiert, aggregiert, nicht aggregiert, agglomeriert, nicht agglomeriert, geträgert und/oder nicht geträgert. Beispielsweise können sie funktionalisiert, agglomeriert und geträgert sein. Sie können aber auch nicht funktionalisiert und aggregiert sein.

Sie können katalytisch wirken und/oder die Dehalogenierung unterstützen.

Das Mahlgut enthält mindestens ein, insbesondere ein, Fluid, mindestens eine, insbesondere eine, Lösung, mindestens eine, insbesondere eine, Suspension, mindestens eine, insbesondere eine, feinteilige, feste Mischung und/oder mindestens ein, insbesondere ein, reaktives Gas. Die genannten, vorstehend beschriebenen Materialien enthalten problembehaftete, synthetische, biogene und biologische Materialien, Phosphate, Metalle und/oder ihre Verbindungen und/oder Kohlendioxid und/oder Kohlenmonoxid.

Außerdem enthält das Mahlgut die vorstehend beschriebenen Kohlen und/oder Kohlenstofflieferanten.

Die mindestens eine, insbesondere eine, Suspension, die kann auch in Form einer Paste vorliegen, die mindestens eine, insbesondere eine, feinteilige feste Mischung und/oder deren Bestandteile enthalten. Ebenso kann man die Bestandteile der mindestens einen, insbesondere, einen festen feinteiligen Mischung getrennt voneinander bereitstellen.

Die mindestens eine, insbesondere eine, Suspension oder Paste kann eine kontinuierliche wässrige und/oder eine kontinuierliche organische flüssige Phase enthalten. Vorzugsweise wird eine wässrige Phase verwendet, die wassermischbare, protisch und/oder aprotisch polare organische Lösungsmittel enthalten kann. Insbesondere enthält die wässrige Phase keine organischen Lösungsmittel.

Als das mindestens eine, insbesondere eine, Fluid wird mindestens eines der vorstehend beschriebenen Lösemittel verwendet.

Als die mindestens eine, insbesondere eine, Lösung wird mindestens ein Lösemittel verwendet, in dem mindestens eines der vorstehend beschriebenen Materialien molekulardispers gelöst ist.

Das mindestens eine reaktive Gas kann als Gas, als kondensiertes Fluid und/oder als gefrorener Feststoff vorliegen.

In einem zweiten oder dritten Verfahrensschritt wird das Mahlgut kontinuierlich oder diskontinuierlich zu mindestens einer, insbesondere einer mechanischen Mühle hinzudosiert. Alternativ können die Bestandteile des Mahlguts nacheinander oder gleichzeitig kontinuierlich oder diskontinuierlich zu der mindestens einen, insbesondere einen, mechanischen Mühle hinzudosiert werden.

In einem vierten Verfahrensschritte wird das Mahlgut bei konstanter und/oder variabler Umdrehungsgeschwindigkeit mithilfe der vorstehend beschriebenen Mahlkörper, die mithilfe der vorstehend beschriebenen Agitationsmittel bewegt werden, fein vermahlen, wonach man in einem fünften Verfahrensschritt die mindestens eine, insbesondere eine, resultierende gemahlene Suspension mindestens eines pulverförmigen Produkts oder das mindestens eine, insbesondere eine, pulverförmige Produkt kontinuierlich oder diskontinuierlich in einem fünften Verfahrensschritt von den Mahlkörpern trennt und aus dem Mahlraum austrägt.

"Variable Umdrehungsgeschwindigkeit" bedeutet, dass die Umdrehungsgeschwindigkeit im Verlauf der Mahlung bis zu einem Grenzwert ansteigt oder von einem vorgewählten Wert absinkt oder mindestens einmal ansteigt und wieder absinkt.

Die gemahlenen Produkte können mindestens einer weiteren mechanischen Mühle oder einer Mühlenkaskade kontinuierlich oder diskontinuierlich hinzudosiert werden.

In einem sechsten Verfahrensschritt wird das mindestens eine, insbesondere eine, gemahlene, feinteilige feste Produkt aus der mindestens einen, insbesondere einen, gemahlenen Suspension abgetrennt, wodurch mindestens ein aufgeschlossenes, biologisch verfügbares, wasserlösliches Material, insbesondere mindestens ein Phosphat, in das flüssige, insbesondere wässrige, Medium vorzugsweise molekulardispers gelöst übergeht.

Alternativ wird das in dem mindestens einen fein verteilten, festen Produkt vorhandene oder noch vorhandene mindestens eine aufgeschlossene, biologisch verfügbare, wasserlösliche Material, insbesondere mindestens ein Phosphat, in dem mindestens einen Produkt bis zu dessen Weiterverwendung beispielsweise als Dünger belassen.

Des Weiteren wird das mindestens eine gewaschene, fein verteilte, feste Produkt aus Aktivkohle in den ersten Verfahrensschritt zurückführt und/oder anderweitig als Verkaufsprodukt verwendet.

Dabei kann das mindestens eine, insbesondere eine, feinteilige feste Produkt durch Auswaschen, Dekantieren, Destillation, Chromatographie, Extraktion, Magnetscheiden, Filtration, Sedimentation und/oder Zentrifugation ausgewaschen werden.

Das mindestens eine, insbesondere eine, feinteilige feste Produkt, das wie vorstehend beschrieben gewonnen wird, kann noch mindestens ein weiteres, insbesondere mindestens zwei weitere, in flüssigen, insbesondere wässrigen, Medien lösliche(s), biologisch verfügbare(s) Material(ien) enthalten, das oder die man aus dem mindestens einen, insbesondere einen, Produkt bis zu dessen Weiterverwendung belässt oder auswäscht. Vorzugsweise werden diese biologisch verfügbaren Materialien aus der Gruppe, bestehend aus Lithium- Natrium- und Kaliumsalzen sowie aus Magnesium- und Kalziumsalzen, insbesondere Sulfaten, ausgewählt.

Außerdem kann das mindestens eine, insbesondere eine, feste feinteilige Produkt mindestens ein immobilisiertes Metall, ausgewählt aus der Gruppe, bestehend aus Hauptgruppenelementen, Schwermetallen und radioaktiven Metallen sowie ihren Verbindungen enthalten. Die Hauptgruppenelemente sind insbesondere Beryllium, Arsen, Antimon, Wismut, Aluminium, Gallium, Germanium, Selen, Tellur, Thallium und Blei. Die Schwermetalle sind die Übergangsmetalle, insbesondere Edelmetalle wie Rhodium, Iridium, Palladium, Platin, Silber und Gold, und die Lanthanide. Die radioaktiven Metalle sind insbesondere die Actinide. Die Verbindungen sind die Oxide, Hydroxide, Säuren, Salze, Komplexe oder metallorganischen Verbindungen dieser Elemente und Metalle.

Dabei ist es ein besonderer Vorteil des erfindungsgemäßen Verfahrens, dass giftige und/oder karzinogene Metallverbindungen wie zum Beispiel Chromate oder Dichromate im Verlauf des erfindungsgemäßen Verfahrens beispielsweise zu Chrom(III) oderzu den nullwertigen Metallen wie zum Beispiel Chrom (0) reduziert und dadurch entgiftet und immobilisiert werden.

Bei mindestens einem, insbesondere einem, ausgewaschenen, festen feinteiligen Produkt handelt es sich um das Wertprodukt Aktivkohle, das in den ersten Verfahrensschritt zurückgeführt werden kann. Dies ist ein besonderer Vorteil des erfindungsgemäßen mechanochemischen Verfahrens, weil man hierdurch die Bereitstellung teurer frischer Aktivkohle minimieren kann.

Außerdem kann es sich bei dem mindestens einen nicht ausgewaschenen, festen feinteiligen Produkt um ein wertvolles phosphathaltiges Düngemittel handeln.

Des Weiteren kann es sich bei dem mindestens einen immobilisierten Metall und/oder der mindestens einen immobilisierten Metallverbindung um mindestens ein sicher lagerfähiges oder deponiefähiges Material oder um mindestens einen heterogenen Katalysator handeln.

Wenn das mindestens eine immobilisierte Metall mindestens eines der vorstehend genannten Edelmetalle ist, kann es in einfacher Weise wiedergewonnen werden, indem die Aktivkohle verbrannt wird.

In einer weiteren besonders bevorzugten Ausführungsform des erfindungsgemäßen mechanochemischen Verfahrens beträgt in dem Mahlgut das Gewichtsverhältnis der Fluide, der Lösungen, der Suspensionen, der feinteiligen festen Mischungen und/oder der Gase oder der der genannten Materialien plus mindestens einem Zusatzstoff zu reiner, feinteiliger, mineralischer Kohle, Biokohle oder Aktivkohle, kontaminierter, feinteiliger, mineralischer Kohle, Biokohle oder Aktivkohle, feinteiliger Braunkohle oder reiner oder kontaminierter, feinteiliger Kohlenstofflieferanten sowie aus den vorstehend genannten, angefeuchteten Materialien 0,01 bis 10¹², bevorzugt 0,1 bis 10⁸, besonders bevorzugt 1,0 bis 10⁶ und insbesondere 1,0 bis 10⁴.

Es ist ein ganz wesentlicher Vorteil des erfindungsgemäßen mechanochemischen Verfahrens ist, dass es der Reduzierung oder Eliminierung von Ammoniak, Ammoniumsalzen, Nitraten, Nitriten und Nitrosaminen und/oder der gleichzeitigen Erzeugung von biologisch verfügbaren Phosphaten und Aktivkohlen dient. Hierzu wird das erfindungsgemäße mechanochemische Verfahren insbesondere mit getrockneter Gülle, Jauche, Gärresten, Trockenfermenten, Klärschlämmen, Fermenten, Bioabfall, pflanzlichem Abfall, tierischem Abfall, trockenen Konzentraten der biologischen Reinigungsstufen von Kläranlagen, chemischen Wäschern und Filtern, Abwässern und Resten der Abluftbehandlung durchgeführt.

Dabei zeigt sich der besondere Vorteil des erfindungsgemäßen mechanochemischen Verfahrens, dass nämlich die Stickstoffverbindungen allesamt in elementaren Stickstoff überführt werden, ohne dass NOx oder Lachgas entstehen. Die Eliminierung geht sehr rasch vonstatten, sodass das erfindungsgemäße mechanochemische Verfahren bereits nach vergleichsweise kurzer Zeit, beispielsweise nach 100 Minuten, beendet werden kann.

Insbesondere wird das erfindungsgemäße mechanochemische Verfahren im Rahmen mindestens einer vierten Reinigungsstufe von Kläranlagen durchgeführt.

Das erfindungsgemäße Verfahren kann aber noch sehr viel breiter angewandt werden, wie die folgenden Beispiele belegen.

### Die Aufarbeitung der Gülle, Biomasse aus Biogasanalgen, Jauche und Klärschlamm in den mechanischen Mühlen mithilfe von Aktivkohle

Wissenschaftliche Untersuchungen zeigen, dass Aktivkohle die folgenden Stoffe gut bis sehr gut aufnimmt:
- Partikel bzw. Schwebstoffe, die größer als die Poren des Filters sind, wie Fasern, Schwebstoffe.
- Bakterien und Parasiten, die größer als die Poren des Filters sind.
- Chlor und Chlorverbindungen.
- Organische Verbindungen (chemische Verbindungen, die auf Kohlenstoff basieren), beispielsweise Pestizide und Pestizidrückstände, Herbizide, Insektizide, Medikamentenrückstände, Hormone und hormonähnliche Substanzen.
- Bestimmte Schwermetalle wie Blei und Kupfer, Selen, Cadmium, Spurenelemente aus den Biogasanlagen, Uran als Begleitstoff vom Phosphat.
- Ozon, Superoxid, Oxidationsmittel.

Zu den Stoffen, die Aktivkohle-Blockfilter nicht oder kaum aufnehmen können, zählen:
- Organische und anorganische Partikel bzw. Schwebstoffe, die kleiner als die Poren des Filters sind.
- Gelöste Salze: natürliche Mineralien wie Calcium- und Magnesiumionen, Nitrat, Nitrit, Ammonium usw.

Gülle, Biomasse, Jauche, Klärschlamm enthalten in verschiedenen Konzentrationen:
- Wasser.
- Wasserlösliche Kationen: Kalium, Natrium, Calcum, Magnesium.
- Wasserlösliche Ionen: Chlorid, Nitrat, Nitrit, Phosphat, Sulfat, Ammonium.
- Gelöste Gase; Ammoniak, Schwefelwasserstoff, Methan, Kohlendioxid, Kohlenmonoxid.
- Organische Verbindungen: Huminsäuren, Pestizide, Medikamente und Rückstände, Hormone, PAKs, Amide, Proteine.
- Feste Bestandteile: Schwebstoffe, Partikel, Fasern, Sand.
- Chlor- und Chlorverbindungen aus Reinigungsmitteln und Fremdeintrag.
- Bakterien, Krypotosporidien, Giardienen.

Es gibt unterschiedliche Verfahren zur Aufarbeitung von Gülle:

### - Separation mit Pressschnecken

Pressschnecken haben einen mittleren Energiebedarf. In ihnen wird die Gülle mit einer Schnecke gegen ein umliegendes Sieb gepresst. Die dünne Phase geht durch das Sieb, die feste Phase wird gegen einen mechanischen Widerstand herausgedrückt. Mit der Veränderung des Widerstandes - beispielsweise der Öffnungsfläche - kann der Abscheidegrad beeinflusst werden. Pressschnecken können aus der Rohgülle Ach
25 Prozent des Gewichts,
50 Prozent der Trockenmasse,
30 Prozent des Stickstoffs und
bis zu 40 Prozent des Phosphats.
separieren.

### - Separation mit Zentrifugen

Zentrifugen haben einen höheren Energiebedarf, trennen aber mehr Phosphat ab. In einer sich schnell drehenden Trommel werden feste und flüssige Phase getrennt. Bei dieser Technik kommen nicht nur Faserstoffe wie bei Pressschnecken, sondern auch Feinstoffe mit in die feste Phase. Damit erfolgt eine Nährstoffanreicherung in dieser Phase. Zentrifugen separieren:
15 Prozent des Gewichts,
60 Prozent der Trockenmasse,
20 Prozent des Stickstoffs und
bis zu 70 Prozent des Phosphats.

### - Mehrstufige Gülleseparatoren

Mehrstufige Separatoren mit zwei Zentrifugen sind nicht nur sehr teuer, sie haben auch einen extrem hohen Energieverbrauch. Dafür extrahieren sie:
30 Prozent des Gewichts,
90 Prozent der Trockenmasse,
50 Prozent des Stickstoffs und
bis zu 95 Prozent des Phosphats.

### - Mobile Gülleseparatoren

Neben fest installierten Separatoren sind verschiedene mobile Varianten erhältlich. Per Gabelstabler, auf Pkw- oder Schwerlast-Anhängern oder auf Lkw können diese Geräte flexibel zu verschiedenen Standorten gebracht werden. Damit können auch die geringeren Güllemengen kleinerer Betriebe beispielsweise von Lohnunternehmen mit gut ausgelasteter Technik behandelt werden.

### - Die mechanochemische Aufarbeitung

Die festen Phasen können je nach Nährstoffbilanz, weiterverwertet oder mechanochemisch aufgearbeitet werden. Die mechanochemische Aufarbeitung verfolgt die die folgenden Ziele:
- Nitrate und Ammonium, die als Stickstoff hier ausgewiesen sind, gemeinsam mit organischem Stickstoff zu Luftstickstoff umzuwandeln.
- Dabei bleibt das Phosophat wasserlöslich oder wird hierzu wieder zurückgeführt und damit bioverfügbar gemacht.
- Trockenmasse, die aus Cellulose, Hemizellulose, Lignin, Huminsäure, Proteine, Amine, Geweberesten, Bakterien, Schlämmen, Fasern und dara gebundene PAKs, bestehen werden zu Kohle verarbeitet oder je nach Laufzeit mechanischen Mühle zuvor in kurzkettige Biomolküle umgewandelt. Diese haben einen Nährwert für Pilze, Bakterien, und Tiere. Man kann das Material in die Biogasnalagen geben, um die Nährstoffe zu Methan umwandeln. In Kombination, dabei ist zugleich der Stickstoffgehalt reduziert worden.

### - Die Aktivkohleklärung

Bei einem Aktivkohle-Blockfilter ergänzen sich drei unterschiedliche Prinzipien in ihrer Wirkung:

### - Die mechanische Wirkung der Aktivkohle

Die Aktivkohle hält wie ein Sieb alle Partikel zurück, die größer als ihre Poren sind. Diese mechanische Wirkung filtert beispielsweise Bakterien, Kryptosporidien (einzellige Parasiten), Giardien (Dünndarm-Parasiten), Schwebeteilchen und Sand, Rostpartikel, Asbestfasern, usw. Um noch feinere und zuverlässigere Partikelfilterung zu erreichen, als es mit reinen Aktivkohlefiltern möglich wäre, nutzen manche Filtereinsätze zusätzlich eine zweite Filterstufe in Form einer Hohlfaser-Membran. Auch

### - Die katalytische Wirkung

Bestimmte Stoffe, die kleiner als die Poren des Filters sind, kann die Aktivkohle mit ihrer katalytischen Wirkung umwandeln. Diese Stoffe liegen anschließend nicht mehr in ihrer ursprünglichen Form vor. Durch die katalytische Wirkung wird zum Beispiel der unangenehme Geschmack von gechlortem Wasser beseitigt. Aktivkohle ist hinsichtlich der katalytischen Wirkung sehr leistungsfähig, da sie sich dabei nur wenig verbraucht. Mit der katalytischen Wirkung werden dem Wasser beispielsweise entnommen: Chlor CKWs und FCKWs.

### - Die adsorptive Wirkung

Bestimmte Stoffe, die kleiner als die Poren des Filters sind, kann die Aktivkohle mit ihrer adsorptiven Wirkung aufnehmen. Bei der Adsorption lagern sich die Stoffe an der Aktivkohle an und bleiben haften. Die Kräfte, die diese Anhaftung verursachen sind keine chemischen Bindungen, sondern "Van-der-Waals-Kräfte", die ähnlich wie Magnetkräfte auf verschiedene Stoffe wirken.

Aktivkohle hat die größte Adsorptionskraft aller bekannten Stoffe und eignet sich deshalb besonders gut als Filtermedium.

"Van-der-Waals-Kräfte" sind zwar sehr stark, wirken allerdings nur bei sehr geringem Abstand. Maßgeblich für die adsorptive Wirkung ist deshalb die Nähe zur Kontaktfläche, sowie die Geschwindigkeit, mit der das Wasser daran vorbeifließt. Je feiner ein Aktivkohlefilter ist und je langsamer das Wasser durch ihn hindurchfließt, umso besser ist die adsorptive Filterung. Hier kommt ein Vorteil von besondern kleiner Aktivkohle zum Tragen, denn diese besitzt vergleichsweise besonders feine Poren und bremsen den Wasserdurchfluss.

Mit seiner adsorptiven Wirkung kann ein Aktivkohlefilter organische Stoffe und anorganische Stoffe binden, die im Wasser für den menschlichen Genuss unerwünscht sind, wie zum Beispiel Blei, Kupfer, Pestizide, Herbizide, Fungizide, Hormonrückstände, Medikamentenrückstände sowie geruchs- und geschmacksstörende Stoffe.

### - Die mechanochemische Aufarbeitung der beladenen Aktivkohle

Die Aktivkohle wird abgepresst kurz vorgetrocknet und dann mit einer mechanischen Mühle mechanochemisch bearbeitet und recycelt werden, sodass sie im Kreislauf geführt werden kann. Das abgetrennte Wasser kann ebenfalls wiederverwendet werden. Die mechanochemische Aufarbeitung hat zum Ziel:
- Nitrate und Ammonium gemeinsam mit organischem Stickstoff zu Luftstickstoff umzuwandeln.
- Kleine Partikel mit Phosophat, die wasserunlöslich und damit nicht pfanzenverfügbar sind wieder bioverfügbar zu machen.
- Trockenmasse, die aus Cellulose, Hemizellulose, Lignin, Huminsäure, Proteine, Amine, Geweberesten, Bakterien, Schlämmen, Fasern und, PAKs bestehen, wieder zu Kohle zu verarbeiten oder je nach Laufzeit der mechanischen Mühle zuvor in kurzkettige Biomolküle umzuwandeln. Diese haben einen Nährwert für Pilze, Bakterien, und Tiere. Mit Vorteil kann man das Material in die Biogasnalagen geben um die Nährstoffe zu Methan umwandeln. In Kombination, wird dabei zugleich der Stickstoffgehalt reduziert.
- Schwermetalle zu binden und in der Aktivkohle für Biomassenanlagen als Hilfsstoffe wieder einzusetzen. So gelangen sie nicht auf den Acker oder in die Natur. Insbesondere gelangen Schwermetalle wie Uran, Cadmium, Blei, Kupfer und Cobalt gelangen nicht mehr in die Natur.
- Herbizide, Fungizide, Hormonrückstände und Medikamentenrückstände werden zu Kohle abgebaut.
- Chlor, CKWs, FCKWs, PCBs und Dioxine werden zu ungiftigen Chloriden und Kohle umgewandelt.
- Das Wasser, das nach der Aktivkohlefilterung übrig ist, kann mit üblichen Entsalzungsanalgen in sauberes Wasser und Nährstoffe getrennt werden.
- Die Aktivkohle kann immer recycelt werden.

### - Die Mechanochemie in der Entsalzung von Wasser

In allen Fällen ist das entsalzte Wasser für eine unmittelbare Verwendung als Trinkwasser nicht geeignet. Zudem sind derartige salzarme Wässer für Eisenwerkstoffe korrosiv, da keine Kalk-Rost-Schutzschicht gebildet werden kann. Durch nachträglichen Zusatz von Calciumhydrogencarbonat wird deshalb der Gehalt an Carbonathärte im Wasser wieder erhöht. Das Calciumhydrogencarbonat wird durch eine Reaktion von Calciumhydroxid (Kalkmilch) mit Kohlendioxid (CO2) hergestellt.

Im folgenden Abschnitt sind die üblichen Verfahren in der Reihenfolge ihrer wirtschaftlichen Bedeutung aufgelistet. Das Verfahren der mehrstufigen Entspannungsverdampfung (MSF) besitzt die größte Verbreitung und wird im großindustriellen Maßstab eingesetzt. Neben diesen Verfahren kommen in kleinerem Maße teilweise auch Verfahren der solaren Meerwasserentsalzung zum Einsatz.

### - Die mehrstufige Entspannungsverdampfung

Hierbei handelt es sich um ein thermisches Verfahren mit der Abkürzung "MSF" (Multi Stage Flash Evaporation). Es ist das am häufigsten eingesetzte Verfahren zur Meerwasserentsalzung. Vorläufer war die Multi-Effekt-Destillation.

Bei diesem Verfahren wird das zugeführte salzhaltige Wasser mit der Abwärme eines kalorischen Kraftwerks, in seltenen Fällen auch eines Kernkraftwerks, auf eine Temperatur von 115 °C erwärmt. Das im sogenannten Brine-Heater aufgeheizte Salzwasser verdampft in nachgeschalteten Entspannungsstufen unter Vakuum. Der Wasserdampf schlägt sich als Kondensat innerhalb dieser Stufen an mit Kühlflüssigkeit gefüllten Rohrleitungen nieder und wird als salzfreies Wasser abgezogen. Das durch den Verdampfungsprozess immer stärker mit Salz angereicherte Wasser wird auch Brine (Salzlake) genannt und in einem nachgeschalteten Wärmeübertrager auf die Kondensationstemperatur (ca. 40 °C) des Dampfes des zugeführten Frischwassers abgekühlt. Es dient dann anschließend in den Rohrleitungen als Kühlflüssigkeit. Die Rohrleitungen selbst werden kontinuierlich mit Schwammgummikugeln von auskristallisierendem Salz gereinigt. Zuletzt wird dem Brine frisches Salzwasser zugeführt und das Gemisch erneut durch die Abwärme der Gasturbine aufgeheizt. Der gesamte Vorgang stellt also einen geschlossenen Kreislauf dar. Der Überschuss des sich im Kreislauf konzentrierenden Salzes wird wieder ins Meer zurückgeführt.

Großanlagen, wie die Kraftwerks- und Meerwasserentsalzungsanlage Dschabal Ali, die weltweit größte Meerwasserentsalzungsanlage, entsalzt täglich 2,135 Millionen Kubikmeter Meerwasser. Üblicherweise werden mit dem Verfahren täglich bis zu 500.000 Kubikmeter Trinkwasser aus dem Meerwasser gewonnen. Ähnliche Mengen werden auch von den in der Region vorhandenen Ölkraftwerken erzeugt. Der Energieverbrauch beträgt 23-27 kWh/m3.

### - Die Umkehrosmose

Bei der Umkehrosmose wird die Lösung zur Überwindung des osmotischen Druckes unter hohem Druck durch eine semipermeable Membran aus Polyamid, PTFE oder sulfonierten Copolymeren mit einem Porendurchmesser von 0,5 bis 5 nm gepresst. Diese wirkt wie ein Filter und lässt nur bestimmte Ionen und Moleküle durch. Somit erhält man eine Auftrennung der ursprünglichen Lösung. Durch den Membranfilter lassen sich Salze, Bakterien, Viren, ein Überangebot an Kalk und Gifte wie Schwermetalle zurückhalten.

Der osmotische Druck steigt mit zunehmender Salzkonzentration, der Prozess würde somit irgendwann zum Stehen kommen. Um dem entgegenzuwirken, wird das Konzentrat abgeführt. Da das Auskristallisieren des Salzes oder der Mineralien (Präzipitation) in den Membranen verhindert werden muss, ist die Benutzung der Umkehrosmose nur bis zu einer gewissen Maximalkonzentration des Rückflusses sinnvoll. Je nach Salzkonzentration muss aufgrund des hohen Drucks auch in optimalen Anlagen mit einem Energieaufwand zwischen 2 und 4 kWh pro Kubikmeter Trinkwasser gerechnet werden.

Die Membranen einer Umkehrosmoseanlage sind nicht wartungsfrei. Belagsbildung, hervorgerufen durch mineralische Ablagerungen (Scaling), biologische Stoffe (Biofouling) oder kolloidale Partikel, vermindert die Permaeation der Wassermoleküle durch die Membranen. Um dem entgegenzuwirken, ist eine Spülung der Membranen mit chemischen Reinigern nötig. Gängig sind Verkrustungshemmer wie Polyphosphorsäure und Polymaleinsäure sowie Biozide und Chlor gegen Bakterienbeläge. Diese Reinigungsmittel bzw. Spülwässer sind nicht umweltverträglich und müssen separiert oder vor Rückführung ins Meer behandelt werden.

Die Trinkwasseraufbereitungsanlagen können je nach Art der Wasserverunreinigung mit weiteren Vorfiltern ausgestattet werden. Grobstoffe können so bis zu einer Partikelgröße von 20 Mikrometern abgetrennt werden. Ein zusätzlicher Aktivkohlefilter scheidet organische Stoffe wie Pflanzenschutzmittel ab. Auch kann eine UV-Bestrahlung nachgeschaltet werden, was eine zusätzliche Sicherheitsstufe gegen Keime darstellt. Eine nach diesem Wirkungsprinzip arbeitende Anlage ist die Meerwasserentsalzungsanlage Mossel Bay in Südafrika.

Auf jeder Stufe der Umkehrosmose wird mit der mechanochemische Aufarbeitung mit Aktivkohle eine Lösung angeboten, die besser ist als die Umkehrosmose:
- Vor der Mikrofiltration wird die Aktivkohle als Vorstufe zur Mikrofiltration genutzt, um die Membran vor Schmutz und Partikeln zu schützen. Dadurch werden die Verkrustung und Verstopfung reduziert.
- Auf der Ultrafiltrationsstufe werden übliche Makromoleküle zurückgehalten. Durch die Aktivkohle ist das zum Großteil jedoch schon geschehen, so dass die Ultrafiltrationsmembran eine Guard Membran ist, die weniger verstopft und viel länger haltbar ist. Das gilt insbesondere für Cellulose, Hemicellulose, Ligning, Huminsäuren, Proteine und Metaboliten.
- Die Nanofiltration hält dissoziierte Salze, divalente und höhervalente Salze, Kationen und Anionen wie Sulfate Phosphate und Erdalkalimetalle sowie Zucker zurück. Besonders wichtig ist, dass man hier Phosphate trennen und gemeinsam mit Erdalkalimetallen sauber aufarbeiten kann.
- In der Reversen Osmose werden dann monovalente und undissoziierte Salze zurückgehalten. Dabei entsteht ein hoch angereicherte Lösung und Suspension, die viel Ammonium und Nitrat sowie Chloride, Bromide und Alkalimetallkationen enthält. Diese Salze kann man separat eindicken oder als Düngerkonzentrat verkaufen oder, falls ein Überangebot hieran vorhanden ist, einfach nach dem Eintrocknen mechanochemisch in Luftstickstoff umwandeln. Hierdurch würde dann die Konzentration an Kationen, die nicht zerstört werden, wie zum Beispiel Kalium in der mechanischen Mühle angereichert werden.

Die Aktivkohle als Vorfilter wird nach der Trockung mechanochemisch recycelt.

### - Die Membrandestillation

Bei dem Verfahren der Membrandestillation wird eine mikroporöse Membran eingesetzt, die nur Wasserdampf durchlässt, flüssiges Wasser jedoch zurückhält. Auf der einen Seite der Membran befindet sich warmes Salzwasser und auf der anderen Seite eine kältere Fläche. Durch den Gegenstrombetrieb der Anlage wird erreicht, dass auf ganzer Länge der Membran eine Temperaturdifferenz besteht. Die dadurch entstehende Differenz des Wasserdampfpartialdrucks bewirkt, dass Wassermoleküle von der warmen auf die kalte Seite der Membran gelangen.

### - Versuchstechniken

Im folgenden Abschnitt sind verschiedene Versuchsverfahren zur Entsalzung angeführt, welche teilweise auch in kleineren Anlagen im Einsatz sind.

### - Evaporationsschläuche aus Kunststoff

Das französische Forschungszentrum CEA/GRETH hat im Rahmen eines europäischen CRAFT-Projektes eine Meerwasserentsalzungsanlage entwickelt, in der die Metallbauteile weitgehend durch Polymere ersetzt wurden. Dies hat den Vorteil, dass Kunststoffe wesentlich weniger korrodieren und damit beständiger als Metalle sind. Durch den Einsatz von Kunststoff kann der Prozess unter Normalbedingungen bei 100 °C und 1 bar ablaufen. Der Apparat erreicht eine Trinkwasserproduktionsleistung von 100 l/h. Da das Wasser auf 100 °C erhitzt wird, ist es weitgehend steril und enthält nur noch geringe Mengen an Salz.

### - Gefrierverfahren

Durch Abkühlen von Salzwasser bilden sich Eiskristalle, die frei von Salzen sind. Die technischen Schwierigkeiten bestehen jedoch im Wesentlichen in der Abtrennung der Eiskristalle von der Mutterlauge. Die Eiskristalle müssen von der Mutterlauge gewaschen werden. Dabei besteht wiederum ein erheblicher Bedarf an Süßwasser, der dieses Verfahren in der Praxis hat scheitern lassen.

### - Elektrodialyse

Die Elektrodialyse ist nur bei sehr niedrigen Salzgehalten wirtschaftlich. Die Energiekosten stehen in einem linearen Verhältnis zum Salzgehalt. Das Verfahren lohnt sich daher oft nur für Brackwasser.

### - lonenkraft

Salzwasser wird in vier Becken geleitet. In Becken 1 wird die Salzkonzentration (z. B. durch solares Verdunsten) erhöht. Die entstandene konzentrierte Sole in Becken 1 wird über selektive Polystyrolmembranen, die zum Becken 2 hin Na+-Ionen und zum Becken 3 CI--Ionen blockieren, verbunden, wodurch in den Becken 1 und 2 ein Na+- bzw. CI--Ionenüberschuss entsteht. Diese beiden Becken werden mit dem vierten Becken über Membranen verbunden. Aus diesem vierten Becken diffundieren die Ionen zum lonenausgleich in Becken 2 und 3. Das Wasser in Becken 4 wird somit NaCl-frei. Müssen noch andere Salze entfernt werden, sind noch andere Ionenfilter zu verwenden. In Kanada wurde eine Pilotanlage mit Umwelt-Fördergeldern gebaut. Der Siemens-Konzern betreibt eine Pilotanlage in Singapur.

Der Vorteil ist der geringe Energieverbrauch, sofern die Verdunstung in Becken 1 durch die Sonne erfolgt. Der Mineralgehalt bleibt mit Ausnahme von Natrium und Chlorid erhalten, sodass für eine Trinkwassernutzung keine anderen Mineralien zugesetzt werden müssen. Für andere Zwecke sind zusätzliche lonenfilter erforderlich.

### - Die Bio-Brennstoffzelle

An Bio-Brennstoffzellen zur Entsalzung schwach salzhaltiger Gewässer wird unter anderem an der University of Queensland, der Tsinghua-Universität und dem Oak Ridge National Laboratory, USA geforscht. Ein praktischer Einsatz wird auch für Brackwasser erwogen.

### - Die mechanochemische Aufarbeitung bei der Entsalzung von Wasser

Die Salze enthalten Alkalikationen, Erdalkalikationen, Kationen wie Ammonium, Anionen wie Chlorid und Bromid sowie Fluorid, Stickstoffanionen wie Nitrit und Nitrat, Phosphate und Reste von Schwermetallen. Die mechanochemische Aufarbeitung hat die Ziele
- Reste von Schwermetallen an Aktivkohle zu immobilisieren.
- In der eingedickten Masse, die alle oben genannten Kationen und Anionen enthält, Ammonium, Nitrat und Nitrit teilweise oder vollständig in Luftstickstoff umzuwandeln. Damit erhält man einen Dünger, der viel Kalium und Phosphat aber wenig oder kein Stickstoff enthält.
- Wenn keine Nachfrage für reines Ammonium und Nitrat als Dünger vorhanden ist, besteht die Möglichkeit diese Substanzen preisgünstig vor Ort in Luftstickstoff umzuwandeln,
- Für spezifische Ausführungen siehe auch die Erläuterungen zur Umkehrosmose.

### Die Entgiftung karzinogener Verbindungen

- Bekanntermaßen sind die Verbindungen des sechswertigen Chroms wie Kaliumdichromat karzinogen. Mithilfe des erfindungsgemäßen mechanochemischen Verfahrens gelingt es, dass sechswertige Chrom zu dreiwertigem Chrom und in manchen Fällen zu metallischem Chrom zu reduzieren. Chrom ist dann in diesen Oxidationsstufen nicht mehr Karzinogen.

### Die Aufarbeitung von Nitrat und Ammonium aus dem Grund- und Trinkwasser mit Aktikkohle

- Wegen der niedrigeren Konzentration kann mit Aktivkohle gearbeitet werden, um Nitrat zu binden,
- Funktionalisierte Aktivkohle kann auch mit CaCl₂, Eisen wie metallisches Eisen und Fe(III), magnetischen Eisenpartikel, Kupfer, Palladium, Zinn, Indium, sowie weiteren Metallen.
- Die Vorteile der mechanochemischen Aufarbeitung
- Bei der mechanochemischen Aufarbeitung kommt es zu einer Zerkleinerung der Teilchen, wodurch Nanoeffekte hinzukommen.
- In der Nutzung als Filter kann Eisen ausgeschwemmt werden, wenn es jedoch noch vorhanden ist, kann es durch Reduktion reaktiviert werden.
- Gleiches gilt für Nanopartikel und Verbindungen von Kupfer, Palladium etc.. Diese können weiter zerkleinert und gemeinsam mit der Kohle wiedergewonnen werden.
- Hierdurch hat man eine Möglichkeit, auch bei nicht funktionisierter Aktivkohle das gebundene Nitrat in Stickstoff und Aktivkohle umzuwandeln.
- Gleiches gilt Des Weiteren für viele aktivierte und funktionalisierte Aktivkohlen, die dann wieder reaktiviert werden können, wobei zugleich das Nitrat abgebaut wird.
- Man kann in dieser Weise die Aktivkohle mechanochemisch neu funktionalisieren oder nachfunktionalisieren oder auffrischen und erneut verwenden.

### Die mechanochemische Spaltung von Kohlendioxid und Kohlenmonoxid in Sauerstoff und Kohlenstoffallotrope

Ausgangspunkt ist die Bindung von Kohlendioxid oder Kohlenmonoxid an Aktivkohle oder mikroporöse Materialien wie Zeolithe in Kombination mit Aktivkohle und die anschließende mechanochemische Umwandlung von Kohlendioxid in Kohlenstoffen Sauerstoff. Damit ist das Ziel einer preiswerten Kohlendioxidsenke, die permanent und grosstechnisch umsetzbar ist und mobil sein kann, überall erreichbar. Der Effekt kann verstärkt werden, wenn Basen zur Bindung zur Verfügung stehen wie Ammoniak oder Alkalilaugen. Es handelt sich dann um eine Chemisorption. Auch können die Salze des Kohlendioxids wie Natriumcarbonat oder andere Salze, die aus der Abscheidung von Kohlendioxid resultierenden, abgebaut werden. Die Adsorption von Kohlendioxid kann durch OH Gruppen in der Kohle und durch eine gewisse Restfeuchte, die damit einhergehen kann, verstärkt werden. Als vorteilhaft hat sich auch eine teilpyrolisierte Aktivkohle oder Kohle erwiesen, da diese mehr OH-Gruppen besitzt und daher Kohlendioxid einfacher binden. Als Katalysatoren können tribochemische Katalysatoren eingesetzt werden wie Glas, Quarz oder Gestein, reduzierende Katalysatoren, oxidierdene Katalysatoren, Mischkatalysatoren oder Metallkatalysatoren, wie sie vorstehend aufgeführt sind.

Besondere Ausführungsformen sind die Kohlendioxidumsetzung mit einer Membran, in Tieftemperatursystemen mit dem Einkondensieren von Kohlendioxid, mit dem Einbringen von Trockeneis oder mit der Tieftemperaturabscheidung von Kohlendioxid, mit Metallkatalysatoren und Metalllegierungen mit Kohlenstoff, mit Organometallkatalysatoren oder mit homogenen Katalysatoren.

Bei der Umsetzung von Kohlendioxid mit einer Membran wird eine gaspermeable Membran verwendet, die für Sauerstoff durchlässig ist und für Kohlendioxid undurchlässig ist. Durch die Absaugung des Sauerstoffs kann das Gleichgewicht verschoben werden, sodass eine permanente Umsetzung erfolgt. AIRCO bietet eine Membran an, die beim Durchströmen von Hohlraumfasern durch die verschiedenen Diffusionsgeschwindigkeiten die Stoffe trennt.

Bei dem Tieftemperatursystem mit der Einkondensation von Kohlendioxid wird Kohlendioxid in den Reaktor bei -78,5 °C in kondensiert. Dabei wird der Reaktor auf Temperaturen unterhalb des Sublimationspunkts des Kohlendioxids von -78,5 C gekühlt. Hierdurch sind die Mengen an Kohlendioxid im Mahlraum höher als allein durch die Adsorption an der Kohle. Die Kühlung des Reaktors kann zum Beispiel über einen doppelwandingen Reaktor erfolgen, der gekühlt mit flüssigem Stickstoff oder Helium gekühlt wird. Die Kühlflüssigkeit kann mit einer Drosselentspannung wie bei einem Kühlschrank kombiniert sein. Auch können thermoelektrisch Elemente oder Peltier-Elemente eingesetzt werden. Der Sauerstoff bleibt gasförmig, da er erst bei -183 C flüssig wird.

Das Trockeneis wird in Stücken oder als Slush, gegebenenfalls mit Kohle versetzt, eingebracht. Oder aber die Kohle liegen bereits im Mahlraum vor. Das Trockeneis kann auch allein in Mahlraum vorliegen und sich im Verlauf des Mahlens in Kohle umwandeln. Bevorzugt ist jedoch die Gegenwart von Aktivkohle, da sie die Umsetzung beschleunigt.

Bei der Tieftemperaturabscheidung von Kohlendioxid enthält der Mahlraum einen Kühlfinger der vorzugsweise als Klopffinger oder Abscheider konstruiert ist und an dem sich Kohlendioxid bei - 78,5 C abscheidet. Alternativ kann der Mahlraum mit einem entsprechenden separaten System kombiniert sein. Der Sauerstoff bleibt in der Gasphase und kann abgepumpt oder durch Membranen abgetrennt werden.

In gleicher Weise kann Kohlenmonoxid in die Elemente gespalten werden. Somit steht das erfindungsgemäße Verfahren auch für die Eliminierung dieses toxischen Gases zur Verfügung.

Bei einer weiteren Ausführungsform des erfindungsgemäßen mechanochemischen Verfahrens wird das Kohlendioxid und das Kohlenmonoxid nicht nur mit Aktivkohle vermahlen, sondern mit jeglichen Biomassen und/oder kohlenstoffliefernden Materialien. So kann man beispielsweise komprimiertes gasförmiges Kohlendioxid zusammen mit dem Abgas von Biogasanlagen in die Biomassen einpressen und das resultierende Mahlgut mechanochemisch zu Aktivkohle umsetzen.

Dadurch kann man auch den Methanschlupf bei Biogasanlagen und generell bei anderen mit Methan und/oder mit Erdgas betriebenen Anlagen wie Gasmotoren wirksam eliminieren, weil die Schlupfgase in Kohlenstoff umgewandelt werden und nicht mehr in die Atmosphäre gelangen, wo sie als besonders starke Treibhausgase wirken würden. So kann auch die Emission von Treibhausgasen durch das erfindungsgemäße mechanochemische Verfahren wirksam verhindert werden.

Die Bindung von Noxen wie Ammoniak, Amine, Feinstaub, Ultrafeinstaub, Quecksilber, Kohlendioxid, Kohlenmonoxid, Schwefelwasserstoff und andere Schwefelverbindungen aus der Luft von Ställen, Kläranlagen, Biogasanlagen und geschlossenen Abfalldeponien u.a. an Aktivkohle wird durch eine geeignete Imprägnierung der Aktivkohle, die ihre Adsorptionskapazität signifikant steigert, verbessert sodass sie mit Vorteil zur wirtschaftlichen Entfernung schlecht absorbierbarer Verunreinigungen in Gasen verwendet werden kann. Die Noxen werden dann nicht mehr ausschließlich durch die Adsorption, sondern zusätzlich durch Chemiesorption oder katalytisch gebunden. Die Aktivkohlen sind insbesondere mit Kaliumiodid, Kaliumcarbonat, Phosphorsäure, Natronlauge, Kalilauge, Schwefel, Schwefelsäure und Silber funktionalisiert und gleichmäßig und homogen imprägniert.

Die mit Noxen beladene Aktivkohle kann dann mithilfe des erfindungsgemäßen mechanochemischen Verfahrens recycelt und reaktiviert werden.

Eine weitere vorteilhafte Anwendung des erfindungsgemäßen mechanochemischen Verfahrens ist die Abtrennung und Sichtung von Aktivkohle mit mit verschiedenen Korngrößen. Zu diesem Zweck werden mithilfe eines Gebläses, eines Ventilators, eines Verdichters oder eines Kompressors Gase, insbesondere Luft oder inerte Gase wie Stickstoff durch ein erstes Rohr in den Mahlraum einer mechanischen Mühle geblasen, und es werden die feinteiligen, pulverförmigen Aktivkohleteilchen über ein zweites Rohr aus dem Mahlraum ausgetragen und in der Gasphase durch Akustophorese, wie sie beispielsweise aus der internationalen Patentanmeldung WO 2017/153038 bekannt ist, agglomeriert. Die agglomerierten Aktivkohleteilchen werden anschließend in einen Zyklon geblasen, worin sie aus der Gasphase abgeschieden werden. Durch einen Bypass, der das erste und das zweite Rohr fluidmäßig miteinander verbindet, wird dafür gesorgt, dass ein stärkerer Gasstrom durch den Zyklon als durch den Mahlraum strömt.

In einer besonders vorteilhaften Ausführungsform umfasst die mechanische Mühle für mechanochemische Verfahren erfindungsgemäß mindestens einen rotierbaren oder feststehenden mechanochemischen Reaktor, Hohlleiter oder Mahlraum, der eine Vielzahl der vorstehen beschriebenen Mahlkörper in einer Trommel mit mindestens einem Einlass für das Mahlgut und mindestens einem Auslass für das gemahlene Produkt enthält.

Dabei weist die Trommel des rotierbaren mechanochemischen Reaktors und Hohlleiters eine scheibenförmige vertikale Trommelwand auf, die in ihrem Zentrum mit einer von einem Motor antreibbaren, rotierbaren Antriebswelle verbunden ist.

Dagegen weist die Trommel des feststehenden mechanochemischen Reaktors und Hohlleiters Agitationsmittel zum Durchmischen der Mahlkörper und des Mahlguts auf. Die Agitationsmittel sind längs der Längsachse der Trommel drehbar angeordnet und wird durch eine von einem Motor antreibbare, rotierbare, durch die scheibenförmige vertikale Trommelwand durchgeführte Antriebswelle gedreht,

Die der scheibenförmigen vertikalen Trommelwand gegenüberliegende vertikale Trommelwand sowohl des feststehenden als auch des rotierbaren mechanochemischen Reaktors und Hohlleiters wird von einem für elektromagnetische Strahlung und/oder Korpuskularstrahlung durchlässigen, schlagfesten Gitter oder Fenster gebildet ist, das den mechanochemischen Reaktor, den Mahlraum bzw. den Hohlleiter von der mindestens eine Strahlungsquelle trennt und verhindert, dass die Mahlkörper und das Mahlgut die mindestens eine Strahlungsquelle beschädigen.

Vorzugsweise werden fokussierte Laserstrahlung, Elektronenstrahlung, radioaktive Strahlung, wie Alphastrahlung, Neutronenstrahlung und Gammastrahlung, Röntgenstrahlung, UV-Strahlung, IR-Strahlung, Mikrowellenstrahlung und Ultraschall sowie die entsprechenden Strahlungsquellen verwendet. Insbesondere wird Mikrowellenstrahlung verwendet.

Die Strahlungsquellen können fest mit dem mechanochemischen Reaktor, Mahlraum bzw. Hohlleiter verbunden oder getrennt davon angeordnet sein.

Die Materialien, aus denen die mechanische Mühle aufgebaut ist, richtet sich unter anderem nach der Art der verwendeten Strahlung. Insbesondere muss bei der Verwendung von Mikrowellenstrahlung das Gitter, die Innenwände des mechanochemischen Reaktors und Hohlleiters, die Mahlkörper und die Agitationsmittel aus einem Material bestehen, das keine elektrischen Kurzschlüsse verursacht. Beispiele geeigneter Materialien für die Innenwände und Agitationsmittel sind schlagfeste, kratzfeste und hochtemperaturbeständige Kunststoffe sowie Keramiken. Vorzugsweise bestehen auch die Mahlkörper aus Keramik wie Porzellan. Für die anderen Teile der mechanischen Mühle, die nicht bestrahlt werden, können Metalle wie Edelstahl verwendet werden.

Für den Antrieb wird vorzugsweise ein Elektromotor, insbesondere einer der vorstehend beschriebenen intern gekühlten Elektromotoren, verwendet.

Im Folgenden werden das erfindungsgemäße mechanochemische Verfahren und eine verwendbare mechanische Mühle anhand von Beispielen und Figuren näher erläutert. Die Beispiele und Abbildungen sind nicht einschränkend, sondern sollen das erfindungsgemäße mechanochemische Verfahren und die mechanochemische Vorrichtung konkretisieren.

Die Figuren 1 bis 24 sind schematische Darstellungen, die die wesentlichen Merkmale des erfindungsgemäßen mechanochemischen Verfahrens und seiner Verwendung veranschaulichen sollen. Die Figuren sind zum Teil nicht maßstabsgetreu ausgeführt:
- Figur 1: eine mechanische Mühle 1 mit rotierender Trommel 1.5 zur Mahlung von Mahlgut unter Bestrahlung mit Mikrowellenstrahlung;
- Figur 2: eine mechanische Mühle 1 mit feststehenderTrommel 1.5 mit Attritor 1.4 zur Mahlung von Mahlgut unter Bestrahlung mit Mikrowellenstrahlung 2.1;
- Figur 3: ein Fließschema des mechanochemischen Verfahrens zur Dekontamination von kontaminierter, phosphathaltiger Biomasse und zur Rückgewinnung von Phosphat in biologisch verfügbarer Form;
- Figur 4: ein Fließschema des mechanochemischen Verfahrens zur Gewinnung regenerierter Aktivkohle aus feuchter und kontaminierter Aktivkohle und Schlamm der 4. Klärstufe;
- Figur 5-1: (a) Draufsicht auf die maßstabsgetreue Oberfläche der Schlagscheibe 1.4.2, (b) maßstabsgetreue Seitenansicht der Schlagscheibe 1.4.2 und (c) perspektivische Darstellung der Schlagscheibe 1.4.2;
- Figur 5-2: (a) Draufsicht auf die maßstabsgetreue Oberfläche der Schlagscheibe 1.4.2, (b) maßstabsgetreue Seitenansicht der Schlagscheibe 1.4.2 und (c) perspektivische Darstellung der Schlagscheibe 1.4.2;
- Figur 6: (a) Draufsicht auf die maßstabsgetreue Oberfläche der Schlagscheibe 1.4.2, (b) maßstabsgetreue Seitenansicht der Schlagscheibe 1.4.2 und (c) perspektivische Darstellung der Schlagscheibe 1.4.2;
- Figur 7: (a) Draufsicht auf die maßstabsgetreue Oberfläche der Schlagscheibe 1.4.2 mit den Schlagstegen 1.4.2.4, (b) maßstabsgetreue Seitenansicht der Schlagscheibe 1.4.2, (c) Profil eines Schlagstegs 1.4.2.4 und (d) perspektivische Darstellung der Schlagscheibe 1.4.2;
- Figur 8: (a) Draufsicht auf die maßstabsgetreue Oberfläche der Schlagscheibe 1.4.2 mit den Schlagstegen 1.4.2.4, (b) maßstabsgetreue Seitenansicht der Schlagscheibe 1.4.2, (c) Profil eines Schlagstegs 1.4.2.4 und (d) perspektivische Darstellung der Schlagscheibe 1.4.2;
- Figur 9: (a) Draufsicht auf die maßstabsgetreue Oberfläche der Schlagscheibe 1.4.2 mit den Schlagstegen 1.4.2.4, (b) maßstabsgetreue Seitenansicht der Schlagscheibe 1.4.2, (c) Profil eines Schlagstegs 1.4.2.4 und (d) perspektivische Darstellung der Schlagscheibe 1.4.2;
- Figur 10: (a) Draufsicht auf die maßstabsgetreue Oberfläche des Schlagfächers 1.4.3 mit den Schlagstegen 1.4.2.4, (b) maßstabsgetreue Seitenansicht des Schlagfächers 1.4.2, und (c) perspektivische Darstellung des Schlagfächers 1.4.2;
- Figur 11: (a) Draufsicht auf die maßstabsgetreue Oberfläche des Schlagfächers 1.4.3 mit den Schlagstegen 1.4.2.4, (b) maßstabsgetreue Seitenansicht des Schlagfächers 1.4.2, (c) Profil eines Schlagstegs 1.4.2.4 und (d) perspektivische Darstellung des Schlagfächers 1.4.2;
- Figur 12: Draufsicht auf die maßstabsgetreue Oberfläche des Schlagfächers 1.4.3 mit den Schlagstegen 1.4.2.4, (a) und (b) maßstabsgetreue Seitenansichten des Schlagfächers 1.4.2, (c) Profil eines Schlagstegs 1.4.2.4 und (d) perspektivische Darstellung des Schlagfächers 1.4.2;
- Figur 13: (a) Draufsicht auf die maßstabsgetreue Oberfläche des Doppelschlagfächers 1.4.3 mit den Berg-und-Tal-Profilen 1.4.3.2 und den U-förmigen Spalten 1.4.3.3, (b) und (d) maßstabsgetreue Seitenansichten des Doppelschlagfächers 1.4.3, (c) Schnitt durch das Berg-und-Tal-Profil 1.4.3.2 und (e) perspektivische Darstellung des Doppelschlagfächers 1.4.3;
- Figur 14: Draufsicht auf eine Schlagkeule 1.4.4 mit symmetrisch angeordneten Schlagkörpern 1.4.4.3;
- Figur 15: Draufsicht auf einen Schlagflügel 1.4.5;
- Figur 16: Draufsicht auf eine weitere Ausführungsform des Schlagflügels 1.4.5;
- Figur 17: Mahlung durch zwei gegenläufige Walzen 1.4.6;
- Figur 18: Mahlung mit zwei gegenläufigen Walzen 1.4.6 mit Oberflächenstrukturen 1.4.6.2;
- Figur 19: Mahlung mit einer Walze 1.4.6 und einer Abriebfläche 1.4.6.3;
- Figur 20: Mahlung mit zwei gegenläufigen, gegeneinander unter einem bestimmten Winkel 1.4.6.5 geneigten Walzen 1.4.6;
- Figur 21: Mahlung mit zwei gegenläufigen Walzen 1.4.6 mit federnden Oberflächen 1.4.6.6;
- Figur 22: Mehrere Mahlräume 1.1.1 umfassende Trommel 1.5;
- Figur 23: Fließschema einer Umkehrosmose-Anlage; und
- Figur 24: Korngrößen sich der KS umfassend eine mechanochemische Mühle 1, eine Akustophoresevorrichtung 7 zur Agglomeration von Aktivkohleteilchen G und ein Zyklon 8 zur Abscheidung der agglomerierten Aktivkohleteilchen aus der Gasphase.

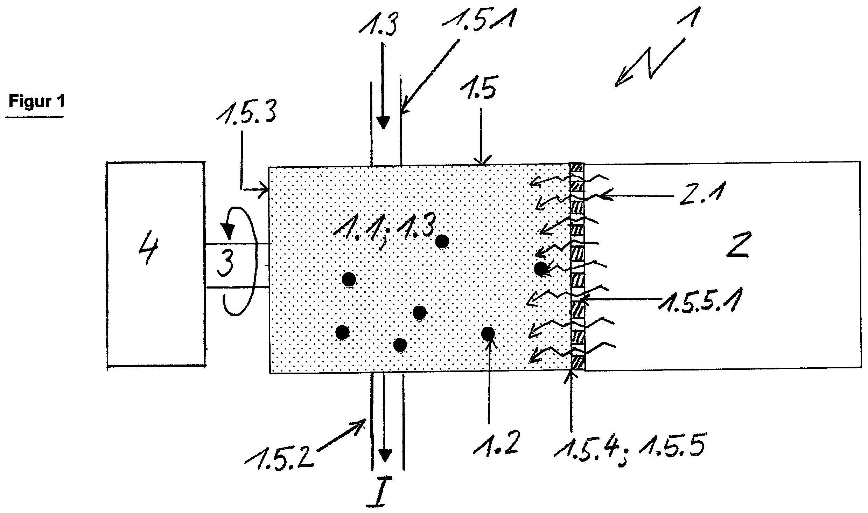

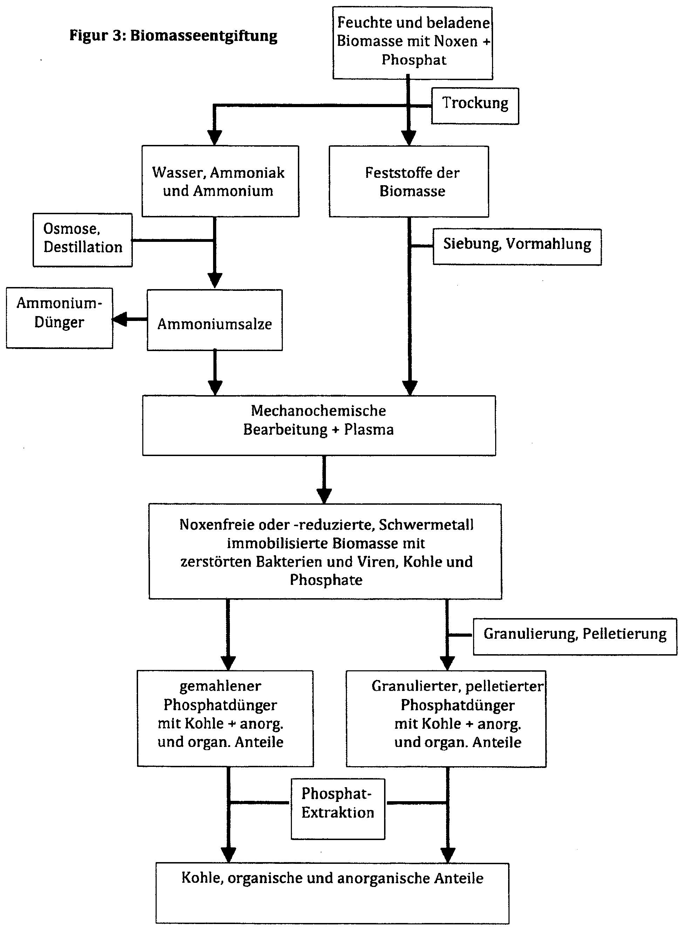

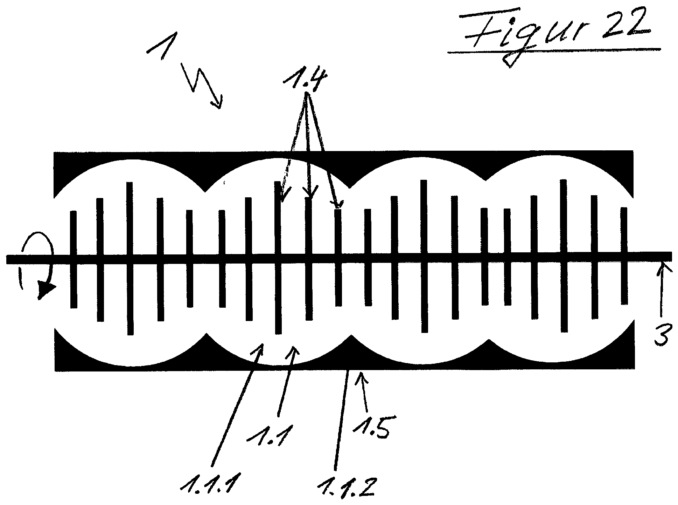

In den Figuren 1 bis 24 haben die Bezugszeichen die folgende Bedeutung:
- 1: Mechanische Mühle, Mahlaggregat
- 1.1: Mechanische Reaktor, Hohlleiter, Mahlraum
- 1.1.1: Kugelschnittförmiger Mahlraum
- 1.1.2: Kreisförmige Einschnürung
- 1.2: Mahlkörper
- 1.3: Mahlgut F

- 1.4: Agitationsmittel
- 1.4.1: Attritor
- 1.4.2: Schlagscheibe
- 1.4.2.1: Durchführung für die Antriebswelle 3
- 1.4.2.2: Schlagloch
- 1.4.2.3: Kante
- 1.4.2.4: Schlagsteg
- 1.4.3: Schlagfächer
- 1.4.3.1: Ring um die Antriebswelle 3
- 1.4.3.2: Berg-und-Tal-Profil
- 1.4.3.3: U-förmige Spalte
- 1.4.4: Schlagkeule
- 1.4.4.1: Ring um die Antriebswelle 3
- 1.4.4.2: Verbindungssteg
- 1.4.4.3: Schlagkörper
- 1.4.5: Schlagflügel
- 1.4.5.1: Schlagende
- 1.4.6: Drehende Walze
- 1.4.6.1: Drehrichtung
- 1.4.6.2: Zacken
- 1.4.6.3: Abriebfläche
- 1.4.6.4: Drehachse
- 1.4.6.5: Neigungswinkel
- 1.4.6.6: Walzenoberfläche
- 1.4.6.7: Vertiefung
- 1.4.6.8: Federung
- 1.4.6.9: Kugel

- 1.5: Trommel
- 1.5.1: Einlass für Mahlgut F; 1,3
- 1.5.2: Auslass für gemahlenes Produkt I
- 1.5.3: Scheibenförmige, vertikale Trommelwand
- 1.5.3.1: Durchführung durch 1.5.3
- 1.5.4: 1.5.3 gegenüberliegende Trommelwand
- 1.5.5: Gitter, strahlendurchlässiges Fenster
- 1.5.5.1: Öffnung

- 2: Elektromagnetische Strahlung, Korpuskularstrahlung
- 2.1: Mikrowellenstrahlung
- 3: Antriebswelle
- 3.1: Drehrichtung
- 4: Motor

- 5: Gebläse
- 5.0: Ansaugung
- 5.1: Angesaugtes Gas
- 5.2: In den Mahlraum 1.1 von 1 eingeblasener Gasstrom
- 5.2.1: In den Bypass BP eingeblasener Gasstrom
- 5.2.2: Regelventil in der Gasleitung 5.5 für den Gasstrom 5.2
- 5.2.3: Regelventil in der Gasleitung 5.5.1 im Bypass BP für den Gasstrom 5.2.1
- 5.3: Mit gemahlenem Mahlgut F beladener Gasstrom
- 5.3.1: Regelventil in der Gasleitung 5.6 für den Gasstrom 5.3
- 5.4: Gasstrom mit agglomerierten Teilchen 9.1
- 5.5: Gasleitung von dem Gebläse 5 zur mechanischen Mühle 1
- 5.5.1: Gasleitung im Bypass BP OH ups A
- 5.6: Gasleitung von der mechanischen Mühle 1 zum Bypass BP, Akustophoreseeinheit 7 und Zyklon 8
- 5.7: Abgas des Zyklons 8
- 6: Durchlässige Schutzgitter
- 7: Akustophoreseeinheit
- 7.1: Ultraschallquelle
- 7.2: Stehende Welle
- 8: Zyklon
- 8.1: Abgasleitung
- 8.2: Feststoffauslass
- 9: Pulverförmiger Feststoff I
- 9.1: Agglomerierte Teilchen

- A-A: Schnittlinie
- C-C: Schnittlinie
- D: Durchmesser der Schlagscheibe 1.4.2
- d: Durchmesser der Durchführung 1.4.2.1 für die Antriebswelle 3
- DS: Dissoziierte Säuren, Divalente Salze
- EWS: Einwertige Salze
- F: Mahlgut
- H₂O: Wasser
- KS: Korngrößensichter
- MF: Mikrofiltration
- MM: Makromoleküle
- NF: Nanofiltration
- R: Radius
- RO: Reverse Osmose
- SP: Suspendierte Partikel
- SW: Salzwasser
- T: Dicke
- UDS: Undissoziierte Säuren
- UF: Ultrafiltration
- UO: Umkehrosmose
- X: vergrößerter Ausschnitt
- ZU: Zucker

Im nachfolgenden Text haben die nachgestellten Kurzbezeichnungen die folgende Bedeutung:

| | |
|---|---|
| A | Problem behaftete, synthetische, biogene und biologischen Materialien |
| B | Phosphate |
| C | Metalle und ihre Verbindungen |
| D | Kohlendioxid, Kohlenmonoxid |
| E | Wertprodukte |
| F | Mahlgut, Fluid, Lösung, Suspension, feinteilige feste Mischung, reaktives Gas |
| G | Kohle, Kohlenstofflieferanten |
| H | Suspension eines pulverförmigen Produkts I |
| I | Pulverförmiges Produkt, gesichtetes Produkt I |
| K | Katalytisch wirksame Partikel |
| Q | Piezoelektrische Partikel |
| Y | Gewichtsverhältnis von (A, B, C und/oder D sowie ggf. Z) zu G |
| Z | Zusatzstoff |

### Beispiele 1 bis 3 und Vergleichsversuch V1

Für die Mahlversuche der Beispiele 1 bis 3 und des Vergleichsversuchs V1 wurde die in der deutschen Offenlegungsschrift DE 195 04 540 A1 beschriebene Mahlaggregate 1 mit Attritoren 1.4.1 verwendet. Als Mahlkörper 1.2 wurden 2000 jeweils 1 g wiegende Stahlkugeln verwendet. Das Gewichtsverhältnis von Gewicht von Mahlgut F : Gewicht der Stahlkugeln 1.2 lag bei 1:10. Die Mahlversuche wurden unter Umgebungsluft bei Atmosphärendruck durchgeführt.

Als Antrieb des Mahlaggregats 1 mit Attritoren 1.4.1 wurde ein Elektromotor 3 gemäß der internationalen Patentanmeldung WO 2017/055246A2 verwendet. Dieser umfasst ein Elektromaschinen-Bauteil mit wenigstens einer Wicklung zur Erzeugung eines magnetischen Feldes, die mindestens einen Hohlleiter umfasst, der einen Mantel und einen inneren Hohlraum aufweist, durch welchen ein Kühlmittel leitbar ist, wobei die Wicklung zwei Enden aufweist, an denen eine elektrische Betriebsspannung angeschlossen wird und wobei
- die Hohlleiter rundrohrförmig ausgebildet sind und einen Außendurchmesser in einem Bereich von 3 mm aufweisen,
- die Enden der Wicklung jeweils als Kühlmitteleinlass oder Kühlmittelauslass dienen und
- die Enden der Wicklung an einem Anschlussstück angeschlossen sind, dass einen Kühlmitteleingang und/oder einen Kühlmittelausgang, mehrere Hohlleiter Anschlüsse zum Anschließen von Hohlleitern, einen Verteilerkanal, über den das Kühlmittel in wenigstens einem Hohlleiter eingespeist wird, und/oder einen Sammelkanal umfasst, in den das aus wenigstens einem Hohlleiter austretende Kühlmittel hineinfließt und zum Kühlmittelausgang des Anschlussstücks geleitet wird.

Motoren 3 dieser Art werden von der Dynamic E Flow GmbH, Kaufbeuren, Deutschland, unter der Marke capcooltech^{®} vertrieben. Verwendet wurden die Typen HC und LC.

Für die Beispiele 1 bis 3 wurden Kaliumnitrat A enthaltende Mischungen als Mahlgut F bereitgestellt. Die Mischung des Vergleichsversuchs V1 enthielt kein Kaliumnitrat A. Jede der Mischungen F wurde während 480 Minuten bei einer Drehzahl der Attritoren 1.4.1 von 1250 Umdrehungen/min gemahlen. Es wurden jeweils bei 0 Minuten (Nullprobe), nach 60 Minuten, nach 120 Minuten und nach 480 Minuten 0,5 g wiegende Proben entnommen und mit 50 ml entsalztem Wasser eluiert. Anschließend wurde der jeweilige Nitratgehalt A nach DIN EN ISO 10304-1 und der Ammoniumgehalt A nach DIN EN ISO 11732 gemessen.

Die Tabelle 1 gibt einen Überblick über die Mischungen F und die Ergebnisse der Messungen.

**Tabelle 1: Beispiele 1 bis 3 und Vergleichsversuch V1**

| **Nr.** | **Mahlgut F Zusammensetzung** | **Mahldauer h** | **Ammonium A mg/Liter** | **Nitrat A mg/Liter** |
|---|---|---|---|---|
| **V1** | 2 Gew.-% Ammoniumchlorid A | 0 | 84,9 | <1 |
| | 49 Gew.-% Kohle G | | | |
| | 49 Gew.-% Quarzsand Q | | | |
| " | " | 60 | 20,7 | <1 |
| " | " | 120 | 10,8 | <1 |
| " | " | 480 | 9,5 | <1 |
| | | | | |
| **1** | 2 Gew.-% Kaliumnitrat A | 0 | <1 | 163 |
| | 49 Gew.-% Kohle G | | | |
| | 49 Gew.-% Quarzsand Q | | | |
| **"** | " | 60 | <1 | 87,4 |
| **"** | " | 120 | <1 | 29,6 |
| **"** | " | 480 | <1 | 28,1 |
| | | | | |
| **2** | 2 Gew.-% Kaliumnitrat A | 0 | 67,1 | 129 |
| | 2 Gew.-% Ammoniumchlorid A | | | |
| | 48 Gew.-% Kohle G | | | |
| | 48 Gew.-% Quarzsand Q | | | |
| **"** | " | 60 | 19,7 | 67,5 |
| **"** | " | 120 | 7,9 | 31,4 |
| **"** | " | 480 | 5,8 | 26,5 |
| | | | | |
| **3** | 2 Gew.-% Kaliumnitrat A | 0 | 91,8 | 177 |
| | 2 Gew.-% Ammoniumchlorid A | | | |
| | 2 Gew.-% Trinatriumphosphat B | | | |
| | 47 Gew.-% KohleG | | | |
| | 47 Gew.-% Quarzsand Q | | | |
| **"** | " | 60 | 22,7 | 78,5 |
| **"** | " | 120 | 8,5 | 36,2 |
| **"** | " | 480 | 8,1 | 43,5 |

Es zeigte sich, dass bereits nach 60 bis 120 Minuten Mahldauer der größte Teil von Ammonium A und Nitrat A eliminiert war.

### Beispiele 4 bis 6 und Vergleichsversuch V2 Die Mahlung von Gärresten A - Einfluss der stofflichen Zusammensetzungen

Die Mahlversuche wurden im Wesentlichen wie bei den Beispielen 1 bis 3 und dem Vergleichsversuchs V1 beschrieben durchgeführt. Die Tabelle 2 gibt einen Überblick über die stofflichen Zusammensetzungen des Mahlguts F. Das Gewichtsverhältnis von Mahlkörper 1.2 zu Mahlgut F lag in allen Fällen bei 50:1. Die Umdrehungszahl betrug in allen Fällen 1250 UPM. Nach 0, 1, 2 und 3 Stunden Mahldauer wurden jeweils 0,5 g der feinteiligen pulverförmigen Produkte I mit 50 ml destilliertem Wasser nach DIN 38414-4 DIN EN 12457-4 eluiert. Die jeweiligen Konzentrationen der Ammoniumionen A wurden gemäß DIN EN ISO 11732 in mg/Liter bestimmt. Die Ergebnisse finden sich ebenfalls in der Tabelle 2

**Tabelle 2: Die Mahlung von Gärresten A - Einfluss der stofflichen Zusammensetzungen**

| **Bsp.^{a)} Vglv.^{b)}** | **Gärrest** | **Quarz-Sand** | **Aktiv-Kohle** | **KCl** | **Mahldauer unter Luft** | **Ammonium** |
|---|---|---|---|---|---|---|
| | **F (g)** | **Q (g)** | **G (g)** | **Z (g)** | **(h)** | **A** |
| **V2** | 25 | 25 | - | - | 0 | 21,1 |
| **"** | 25 | 25 | - | - | 1 | 10,8 |
| **"** | 25 | 25 | - | - | 2 | 11,6 |
| **"** | 25 | 25 | - | - | 3 | 9,1 |
| **4** | 25 | 25 | 25 | - | 0 | 25,1 |
| **"** | 25 | 25 | 25 | - | 1 | 3,12 |
| **"** | 25 | 25 | 25 | - | 2 | 4,43 |
| **"** | 25 | 25 | 25 | - | 3 | 2,6 |
| **5** | 25 | - | 25 | - | 0 | 11,3 |
| **"** | 25 | - | 25 | - | 1 | 4,19 |
| **"** | 25 | - | 25 | - | 2 | 3,25 |
| **"** | 25 | - | 25 | - | 3 | 1,55 |
| **6** | 25 | 25 | 25 | 25 | 0 | 11,3 |
| **"** | 25 | 25 | 25 | 25 | 1 | 4,19 |
| **"** | 25 | 25 | 25 | 25 | 2 | 3,25 |
| **"** | 25 | 25 | 25 | 25 | 3 | 1,55 |

| | | | | | | |
|---|---|---|---|---|---|---|
| a) Beispiel b) Vergleichsversuch | | | | | | |

Die Versuchsergebnisse zeigen, dass die Abnahme der Ammoniumionen A in den Proben mit Aktivkohle G oder Quarz Q und Aktivkohle A signifikant größer war, als in der aktivkohlefreien Probe.

### Beispiel 7

### Der mechanochemische Abbau von Medikamenten A als Modell für die 4. Reinigungsstufe von Kläranlagen

Quarzsand Q und Aktivkohle G (Beispiel 7, Versuche Nummer 1 bis 4 und 13 bis 16), Quarzsand Q alleine (Beispiel 7, Versuche Nummer 9 bis 12 und 21 bis 24) sowie Aktivkohle G alleine (Beispiel 7, Versuche 5 bis 8 und 17 bis 20) wurden jeweils mit einer Mischung A, bestehend aus 2 Tabletten Propofol, 1 Tablette Loratidin, 2 Tabletten Ibuflam und einer Tablette ACC vermischt. Die resultierenden Mischungen F wurde einmal trocken verrieben und ein Teil wird 150 ml destilliertem Wasser übergossen, anschließend während 48 Stunden einweichen gelassen und dann bei Raumtemperatur unter Wasserstrahlvakuum während 2 Stunden getrocknet. Danach wurden die Proben F unter Luft und unter Argon gemahlen. Die Mahlversuche wurden wie bei den Beispielen 4 bis 6 beschrieben durchgeführt. Die Tabelle 3 gibt einen Überblick über die angewandten Versuchsbedingungen.

**Tabelle 3: Der mechanochemische Abbau von Medikamenten**

| **Beispiel 7 Versuch Nummer** | **Quarzsand Q (g)** | **Aktivkohle G (g)** | **Mahldauer (min)** | **UPM** |
|---|---|---|---|---|
| 1 | 20 | 20 | 30 | 1100 |
| 2 | 20 | 20 | 60 | 1100 |
| 3 | 20 | 20 | 120 | 1100 |
| 4 | 20 | 20 | 180 | 1100 |
| 5 | 0 | 40 | 30 | 1100 |
| 6 | 0 | 40 | 60 | 1100 |
| 7 | 0 | 40 | 120 | 1100 |
| 8 | 0 | 40 | 180 | 1100 |
| 9 | 40 | 0 | 30 | 1100 |
| 10 | 40 | 0 | 60 | 1100 |
| 11 | 40 | 0 | 120 | 1100 |
| 12 | 40 | 0 | 180 | 1100 |
| 13 | 20 | 20 | 30 | 800 |
| 14 | 20 | 20 | 60 | 800 |
| 15 | 20 | 20 | 120 | 800 |
| 16 | 20 | 20 | 180 | 800 |
| 17 | 0 | 40 | 30 | 800 |
| 18 | 0 | 40 | 60 | 800 |
| 19 | 0 | 40 | 120 | 800 |
| 20 | 0 | 40 | 180 | 800 |
| 21 | 40 | 0 | 30 | 800 |
| 22 | 40 | 0 | 60 | 800 |
| 23 | 40 | 0 | 120 | 800 |
| 24 | 40 | 0 | 180 | 800 |

Die Ergebnisse der Versuche ließen sich wie folgt zusammenfassen:
1. Der Abbau der Medikamente A mit Aktivkohle G alleine war schneller als der mit Quarzsand Q alleine.
2. Nach längerer Mahldauer (etwa 2 Stunden) war der Effekt von Quarzsand Q stärker als der von Aktivkohle G, sodass die Zugabe einer kleinen Menge Quarzsand Q vorteilhaft war.
3. Die Abnahme folgte dem natürlichen Logarithmus, wobei nach 60 Minuten alle Verbindungen abgebaut waren.
4. Propofol A wurde deutlich langsamer abgebaut als die anderen Medikamente A.
5. Ein signifikanter Unterschied zwischen den eingesumpften Mischungen F und den trocken vermischten Mischungen F konnte nicht festgestellt werden. Jedoch zeigte sich ein gewisser Trend, dass die eingesumpften Mischungen F etwas schneller abgebaut wurden.
6. Die Umdrehungsgeschwindigkeit war ein entscheidender Faktor. Der Abbau der Medikamente F war bei 1100 UPM doppelt so schnell wie der Abbau bei 800 UPM.
7. Es konnte kein Unterschied zwischen den Mahlungen unter Inertgas Z und unter Luft festgestellt werden.

### Beispiel 8

### Die Rückgewinnung von Phosphat B aus der 4. Reinigungsstufe einer Kläranlage

Granulierte beladene Aktivkohle G aus einem Becken der 4. Reinigungsstufe wurde einmal in einem Wasserbad grob gereinigt. Danach wurde sie in einer handelsüblichen Trocknungsanlage bei erhöhter Temperatur und unter verminderten Druck getrocknet. Die getrocknete Aktivkohle G wurde kontinuierlich in eine mechanische Mühle 1 mit einer Trommel 1.5 eines Volumens von 900 Litern eingebracht. Die mechanische Mühle 1 enthielt 1000 Stahlkugeln 1.2 von 5 mm Durchmesser, die mit einem Schutzgitter 6 vor dem Austritt aus der Trommel 1.5 gehindert waren. Die getrocknete Aktivkohle G wurde an der oberen Öffnung (1.5.1, Einlass für Mahlgut F) durch das Schutzgitter 6 eingetragen und zentral mittels eines Zyklons 8 wieder abgetrennt. Dabei durchliefen etwa 100 kg Kohle G in 1 Stunde die mechanochemische Mühle 1. Alternativ konnte das Verfahren mit den gleichen Mengen diskontinuierlich als Batchverfahren durchgeführt werden.

Die Umdrehungszahl der Mühle 1 betrug 1100 UPM. Das gemahlene Mahlgut F mit der reaktivierten Aktivkohle G wurde in einer handelsüblichen Pelletieranlage diskontinuierlich oder kontinuierlich zu Pellets G gepresst. Diese wurde wieder in das Becken der 4. Reinigungsstufe eingetragen. Ein Verlust an Aktivkohle G konnte hierbei nicht beobachtet werden. Verunreinigungen durch Sand störten den Ablauf des Verfahrens nicht.

Die vorhandenen löslichen Phosphate B konnten in einem separaten Waschgang vor oder nach der Pelletierung der Aktivkohle G eluiert werden.

### Beispiel 9

### Die Verarbeitung von Gülle A zu Aktivkohle G

1000 kg Gülle A, die Nitrate A, Ammonium A, Phosphate B und Schwermetalle C enthielten, wurden mit einem handelsüblichen Gärrestetrockner getrocknet. Hierbei verblieben 80 kg Trockenmasse als Mahlgut F. Die Trocknung wurde bei erhöhter Temperatur durchgeführt, und das entweichende Ammoniak A wurde, wie in der deutschen Patentanmeldung DE 10 2016 004 162 A1 beschrieben, mit Schwefelsäure gebunden. Das resultierende Ammoniumsulfat A konnte zusammen mit der Trockenmasse F weiterverarbeitet werden. Die Trockenmasse F und das Ammoniumsulfat A wurden in einer separaten mechanischen Mühle 1 vorgemahlen. Anschließend wurden sie zusammen mit der hälftigen Menge an Aktivkohle G kontinuierlich in eine mechanische Mühle 1 mit einer Trommel 1.5 eines Volumens von 900 Liter von oben durch ein Schutzgitter 6, das die Mahlkörper 1.2 am Austritt hinderte, eingetragen. Als Mahlkörper 1.2 wurden 1000 kg Stahlkugeln 1.2 von 5 mm Durchmesser verwendet. Das Mahlgut F wurde zentral mittels eines Zyklons 8 wieder abgetrennt. Hierbei durchliefen etwa 100 kg Trockenmaterial F in 1 Stunde die mechanische Mühle 1 und wurden bei einer konstanten Drehzahl von 1100 UPM gemahlen.

Das resultierende feste feinteilige Produkt I enthielt signifikant weniger Nitrationen A und Ammoniumionen A als die Ausgangsprodukte F. Außerdem waren die Schwermetalle C immobilisiert.

Zusätzlich oder alternativ zur Kohle G konnten Schichtsilikate Z wie Bentonit oder Montmorillonit zur Immobilisierung der Schwermetalle C eingebracht werden.

Das feste feinteilige Produkt I wurde in einer handelsüblichen Pelletieranlage verpresst und als eine Alternative E zur Terra Preta als Phosphatdünger E und Kohledünger E, durch die die Humusbildung und das Mikrobenwachstum gefördert wurden, verwendet werden.

Alternativ konnte den Pellets G auch das Phosphat B entzogen werden. Das verbleibende Material war hervorragend als Ersatz für Aktivkohle G zur Bindung von VOC (flüchtige organische Verbindungen) als Füllstoff für die Plattenherstellung und als Ersatz für Holz und Sande geeignet.

### Beispiel 9

### Die Wiedergewinnung von Iridium C aus verbrauchten Nafion-Membranen A

500 kg an verbrauchter Nafion-Membranen A wurden geschreddert und mit 100 kg Aktivkohle G und 20 kg fester Natronlauge Z trocken vermischt und vorgemahlen. Anschließend wurde das Gemisch F kontinuierlich in eine mechanochemische Mühle 1 wie bei den Beispielen 8 und 9 beschrieben eingetragen und während 2 Stunden bei einer Drehzahl von 1100 UPM gemahlen. Das mithilfe eines Zyklons 8 abgetrennte feinteilige feste Pulver I wurde mit Wasser eluiert, wodurch das resultierende Natriumfluorid I ausgewaschen wurde. Das verbleibende Pulver I enthielt das immobilisierte Iridium C. Dieses wurde wiedergewonnen, indem das Pulver I verbrannt wurde.

### Beispiel 10 bis 14

### Die mechanochemische Verarbeitung von Biomasse A, die Eliminierung von Nitraten A und Ammonium A und die Wiedergewinnung von Phosphat B

Biomasse A, Quarzsand Q und Aktivkohle G wurden in verschiedenen Mengen miteinander vermischt. Den Mischungen wurden Natriumnitrat A, Ammoniumchlorid A und glasartiges Ultraphosphat B in wechselnden Mengen zugesetzt. Die resultierenden Mischungen F wurden trocken verrieben. Jeweils ein Teil hiervon wurde einmal mit 150 ml destilliertem Wasser übergossen, während 48 Stunden eingeweicht, dann bei Raumtemperatur unter Wasserstrahlvakuum während 2 Stunden getrocknet und anschließend gemahlen. Parallel dazu wurden die trocken vermischten Mischungen F gemahlen. Alle Versuche wurden jeweils einmal unter Luft und einmal unter Argon Z durchgeführt. Es wurden dazu die in Beispiel 1 bis 3 beschriebenen Vorrichtungen 1 verwendet. In allen Fällen wurden nach 30 Minuten, 60 Minuten, 120 Minuten und 180 Minuten den jeweils resultierenden gemahlenen Mischungen F Proben I entnommen, die mit destilliertem Wasser eluiert wurden. Danach wurden die Lösungen analysiert.

Die Tabellen 4 bis 8 geben einen Überblick über die verwendeten Materialien und ihre Mengenverhältnisse.

**Tabelle 4: Mechanochemische Mahlung von Biomasse A mit den Zusatzstoffen Natriumnitrat A, Ammoniumchlorid A und Ultraphosphat B unter Luft und unter Argon Z**

| **Bsp. 10** | **Quarzsand** | **Aktivkohle** | **Biomasse** | **NaNO₃** | **NH₄Cl** | **Ultraphosphat** | **Mahldauer** | **UPM** |
|---|---|---|---|---|---|---|---|---|
| **Vers. Nr.** | **Q [g]** | **G [g]** | **A [g]** | **A [g]** | **A [g]** | **B [g]** | **[min]** | |
| **1** | 30 | 30 | 30 | 5 | 5 | 5 | 30 | 1100 |
| **2** | 30 | 30 | 30 | 5 | 5 | 5 | 60 | 1100 |
| **3** | 30 | 30 | 30 | 5 | 5 | 5 | 120 | 1100 |
| **4** | 30 | 30 | 30 | 5 | 5 | 5 | 180 | 1100 |
| **5** | 0 | 45 | 45 | 5 | 5 | 5 | 30 | 1100 |
| **6** | 0 | 45 | 45 | 5 | 5 | 5 | 60 | 1100 |
| **7** | 0 | 45 | 45 | 5 | 5 | 5 | 120 | 1100 |
| **8** | 0 | 45 | 45 | 5 | 5 | 5 | 180 | 1100 |
| **9** | 45 | 0 | 45 | 5 | 5 | 5 | 30 | 1100 |
| **10** | 45 | 0 | 45 | 5 | 5 | 5 | 60 | 1100 |
| **11** | 45 | 0 | 45 | 5 | 5 | 5 | 120 | 1100 |
| **12** | 45 | 0 | 45 | 5 | 5 | 5 | 180 | 1100 |
| **13** | 30 | 30 | 30 | 5 | 5 | 5 | 30 | 800 |
| **14** | 30 | 30 | 30 | 5 | 5 | 5 | 60 | 800 |
| **15** | 30 | 30 | 30 | 5 | 5 | 5 | 120 | 800 |
| **16** | 30 | 30 | 30 | 5 | 5 | 5 | 180 | 800 |
| **17** | 0 | 45 | 45 | 5 | 5 | 5 | 30 | 800 |
| **18** | 0 | 45 | 45 | 5 | 5 | 5 | 60 | 800 |
| **19** | 0 | 45 | 45 | 5 | 5 | 5 | 120 | 800 |
| **20** | 0 | 45 | 45 | 5 | 5 | 5 | 180 | 800 |
| **21** | 45 | 0 | 45 | 5 | 5 | 5 | 30 | 800 |
| **22** | 45 | 0 | 45 | 5 | 5 | 5 | 60 | 800 |
| **23** | 45 | 0 | 45 | 5 | 5 | 5 | 120 | 800 |
| **24** | 45 | 0 | 45 | 5 | 5 | 5 | 180 | 800 |

**Tabelle 5: Mechanochemische Mahlung von Biomasse A mit den Zusatzstoffen Ammoniumchlorid A und Ultraphosphat B unter Luft und unter Argon A**

| **Bsp. 11** | **Quarzsand** | **AktivKohle** | **Biomasse** | **NH₄Cl** | **Ultraphosphat** | **Mahldauer** | **UPM** |
|---|---|---|---|---|---|---|---|
| **Vers. Nr.** | **Q [g]** | **G [g]** | **A [g]** | **A [g]** | **B [g]** | **[min]** | |
| **1** | 30 | 30 | 30 | 7,5 | 7,5 | 30 | 1100 |
| **2** | 30 | 30 | 30 | 7,5 | 7,5 | 60 | 1100 |
| **3** | 30 | 30 | 30 | 7,5 | 7,5 | 120 | 1100 |
| **4** | 30 | 30 | 30 | 7,5 | 7,5 | 180 | 1100 |
| **5** | 0 | 45 | 45 | 7,5 | 7,5 | 30 | 1100 |
| **6** | 0 | 45 | 45 | 7,5 | 7,5 | 60 | 1100 |
| **7** | 0 | 45 | 45 | 7,5 | 7,5 | 120 | 1100 |
| **8** | 0 | 45 | 45 | 7,5 | 7,5 | 180 | 1100 |
| **9** | 45 | 0 | 45 | 7,5 | 7,5 | 30 | 1100 |
| **10** | 45 | 0 | 45 | 7,5 | 7,5 | 60 | 1100 |
| **11** | 45 | 0 | 45 | 7,5 | 7,5 | 120 | 1100 |
| **12** | 45 | 0 | 45 | 7,5 | 7,5 | 180 | 1100 |
| **13** | 30 | 30 | 30 | 7,5 | 7,5 | 30 | 800 |
| **14** | 30 | 30 | 30 | 7,5 | 7,5 | 60 | 800 |
| **15** | 30 | 30 | 30 | 7,5 | 7,5 | 120 | 800 |
| **16** | 30 | 30 | 30 | 7,5 | 7,5 | 180 | 800 |
| **17** | 0 | 45 | 45 | 7,5 | 7,5 | 30 | 800 |
| **18** | 0 | 45 | 45 | 7,5 | 7,5 | 60 | 800 |
| **19** | 0 | 45 | 45 | 7,5 | 7,5 | 120 | 800 |
| **20** | 0 | 45 | 45 | 7,5 | 7,5 | 180 | 800 |
| **21** | 45 | 0 | 45 | 7,5 | 7,5 | 30 | 800 |
| **22** | 45 | 0 | 45 | 7,5 | 7,5 | 60 | 800 |
| **23** | 45 | 0 | 45 | 7,5 | 7,5 | 120 | 800 |
| **24** | 45 | 0 | 45 | 7,5 | 7,5 | 180 | 800 |

**Tabelle 6: Mechanochemische Mahlung von Biomasse A mit den Zusatzstoffen Natriumnitrat A und Ultraphosphat B unter Luft und unter Argon Z**

| **Bsp. 12** | **Quarzsand** | **Aktivkohle** | **Biomasse** | **NaNO₃** | **Ultraphosphat** | **Mahldauer** | **UPM** |
|---|---|---|---|---|---|---|---|
| **Vers. Nr.** | **Q [g]** | **G [g]** | **A [g]** | **A [g]** | **B [g]** | **[min]** | |
| **1** | 30 | 30 | 30 | 7,5 | 7,5 | 30 | 1100 |
| **2** | 30 | 30 | 30 | 7,5 | 7,5 | 60 | 1100 |
| **3** | 30 | 30 | 30 | 7,5 | 7,5 | 120 | 1100 |
| **4** | 30 | 30 | 30 | 7,5 | 7,5 | 180 | 1100 |
| **5** | 0 | 45 | 45 | 7,5 | 7,5 | 30 | 1100 |
| **6** | 0 | 45 | 45 | 7,5 | 7,5 | 60 | 1100 |
| **7** | 0 | 45 | 45 | 7,5 | 7,5 | 120 | 1100 |
| **8** | 0 | 45 | 45 | 7,5 | 7,5 | 180 | 1100 |
| **9** | 45 | 0 | 45 | 7,5 | 7,5 | 30 | 1100 |
| **10** | 45 | 0 | 45 | 7,5 | 7,5 | 60 | 1100 |
| **11** | 45 | 0 | 45 | 7,5 | 7,5 | 120 | 1100 |
| **12** | 45 | 0 | 45 | 7,5 | 7,5 | 180 | 1100 |
| **13** | 30 | 30 | 30 | 7,5 | 7,5 | 30 | 800 |
| **14** | 30 | 30 | 30 | 7,5 | 7,5 | 60 | 800 |
| **15** | 30 | 30 | 30 | 7,5 | 7,5 | 120 | 800 |
| **16** | 30 | 30 | 30 | 7,5 | 7,5 | 180 | 800 |
| **17** | 0 | 45 | 45 | 7,5 | 7,5 | 30 | 800 |
| **18** | 0 | 45 | 45 | 7,5 | 7,5 | 60 | 800 |
| **19** | 0 | 45 | 45 | 7,5 | 7,5 | 120 | 800 |
| **20** | 0 | 45 | 45 | 7,5 | 7,5 | 180 | 800 |
| **21** | 45 | 0 | 45 | 7,5 | 7,5 | 30 | 800 |
| **22** | 45 | 0 | 45 | 7,5 | 7,5 | 60 | 800 |
| **23** | 45 | 0 | 45 | 7,5 | 7,5 | 120 | 800 |
| **24** | 45 | 0 | 45 | 7,5 | 7,5 | 180 | 800 |

**Tabelle 7: Mechanochemische Mahlung von Biomasse A mit den Zusatzstoffen Natriumnitrat A und Ammoniumchlorid A unter Luft und unter Argon Z**

| **Bsp. 13** | **Quarzsand** | **Aktiv kohle** | **Biomasse** | **NaNO₃** | **NH₄Cl** | **Mahlzeit** | **rpm** |
|---|---|---|---|---|---|---|---|
| **Vers. Nr** | **Q [g]** | **G [g]** | **A [g]** | **A [g]** | **A [g]** | **[min]** | |
| 1 | 30 | 30 | 30 | 7,5 | 7,5 | 30 | 1100 |
| 2 | 30 | 30 | 30 | 7,5 | 7,5 | 60 | 1100 |
| 3 | 30 | 30 | 30 | 7,5 | 7,5 | 120 | 1100 |
| 4 | 30 | 30 | 30 | 7,5 | 7,5 | 180 | 1100 |
| 5 | 0 | 45 | 45 | 7,5 | 7,5 | 30 | 1100 |
| 6 | 0 | 45 | 45 | 7,5 | 7,5 | 60 | 1100 |
| 7 | 0 | 45 | 45 | 7,5 | 7,5 | 120 | 1100 |
| 8 | 0 | 45 | 45 | 7,5 | 7,5 | 180 | 1100 |
| 9 | 45 | 0 | 45 | 7,5 | 7,5 | 30 | 1100 |
| 10 | 45 | 0 | 45 | 7,5 | 7,5 | 60 | 1100 |
| 11 | 45 | 0 | 45 | 7,5 | 7,5 | 120 | 1100 |
| 12 | 45 | 0 | 45 | 7,5 | 7,5 | 180 | 1100 |
| 13 | 30 | 30 | 30 | 7,5 | 7,5 | 30 | 800 |
| 14 | 30 | 30 | 30 | 7,5 | 7,5 | 60 | 800 |
| 15 | 30 | 30 | 30 | 7,5 | 7,5 | 120 | 800 |
| 16 | 30 | 30 | 30 | 7,5 | 7,5 | 180 | 800 |
| 17 | 0 | 45 | 45 | 7,5 | 7,5 | 30 | 800 |
| 18 | 0 | 45 | 45 | 7,5 | 7,5 | 60 | 800 |
| 19 | 0 | 45 | 45 | 7,5 | 7,5 | 120 | 800 |
| 20 | 0 | 45 | 45 | 7,5 | 7,5 | 180 | 800 |
| 21 | 45 | 0 | 45 | 7,5 | 7,5 | 30 | 800 |
| 22 | 45 | 0 | 45 | 7,5 | 7,5 | 60 | 800 |
| 23 | 45 | 0 | 45 | 7,5 | 7,5 | 120 | 800 |
| 24 | 45 | 0 | 45 | 7,5 | 7,5 | 180 | 800 |

**Tabelle 8: Mechanochemische Mahlung von Biomasse mit den Zusatzstoffen Natriumnitrat und Ammoniumchlorid unter Luft und unter Argon Z**

| **Bsp. 14** | **Quarzsand** | **Aktivkohle** | **Biomasse** | **NaNO₃** | **NH₄Cl** | **Mahldauer** | **UPM** |
|---|---|---|---|---|---|---|---|
| **Vers. Nr** | **Q [g]** | **G [g]** | **A [g]** | **A [g]** | **A [g]** | **[min]** | |
| **1** | 30 | 30 | 30 | 7,5 | 7,5 | 30 | 1100 |
| **2** | 30 | 30 | 30 | 7,5 | 7,5 | 60 | 1100 |
| **3** | 30 | 30 | 30 | 7,5 | 7,5 | 120 | 1100 |
| **4** | 30 | 30 | 30 | 7,5 | 7,5 | 180 | 1100 |
| **5** | 0 | 45 | 45 | 7,5 | 7,5 | 30 | 1100 |
| **6** | 0 | 45 | 45 | 7,5 | 7,5 | 60 | 1100 |
| **7** | 0 | 45 | 45 | 7,5 | 7,5 | 120 | 1100 |
| **8** | 0 | 45 | 45 | 7,5 | 7,5 | 180 | 1100 |
| **9** | 45 | 0 | 45 | 7,5 | 7,5 | 30 | 1100 |
| **10** | 45 | 0 | 45 | 7,5 | 7,5 | 60 | 1100 |
| **11** | 45 | 0 | 45 | 7,5 | 7,5 | 120 | 1100 |
| **12** | 45 | 0 | 45 | 7,5 | 7,5 | 180 | 1100 |
| **13** | 30 | 30 | 30 | 7,5 | 7,5 | 30 | 800 |
| **14** | 30 | 30 | 30 | 7,5 | 7,5 | 60 | 800 |
| **15** | 30 | 30 | 30 | 7,5 | 7,5 | 120 | 800 |
| **16** | 30 | 30 | 30 | 7,5 | 7,5 | 180 | 800 |
| **17** | 0 | 45 | 45 | 7,5 | 7,5 | 30 | 800 |
| **18** | 0 | 45 | 45 | 7,5 | 7,5 | 60 | 800 |
| **19** | 0 | 45 | 45 | 7,5 | 7,5 | 120 | 800 |
| **20** | 0 | 45 | 45 | 7,5 | 7,5 | 180 | 800 |
| **21** | 45 | 0 | 45 | 7,5 | 7,5 | 30 | 800 |
| **22** | 45 | 0 | 45 | 7,5 | 7,5 | 60 | 800 |
| **23** | 45 | 0 | 45 | 7,5 | 7,5 | 120 | 800 |
| **24** | 45 | 0 | 45 | 7,5 | 7,5 | 180 | 800 |

Aus den Versuchsergebnissen der Beispiele 10 bis 14 ließen sich folgende allgemeine Tendenzen ableiten.
1. Der Abbau der Biomasse A und der stickstoffhaltigen Verbindungen A verlief mit Aktivkohle G schneller als mit Quarzsand Q.
2. Nach etwa 2 Stunden war der Effekt von Quarzsand Q allerdings stärker als der von Aktivkohle G, sodass es sich empfahl, kleine Mengen an Quarzsand Q zu den Mischungen hinzuzufügen.
3. Die Abnahme der stickstoffhaltigen Verbindungen A folgte dem natürlichen Logarithmus, wobei nach 60 Minuten alle stickstoffhaltigen Verbindungen A abgebaut waren.
4. Ein signifikanter Unterschied im Abbau der stickstoffhaltigen Verbindungen A zwischen den eingesumpften Mischungen F und den trocken hergestellten Mischungen F konnte nicht festgestellt werden. Es zeigte sich lediglich ein gewisser Trend, dass die eingesumpften Mischungen F einen schnelleren Abbau zeigten.
5. Die Umdrehungszahl war der entscheidende Faktor. So ist der Abbau der stickstoffhaltigen Verbindungen A bei 1100 UPM doppelt so schnell als der bei 800 UPM.
6. Ein Unterschied zwischen der Abbaugeschwindigkeit bei der Mahlung unter Luft und der Abbaugeschwindigkeit bei der Mahlung unter Argon wurde nicht gefunden.
7. Das Ultraphosphat B konnte durch die Mahlung in biologisch verfügbares, wasserlösliches Phosphat B überführt werden.
8. Die verschiedenen Mengen an Natriumnitrat A und Ammoniumchlorid A hatten keinen Einfluss auf die Abbauraten.

### Beispiel 15

### Eliminierung von Nitraten A und Ammonium A und Immobilisierung von Spurenelemente C in Kohle G und die Wiederverwendung der Kohle G in Biogasanlagen

10.000 kg Gülle A, die Nitrate A, Ammonium A, Phosphate B sowie Spuren von Arsen C und Schwermetallen C enthielten, wurden nach und nach mit einem handelsüblichen Gärrestetrockner getrocknet. Hierbei verblieben insgesamt 800 kg Trockenmasse F. Die Trocknung wurde bei erhöhter Temperatur durchgeführt, und das entweichende Ammoniak A wurde, wie in der deutschen Patentanmeldung DE 10 2016 004 162 A1 beschrieben, mit Schwefelsäure gebunden. Das resultierende Ammoniumsulfat A konnte zusammen mit der Trockenmasse F weiterverarbeitet werden. Die Trockenmasse F und das Ammoniumsulfat A wurden in einer separaten mechanischen Mühle 1 vorgemahlen. Anschließend wurden sie zusammen mit der hälftigen Menge an Aktivkohle G, 50 kg Bentonit Z und 10 kg N,N,N',N'-Ethylendiamintetra(methylenphosphonsäure) Z kontinuierlich in eine mechanische Mühle 1 mit einer Trommel 1.5 eines Volumens von 900 Liter von oben durch ein Schutzgitter 6, das die Mahlkörper 1.2 am Austritt hinderte, eingetragen. Als Mahlkörper 1.2 wurden 1000 kg Stahlkugeln 1.2 von 5 mm Durchmesser verwendet. Das Mahlgut F wurde zentral mittels eines Zyklons 8 wieder abgetrennt. Hierbei durchliefen etwa 100 kg Trockenmaterial F in einer Stunde die mechanische Mühle 1 und wurden bei einer konstanten Drehzahl von 1100 UPM gemahlen.

Das resultierende feste feinteilige Produkt I enthielt signifikant weniger Nitrationen A und Ammoniumionen A als die ursprüngliche Trockenmasse F. Außerdem waren Arsen C, die Schwermetalle C und ihre Verbindungen C in der Kohle G, dem Bentonit Z und dem Chelatkomplexbildner Z immobilisiert und konnten so nicht mehr in das Grundwasser gelangen, was ein wesentlicher Vorteil war.

Das wasserlösliche Phosphat B wurde aus dem festen feinteiligen Produkt I ausgewaschen, und die resultierende Lösung konnte als flüssiger Dünger E verwendet werden.

Das gewaschene Produkt I konnte als Trockenmasse oder in feuchtem Zustand in beliebiger Form wieder in die Biogasanlage zurückgeführt werden, um die Methanbildung zu steigern.

### Beispiel 16

### Die mechanochemische Verarbeitung von Gülle A und die Eliminierung von Nitraten A in der Gegenwart von katalytisch wirksamen Eisenpartikeln K

Gülle, die 200 mg/L Nitrationen enthielt, wurde in üblicher und bekannter Weise getrocknet. 100 Gewichtsteile der getrockneten Gülle A, 34 Gewichtsteile Quarzsand Q, 34 Gewichtsteile Aktivkohle G und 2 Gewichtsteile katalytische Eisenpartikel K wurden miteinander vermischt und wie bei den Beispielen 1 bis 3 beschrieben gemahlen. Nach 30 Minuten, 60 Minuten, 90 Minuten, 120 Minuten, 180 Minuten und 240 Minuten wurden dem Mahlgut F Proben I entnommen, die mit destilliertem Wasser eluiert wurden. Danach wurde der jeweilige Nitratgehalt A bestimmt. Er betrug jeweils 180 mg/L, 120 mg/L, 90 mg/L, 50 mg/L, 36 mg/L, 21 mg/L und 11 mg/L.

Das Beispiel belegte, dass das erfindungsgemäße mechanochemische Verfahren hervorragend für die Eliminierung von Nitraten A in Biomassen geeignet war.

### Beispiel 17

### Die mechanochemische Immobilisierung von karzinogenem sechswertigem Chrom

Es wurde ein Mahlgut F aus 50 Gewichtsteilen Aktivkohle G, 50 Gewichtsteilen Quarzsand und 10 Gewichtsteilen Kaliumdichromat C hergestellt und wie bei den Beispielen 1 bis 3 beschrieben gemahlen. Nach 120 Minuten wurden dem pulverförmigen Produkt I Proben entnommen. Die Proben I wurden mit Wasser eluiert und es wurde geprüft, ob noch wasserlösliche Chromsalze C zugegen waren. Die Konzentrationen lagen jedoch unterhalb der Nachweisgrenzen der üblichen und bekannten Methoden zur Bestimmung von Chrom C. Zum Vergleich wurde der Gehalt des pulverförmigen Produkts I an Chrom in üblicher und bekannter Weise analysiert. Dabei wurde die nahezu die gesamte ursprüngliche Menge Chrom C gefunden. Somit war die ursprüngliche Menge an sechswertigem Chrom C fast vollständig immobilisiert worden. Die geringen fehlenden Mengen an Chrom C waren offenbar von den Materialien im Hohlraum 1.1 der mechanischen Mühle 1 aufgenommen worden

### Beispiele 18 und 19

### Mechanische Mühlen zur Durchführung mechanochemischer Verfahren

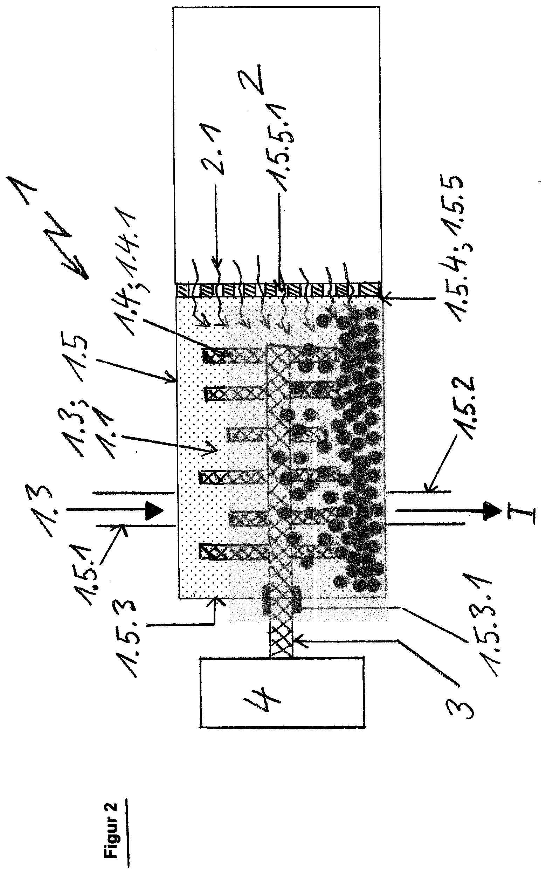

Die mechanische Mühle 1 für mechanochemische Verfahren umfasste mindestens einen rotierbaren (Beispiel 18; Figur 1) oder feststehenden (Beispiel 19; Figur 2) auch mechanochemischen Reaktor und Hohlleiter 1.1, der eine Vielzahl von Kugeln aus technischer Keramik als Mahlkörper 1.2 in einer mit technischer Keramik ausgekleideten Trommel 1.5 aus Edelstahl mit mindestens einem Einlass 1.5.1 für das Mahlgut F; 1.3 und mindestens einem Auslass 1.5.2 für das gemahlene Produkt I.

Die Trommel 1.5 des rotierbaren mechanochemischen Reaktors und Hohlleiters 1.1 des Beispiels 18 (Figur 1) wies eine scheibenförmige vertikale Trommelwand 1.5.3 auf, die in ihrem Zentrum mit einer von einem Motor 4 angetriebene rotierende Antriebswelle 3 verbunden war.

Die Trommel 1.5 des feststehenden mechanochemischen Reaktors und Hohlleiters 1.1 des Beispiels 19 (Figur 2) wies einen mit technischer Keramik überzogenen Attritor 1.4 aus Edelstahl zum Durchmischen der Mahlkörper 1.2 und des Mahlguts 1.3 auf. Der Attritor war längs der Längsachse der Trommel 1.5 drehbar angeordnet und wurde durch eine von einem Motor 4 antreibbare, rotierbare, durch die scheibenförmige vertikale Trommelwand 1.5.3 durchgeführte Durchführung 1.5.3.1 Antriebswelle 3 drehbar.

Sowohl bei der mechanischen Mühle 1 des Beispiels 18 (Figur 1) als auch bei der mechanischen Mühle (1) des Beispiels 19 (Figur 2) bestand die der scheibenförmigen vertikalen Trommelwand 1.5.3 gegenüberliegende Trommelwand 1.5.4 aus einem für elektromagnetische Strahlung und/oder Korpuskularstrahlung 2.1 durchlässigen, abnehmbaren, kratzfesten und schlagfesten Gitter 1.5.5 aus Keramik, das die mechanochemischen Reaktoren und Hohlleiter 1.1 von den Mikrowellengeneratoren 2 trennten.

Die Mikrowellengeneratoren 2 waren fest mit mechanochemischen Reaktoren und Hohlleitern 1.1 durch Flansche verbunden. Die Öffnungen 1.5.5.1 in den Gittern 1.5.5 waren rund und bildeten ein Raster. Die Gitter 1.5.5 mit runden Öffnungen 1.5.5.1 konnten durch Gitter 1.5.5 mit Öffnungen 1.5.5.1 mit 3-eckigen, 4-eckigen, 5-eckigen, 6-eckigen und schlitzförmigen Umrissen ersetzt werden.

Die Trommel 1.5 des Beispiels 19 (Figur 2) konnte auch die in den Figuren 1a, 1b, 2a und 3a der deutschen Offenlegungsschrift DE 195 04 540 A1 gezeigte Form aufweisen nur, dass sie auf der dem Antrieb 4; 3 und der Trommelwand 1.5.3 gegenüberliegenden Trommelwand 1.5.4 mindestens ein Gitter 1.5.5 aufwies.

Als Motoren 4 wurden Elektromotoren der Dynamic E Flow GmbH, Kaufbeuren, Deutschland, unter der Marke capcooltech^{®}, Typ HC und Typ LC verwendet.

### Beispiel 20

### Ausführungsformen der Agitationsmittel 1.4 in mechanochemischen Mühlen 1

Es wurden mechanochemischen Mühlen 1 gemäß dem Beispiel 19 bereitgestellt, die anstelle der Attritoren 1.4.1 weitere Ausführungsformen der Agitationsmittel 1.4 enthielten.

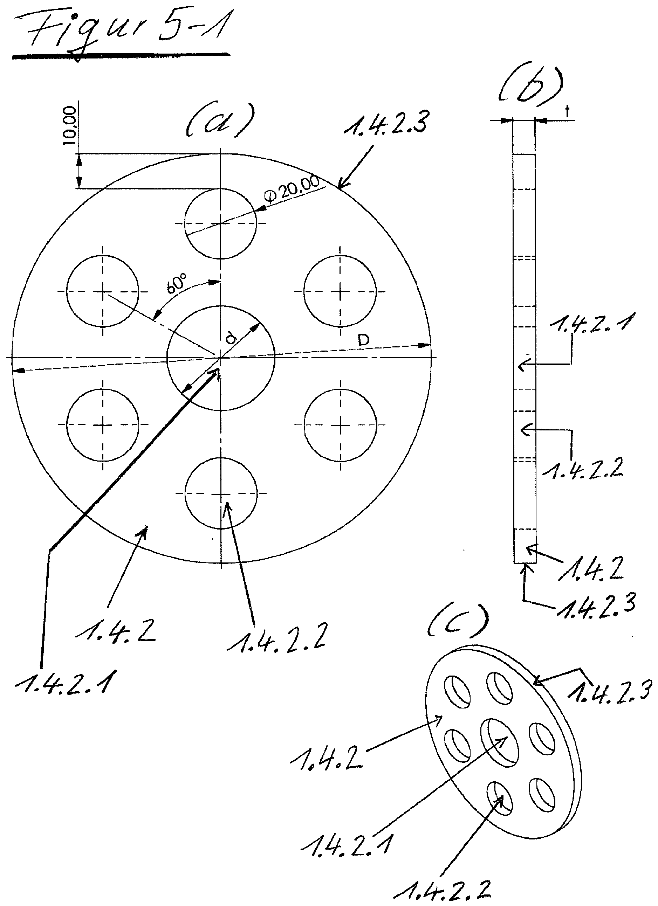

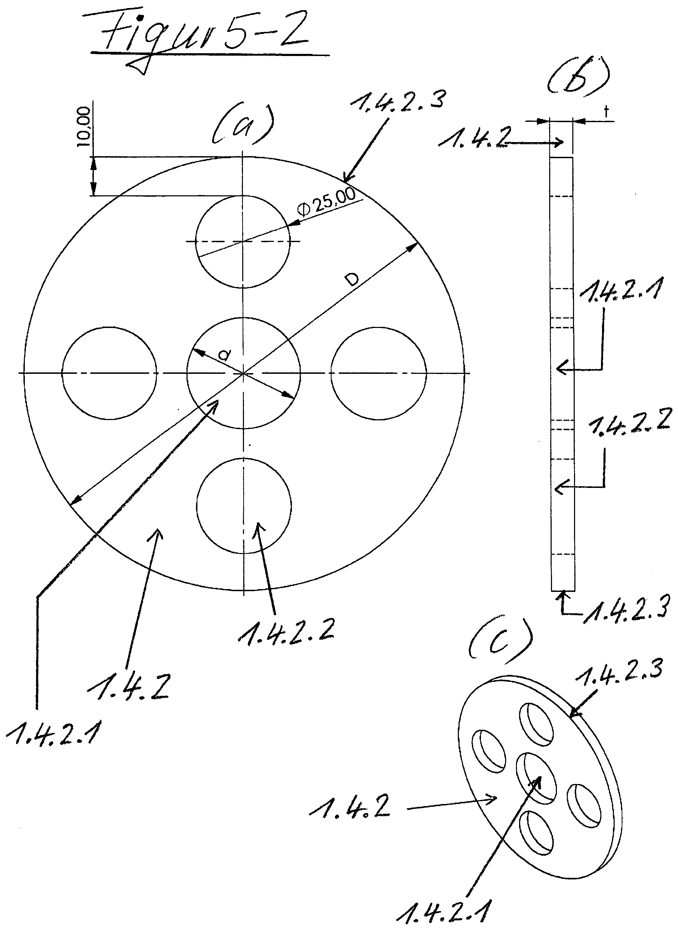

Die Agitationsmittel 1.4 gemäß den Figuren 5-1 (a), (b) und (c) waren Schlagscheiben 1.4.2 mit jeweils einer kreisrunde Kante 1.4.2.3. Die Schlagscheiben 1.4.2 wiesen die jeweils eine mittig angeordnete Durchführung 1.4.2.1 für die Antriebswelle 3 auf. Um die Durchführung 1.4.2.1 waren in jeweils gleichem Abstand sechs gleichgroße Schlaglöcher 1.4.2.2 symmetrisch angeordnet. Die Schlagscheiben 1.4.2 gemäß den Figuren 5-2 (a), (b) und (c) unterschieden sich von den Schlagscheiben 1.4.2 gemäß den Figuren 5-1 (a), (b) und (c) lediglich dadurch, dass sie vier statt sechs Schlaglöcher 1.4.2.2 aufwiesen.

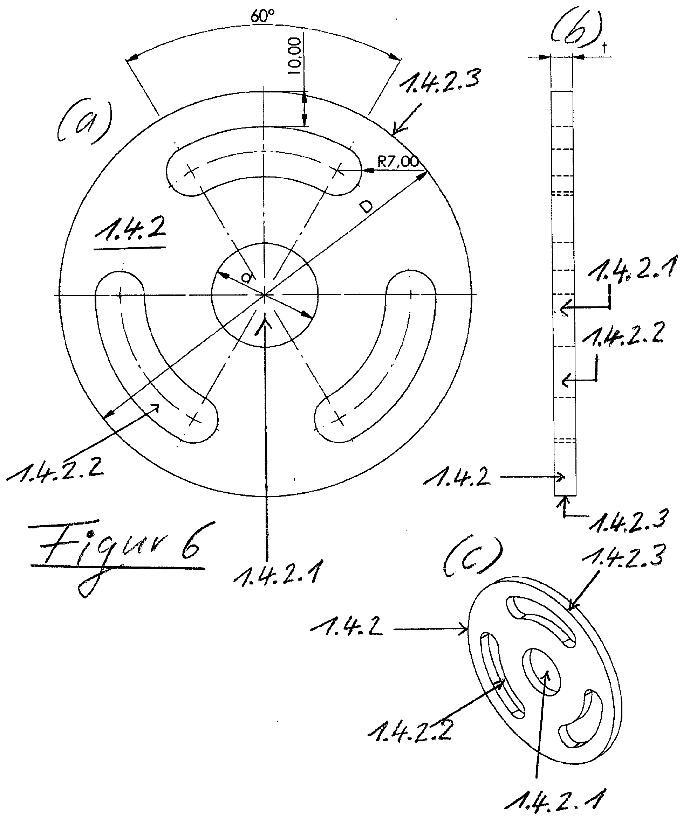

Die Schlagscheiben 1.4.2 gemäß den Figuren 6 (a), (b) und (c) wiesen drei parallel zur Kante 1.4.2.3 gebogene, längliche, symmetrisch im Kreis zueinander angeordnete Schlaglöcher 1.4.2.2 auf.

Die Schlagscheiben 1.4.2 konnten auf der Antriebswelle 3 so angeordnet werden, dass die Schlaglöcher 1.4.2.2 auf Deckung oder auf Lücke standen. Die Schlagscheiben 1.4.2.1 konnten indes auch so angeordnet werden, dass abwechselnd jeweils zwei oder mehr auf Deckung und dann zwei oder mehr auf Lücke standen.

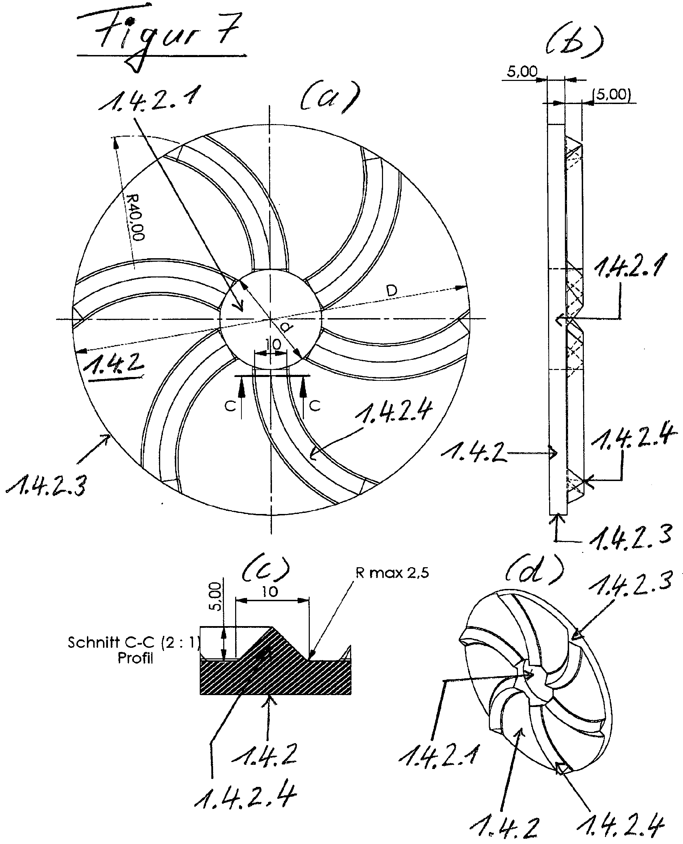

Die Schlagscheiben 1.4.2 der Figuren 7 (a), (b) und (c) wiesen auf einer ihrer gegenüberliegenden Oberflächen sechs symmetrisch angeordnete, in Drehrichtung konvex gebogene Schlagstege 1.4.2.4 mit einem dreieckigen Profil auf. Die Schlagstege 1.4.2.1 verliefen jeweils von der Durchführung 1.4.2.1 bis zur Kante 1.4.2.3. Bei einer weiteren Ausführungsform konnten die Schlagstege 1.4.2.4 auf beiden Oberflächen angeordnet sein.

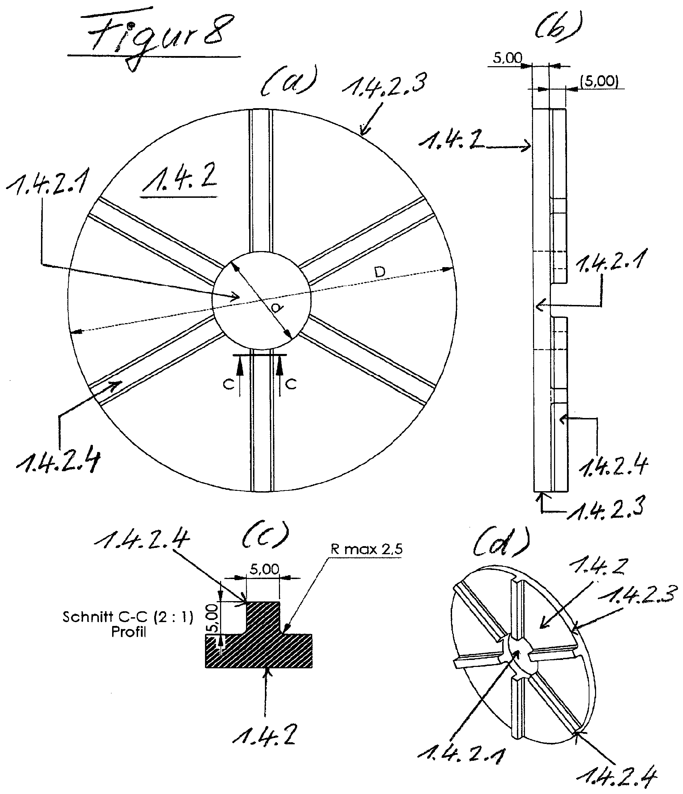

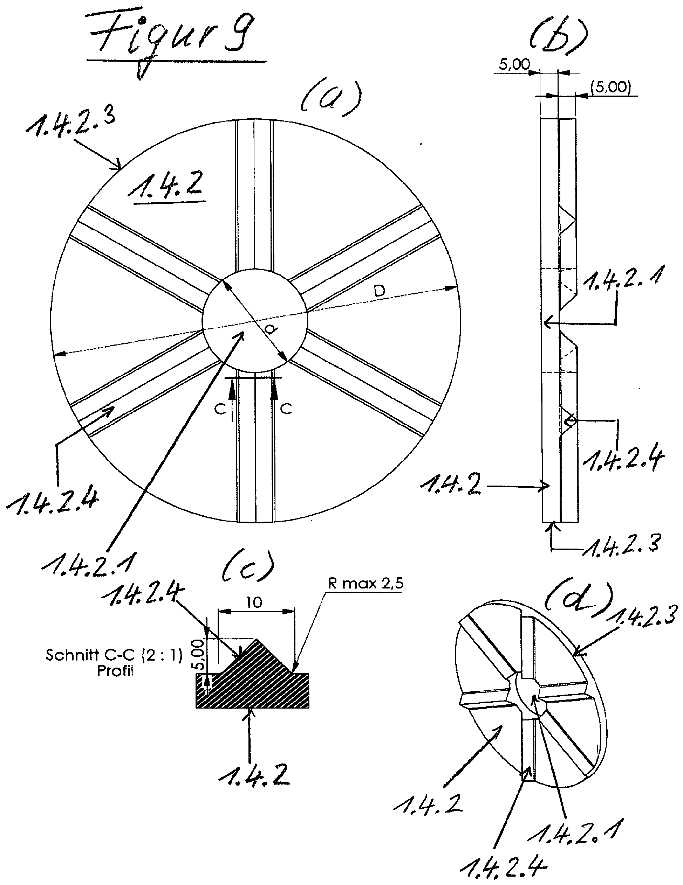

Die Schlagscheiben 1.4.2 der Figuren 8 (a), (b) und (c) unterschieden sich von den Schlagscheiben 1.4.2 dadurch, dass die Schlagstege 1.4.2.4 geradlinig angeordnet waren und ein viereckiges Profil aufwiesen. Die Schlagscheiben 1.4.2 der Figuren 9(a), (b) und (c) unterschieden sich von denen der Figuren 8 (a), (b) und (c) nur dadurch, dass die Schlagstege 1.4.2.4 ein dreieckiges Profil aufwiesen.

Auch diese Schlagscheiben 1.4.2 konnten auf der Antriebswelle 3 so angeordnet werden, dass die Schlagstege 1.4.2.4 auf Deckung oder auf Lücke standen. Die Schlagscheiben 1.4.2.1 konnten indes auch so angeordnet werden, dass abwechselnd jeweils zwei oder mehr auf Deckung und dann zwei oder mehr auf Lücke standen.

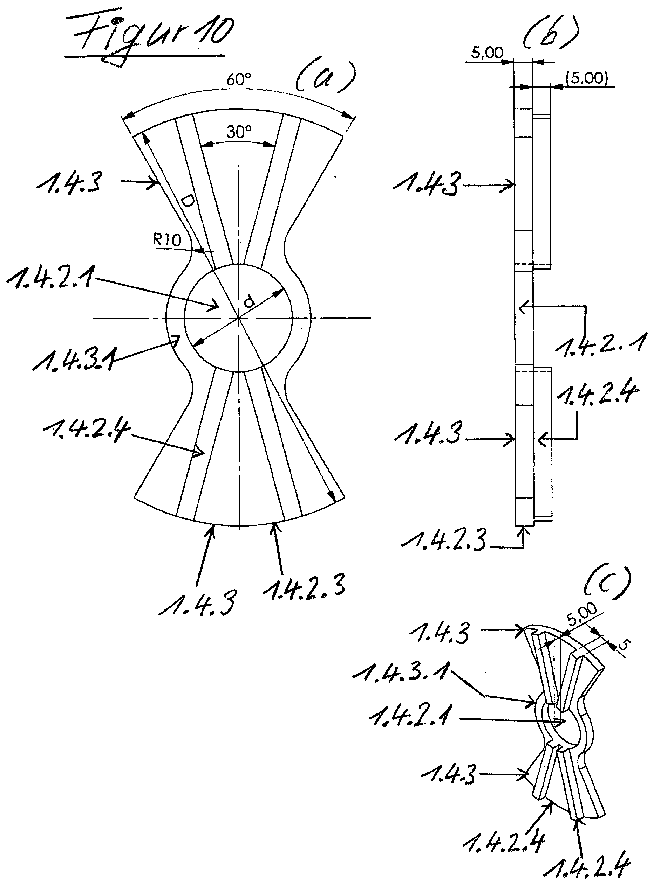

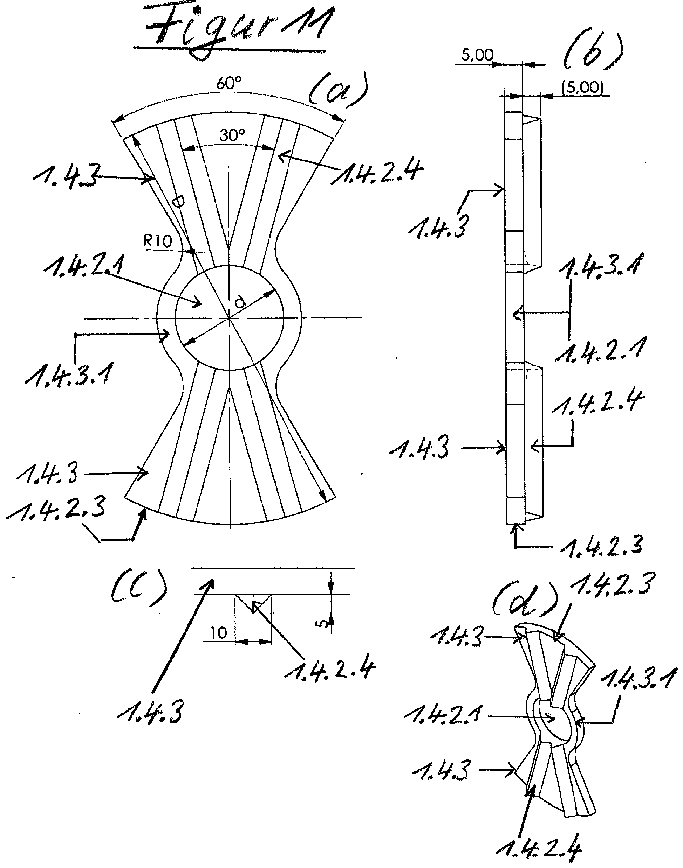

Die symmetrisch zu den Antriebswellen 3 angeordneten Agitationsmittel 1.4 der Figuren 10 (a), (b) und (c) wiesen jeweils zwei von einem die Durchführung 1.4.2 umschließenden Ring 1.4.3.1 ausstrahlende Schlagfächer 1.4.3 auf. Auf jeweils einer der Oberflächen der beiden Schlagfächer 1.4.3 waren jeweils zwei Schlagstege 1.4.2.4 mit viereckigem Profil strahlenförmig angeordnet. Die Schlagfächer 1.4.3 der Figuren 11 (a), (b) und (c) unterschieden sich von denen der Figuren 10 (a), (b) und (c) nur dadurch, dass die Schlagstege 1.4.2.4 ein dreieckiges Profil aufwiesen.

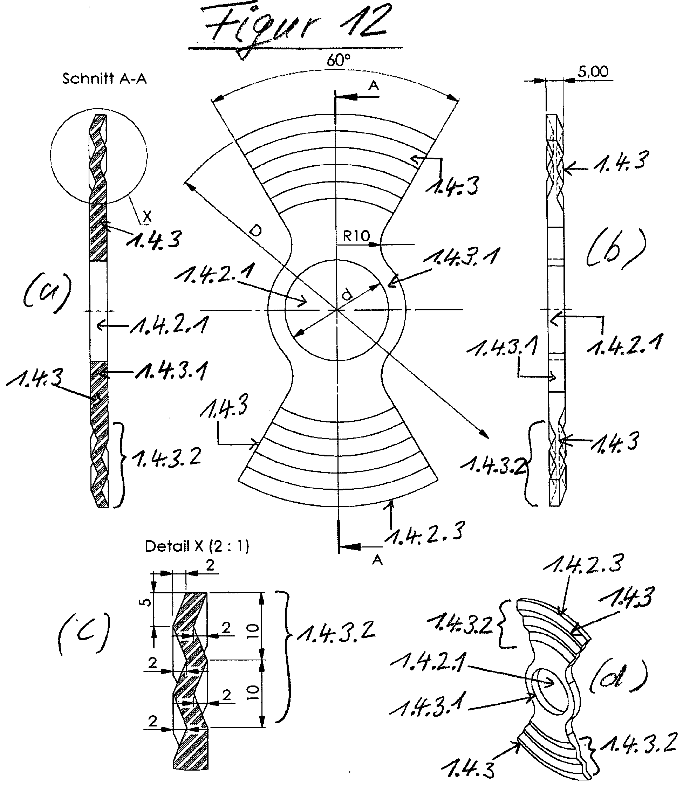

Die symmetrisch zu den Antriebswellen 3 angeordneten Schlagfächer 1.4.3 der Figuren 12 (a), (b), (c) und (d) wiesen jeweils ein parallel zu den Kanten 1.4.2.3 verlaufendes Berg-und-Tal-Profil 1.4.3.2 auf, das jeweils aus zwei Tälern und zwei Bergen bestand, auf.

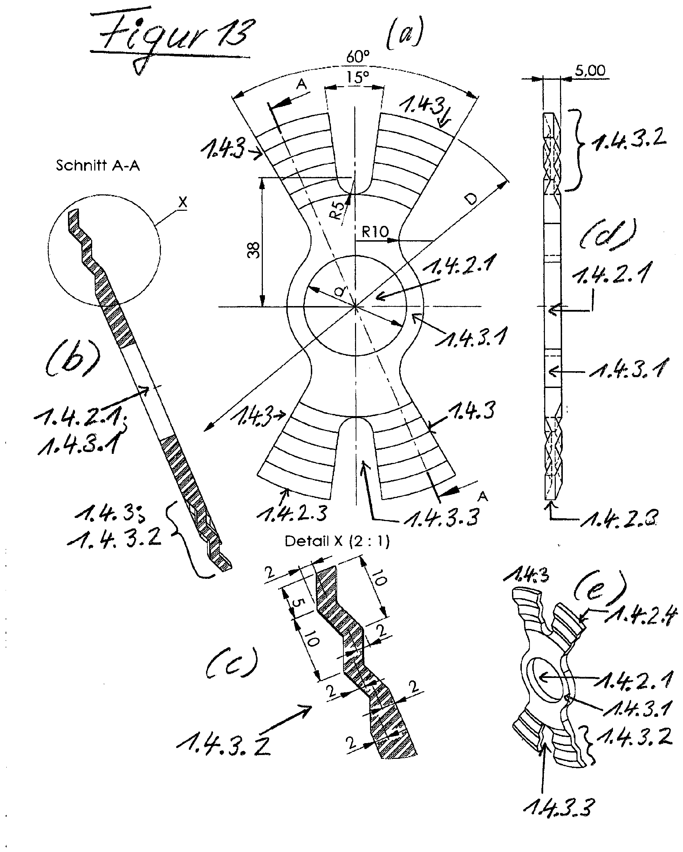

Bei den Agitationsmitteln 1.4 der Figuren 13 (a), (b), (c) und (e) verbreiterte sich der Ring 1.4.3.1 symmetrisch und ging in jeweils zwei Paare aus zwei ausstrahlende Schlagfächern 1.4.3, die durch jeweils eine U-förmige Spalte 1.4.3.3 voneinander getrennt waren, über. Die vier Schlagfächer wiesen ebenfalls jeweils ein parallel zu den Kanten 1.4.2.3 verlaufendes Berg-und-Tal-Profil 1.4.3.2 auf.

Auch diese Schlagfächer 1.4.3 konnten auf der Antriebswelle 3 so angeordnet werden, dass sie auf Deckung oder auf Lücke standen. Die Schlagfächer 1.4.3 konnten indes auch so angeordnet werden, dass abwechselnd jeweils zwei oder mehr auf Deckung und dann zwei oder mehr auf Lücke standen.

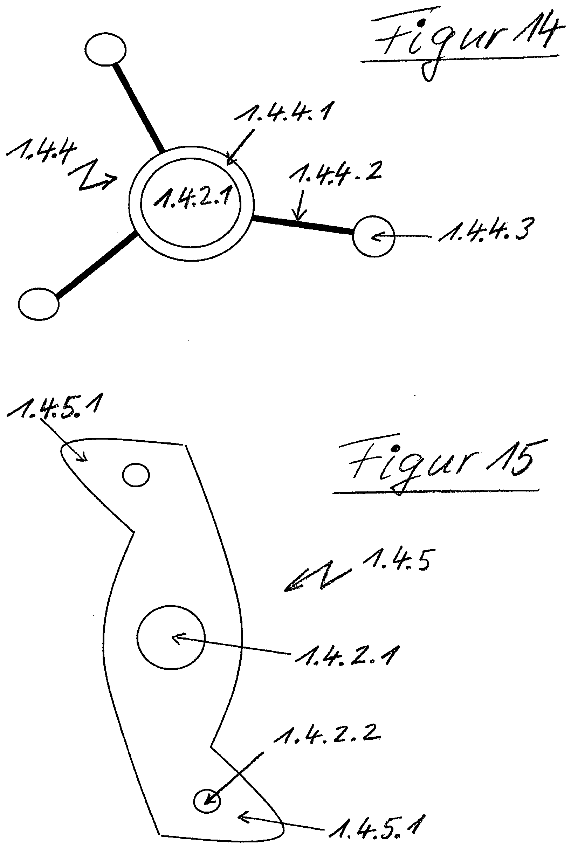

Die Schlagkeule 1.4.4 der Figur 14 wies drei symmetrisch von dem die Antriebswelle 3 umfassenden Ring 1.4.4.1 ausstrahlende Verbindungsstege 1.4.2.4 mit rundem Querschnitt auf, an deren Enden jeweils ein kugelförmige Schlagkörper 1.4.4.3 befestigt war. Die Schlagkeulen 1.4.4 konnten auf der Antriebswelle 3 so angeordnet werden, dass sie auf Deckung oder auf Lücke standen. Sie konnten indes auch so angeordnet werden, dass abwechselnd jeweils zwei oder mehr auf Deckung und dann wieder zwei oder mehr auf Lücke standen. Bei anderen Ausführungsformen konnten die Verbindungsstege 1.4.2.4 auch einen 4-eckigen, ovalen oder trapezförmigen Querschnitt oder einen abgeflachten Querschnitt wieder Querschnitt durch eine Messerschneide haben.

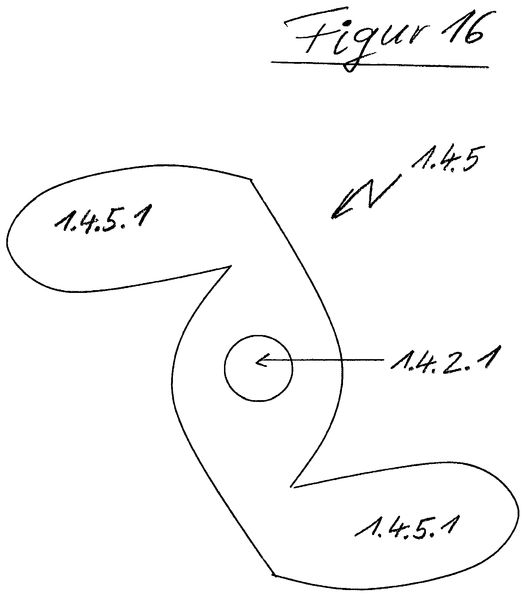

Der flächenförmige Schlagflügel 1.4.5 der Figur 15 wies eine S-Form auf, in deren beiden Schlagenden 1.4.5.1 Schlaglöcher 1.4.2.2 angeordnet waren. Der flächenförmige Schlagflügel 1.4.5 der Figur 16 wies eine ausgeprägtere S-Form ohne Schlaglöcher 1.4.2.2 auf. Die Schlagflügel 1.4.5 konnten auf der Antriebswelle so angeordnet werden, dass sie auf Deckung oder auf Lücke standen. Sie konnten indes auch so angeordnet werden, dass abwechselnd zwei oder mehr auf Deckung und dann wieder zwei oder mehr auf Lücke standen.

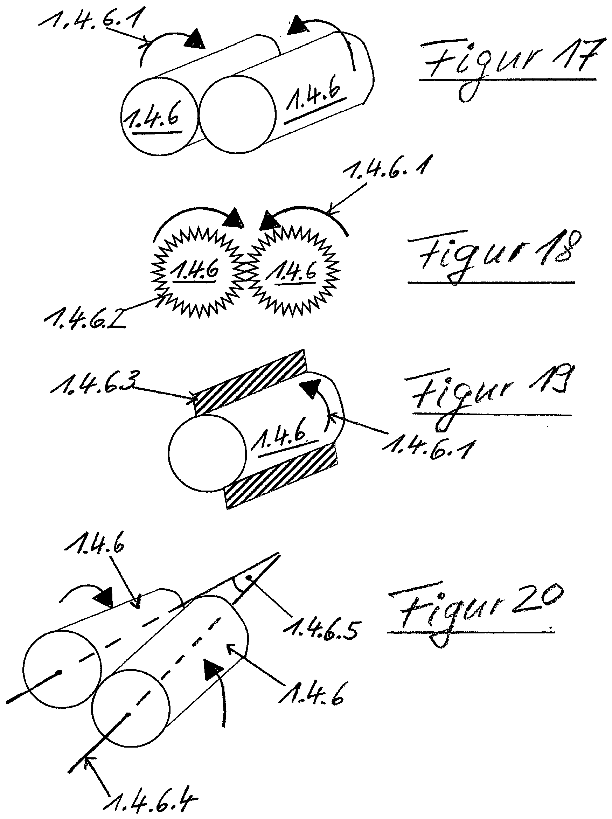

Anstelle der vorstehend beschriebenen Agitationsmittel 1.4 und Mahlkörper 1.2 konnten die mechanischen Mühlen 1 auch mit in entgegengesetzter Drehrichtung 1.4.6.1 drehenden Walzen 1.4.6 betrieben werden. Die Mahlung fand dann im Walzenspalt statt. Bei der Konfiguration gemäß der Figur 17 waren zwei parallele Walzen in Mahlraum 1.1 angeordnet. Bei der Konfiguration gemäß der Figur 18 wiesen die Oberflächen der beiden Walzen 1.4.6 ineinandergreifende Zacken 1.4.6.2 auf. Bei der Konfiguration gemäß der Figur 19 drehte sich die Walze 1.4.6 gegen eine Abriebwand 1.4.6.3, wobei die Mahlung im Spalt zwischen Walze 1.4.6 und Abriebwand 1.4.6.3 erfolgte. Bei der Konfiguration der Figur 20 kreuzten sich die Drehachsen 1.4.6.4 der zwei parallelen Walzen 1.4.6 in einem Winkel 1.4.6.5, wodurch eine zusätzliche Torsion des Mahlguts F resultierte.

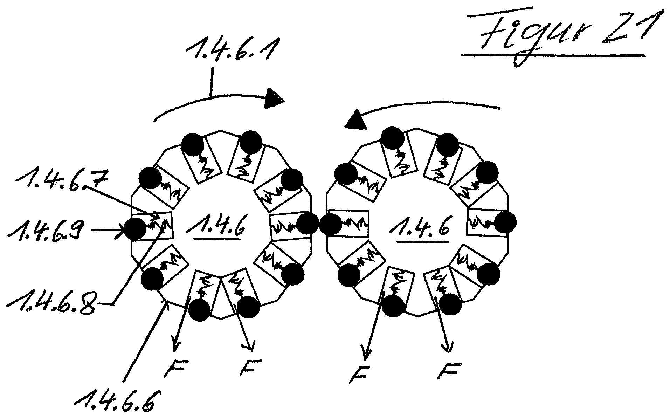

Die in entgegengesetzter Drehrichtung 1.4.6.1 drehenden Walzen 1.4.6 der Figur 21 wiesen eine federnde Oberfläche 1.4.6.6 auf. Diese wurde von symmetrisch angeordneten Vertiefungen 1.4.6.7 gebildet, in denen Federungen 1.4.6.8 die Kugeln 1.4.6.9 aus den Vertiefungen 1.4.6.7 herausdrückten. Die Mahlung des Mahlguts F erfolgte dann beim Drehen der Walzen 1.4.6 in dem Kontaktbereich zweier Kugeln 1.4.6.9. Die Kugeln 1.4.6.9 wiesen einen geringeren Durchmesser als die lichte Weite der Vertiefungen 1.4.6.7 auf, sodass das Mahlgut F, dass in die Vertiefungen 1.4.6.7 eingedrungen war, bei geeigneter Stellung der Walzen 1.4.6 wieder nach unten herausrieseln konnte.

### Beispiel 21

### Ausführungsformen des Mahlraums 1.1 der mechanischen Mühlen 1

Anstelle einer Trommel 1.5, bei der der Mahlraum 1.1 die Form eines geraden Zylinders hatte, konnte auch ein Mahlraum 1.1 verwendet werden, der mindestens zwei hintereinander angeordnete kugelschnittförmige Mahlräume 1.1.1, die durch mindestens eine kreisförmige Einschnürung 1.1.2 gebildet wurden. Die Antriebswelle 3 verlief mittig durch die kugelschnittförmige Mahlräume 1.1.1 und die kreisförmigen Einschnürungen 1.1.2. Die Dimensionen der Agitationsmittel 1.4 waren dem sich periodisch ändernden Durchmesser der Mahlräume 1.1.1 angepasst. Durch diese Konfiguration konnte eine Verbesserung der Durchmischung des Mahlguts F erzielt werden.

### Beispiel 22

### Mechanochemisches Verfahren zur Dekontamination von kontaminierter, phosphathaltiger Biomasse A; B und zur Rückgewinnung von Phosphat B in biologisch verfügbarer Form

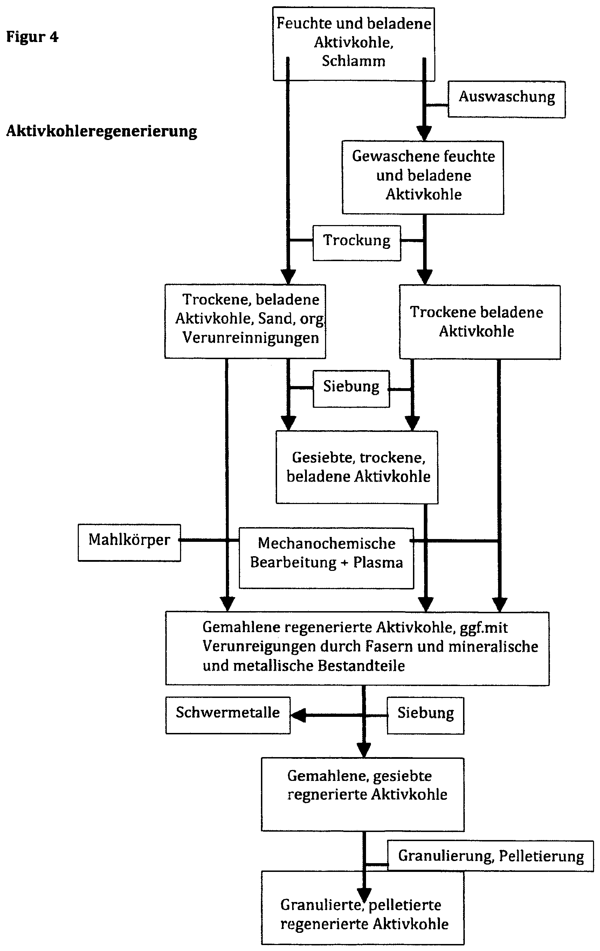

Das mechanochemische Verfahren wird anhand des Fließschemas der Figur 4 näher erläutert.

Die feuchte, mit Noxen beladene, phosphathaltige Biomasse A; B wurde getrocknet. Die resultierende Trockenmasse A; B oder die Feststoffe der Biomasse A; B wurden gesiebt und vorgemahlen. Das bei der Trocknung anfallende Wasser, das Ammoniak A und das Ammonium A enthielt, wurde der Osmose oder der Destillation unterworfen, sodass feste Ammoniumsalze E resultierten. Diese konnten als Ammoniumdünger (Wertprodukt E) verwendet werden. Die Ammoniumsalze A konnten aber auch zusammen mit den Feststoffen der Biomasse A; B in eine mechanische Mühle überführt und darin einer mechanochemischen Mahlung in der Gegenwart von Plasma unterworfen werden. Dadurch resultierte eine noxenfreie oder noxenreduzierte, immobilisierte Schwermetalle C und zerstörte Bakterien A und Viren A enthaltende Biomasse A; B, sowie Kohle G und Phosphate B. Diese Mischung I konnte granuliert und pelletiert werden und als Phosphatdünger E mit Kohle G und nicht toxischen anorganischen und organischen Anteilen Z verwendet werden. Desgleichen konnte die Mischung I gemahlen werden, sodass pulverförmiger Phosphatdünger E mit Kohle G und nicht toxischen anorganischen und organischen Anteilen Z entstand. Das wasserlösliche, biologisch verfügbare Phosphat B konnte aus dem Pulver I und den Pellets I extrahiert werden und als Flüssigdünger E verwendet werden. Dabei blieb Kohle G mit nicht toxischen organischen und anorganischen Bestandteilen Z zurück.

### Beispiel 22

### Die Regenerierung von Aktivkohle G für die Rückführung in die 4. Reinigungsstufe

Die feuchte, beladene Aktivkohle G und der Schlamm A aus der 4. Reinigungsstufe wurden ausgewaschen. Es resultierte eine ausgewaschenen, feuchte, beladene Aktivkohle G; A. Diese wurde getrocknet, sodass eine ausgewaschene, trockene, beladene Aktivkohle G resultierte.

Bei einer weiteren Ausführungsform wurden die feuchte, beladene Aktivkohle G; A und der Schlamm A direkt getrocknet, sodass eine trockene, beladene Aktivkohle G; A mit Sand Q und organischen Verunreinigungen A resultierte.

Die beiden Trockenmassen konnten jede für sich gesiebt werden oder vereinigt und dann gesiebt werden, sodass gesiebte, trockene, beladene Aktivkohle G; A erhalten wurde.

Die trockene, beladene Aktivkohle G; A mit Sand Q und organischen Verunreinigungen A, die ausgewaschene, trockene, beladene Aktivkohle G; A und die gesiebte, trockene, beladene Aktivkohle G; A konnten jede für sich oder zusammen in einer mechanischen Mühle 1 eine mechanochemischen Bearbeitung mit Mahlkörpern 1.2 und Plasma unterworfen werden. In allen Fällen resultierte eine gemahlene, regenerierte Aktivkohle G, die gegebenenfalls noch Verunreinigungen A; C durch Fasern und mineralische und metallische Bestandteile aufwies. Diese Aktivkohle wurde gesiebt um die Schwermetalle C abzutrennen. Gegebenenfalls konnten die Schwermetalle C auch mithilfe von Magneten abgetrennt werden. Die resultierende gemahlene, gesiebte und regenerierte Aktivkohle G konnte granuliert und pelletiert werden, und die Granulate und Pellets konnten wieder in die 4. Reinigungsstufe zurückgeführt werden.

### Beispiel 22

### Die radikalische Pfropfmischpolymerisation eines Gemisches von Ethylen und Propylen auf mechanochemisch behandeltem, duroplastischem Klarlack - Proof of Concept

Für die Mahlung wurde eine mechanische Mühle 1 gemäß den Beispielen 1 bis 3 verwendet. Deren Metalloberflächen waren gemäß dem Beispiel 16 (Figur 2) mit einer Schicht aus Aluminiumoxidkeramik beschichtet und statt Stahlkugeln 1.2 wurden Kugeln aus der Aluminiumoxidkeramik verwendet (vgl. Ulrike Wiech in der Firmenschrift der Ceram Tec-ETEC GmbH, Lohmar, think ceramics TECHNISCHE KERAMIK, Seiten 211 und 212, 3.4.4.2 Mahlen und Brechen). Das Gewichtsverhältnis von Mahlkörper 1.2 zu Mahlgut F lag bei 20:1. Der Einlass 1.5.1 für das Mahlgut F umfasste eine evakuierbare Schleuse, in die das Mahlgut F eingefüllt wurde. Anschließend wurde die Schleuse evakuiert. Nachdem ein Druck von 0,01 mbar erreicht war, wurde die Schleuse mit Argon bis zu einem Druck von 1,0 bar gefüllt. Danach wurde das Mahlgut F aus der Schleuse in den mit Argon gefüllte Mahlraum 1.1 des mechanochemischen Reaktors und Hohlleiters 1.1 fallen gelassen. Der Auslass 1.5.2 für das gemahlene Produkt P umfasste einen Tangential-Zyklonabscheider 8.

Als Mahlgut F wurde eine Mischung aus 70 g an pulverisiertem, thermisch gehärtetem Automobilserienklarlack A gemäß der Tabelle II-2.5: Automobilserienklarlack, Seite 142 des Lehrbuchs von Bodo Mueller und Ulrich Poth, Lackformulierungen und Lackrezeptur, das Lehrbuch für Ausbildung und Praxis, Vincentz Verlag, 2003, 3 g Aktivkohle G und 2 g Quarzsand Q verwendet. Das Mahlgut F wurde unter Argon während 2 Stunden mit einer Drehzahl des Attritors von 1100 UPM bis zu einer Feinheit einer mittleren Teilchengröße d₅₀ = 500 nm gemahlen. Während der Mahlung wurde der Hohlleiter 1.1 mit Mikrowellen 2.1, die mithilfe eines Mikrowellengenerators 2 erzeugt wurden, durch das Gitter 1.5.5 bestrahlt. Nach Beendigung der Mahlung wurde das resultierende Produkt I mit Argon aus dem mechanochemischen Reaktor 1.1 in den Tangential-Zyklonabscheider 8 gespült und dort unter Argon aus der Gasphase abgeschieden, unter inerten Bedingungen in einen entsprechend dimensionierten Wirbelschichtreaktor üblicher und bekannter Bauart überführt und mit Argon aufgewirbelt. Die Inertgasatmosphäre wurde durch ein Gasgemisch aus Ethylen und Propylen im Molverhältnis 1:1 verdrängt. Das Gasgemisch wurde im Kreis von unten durch den Wirbelschichtreaktor gepumpt und der durch die Pfropfmischpolymerisation an den Partikeln des gemahlenen Produkts I resultierende Druckabfall wurde durch Nachdosierung des Gasgemischs kompensiert. Nachdem kein Druckabfall mehr zu beobachten war, wurde die Pfropfmischpolymerisation durch Spülen des Wirbelschichtreaktors mit Argon beendet und das resultierende Pfropfmischpolymerisat ausgetragen. Dieses war ein feinteiliges, frei fließendes schwarzes Pulver einer mittleren Teilchengröße von d₅₀ = 1,5 µm.

### Beispiel 23

### Die Verwendung des erfindungsgemäßen mechanochemischen Verfahrens bei der Herstellung von Trinkwasser H₂O

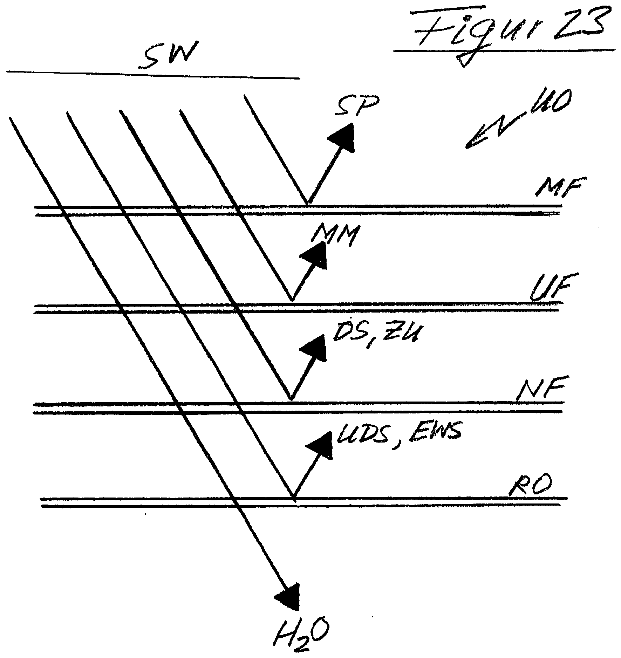

Die Figur 23 zeigt schematisch die Herstellung von Trinkwasser H₂O aus Salzwasser und/oder Schmutzwasser SW durch die Umkehrosmose UO und die Membranfiltration.

Vor der Mikrofiltration MF wurde die Aktivkohle G als Vorstufe zur Mikrofiltration genutzt, um die Membran MF vor Schmutz und Partikeln SP zu schützen. Dadurch wurden die Verkrustung und Verstopfung reduziert.

Auf der Ultrafiltrationsstufe wurden übliche Makromoleküle MM zurückgehalten. Durch die Aktivkohle G war aber der Großteil der Makromoleküle MM bereits entfernt worden, so dass die Ultrafiltrationsmembran UF eine Guard Membran war, die weniger verstopfte und viel länger haltbar war. Das galt insbesondere für Cellulose, Hemicellulose, Ligning, Huminsäuren, Proteine und Metaboliten.

Die nachfolgende Nanofiltration hielt die Nanofiltrationsmembran NF dissoziierte Salze und divalente und höhervalente Salze DS sowie Kationen und Anionen wie Sulfate DS, Phosphate B und Erdalkalimetalle C sowie Zucker ZU zurück. Besonders wichtig war, dass man hier Phosphate B trennen und gemeinsam mit Erdalkalimetallen C sauber aufarbeiten konnte.

Bei der abschließenden der Reversen Osmose oder Umkehrosmose RO wurden dann monovalente und undissoziierte Salze EWS; UDS zurückgehalten. Dabei entstand eine hoch angereicherte Lösung oder Suspension, die viel Ammonium A und Nitrat A sowie Chloride, Bromide und Alkalimetallkationen C enthält. Diese Salze C konnte man separat eindicken oder als Düngerkonzentrat E verkaufen oder, falls ein Überangebot hieran vorhanden war, einfach nach dem Eintrocknen mechanochemisch in Luftstickstoff umwandeln. Hierdurch konnte dann die Konzentration an Kationen C, die nicht zerstört wurden wie zum Beispiel Kalium C in der mechanischen Mühle erhöht werden.

Die Aktivkohle als Vorfilter wurde nach der Trocknung mechanochemisch recycelt und wieder als Vorfilter verwendet.

Insgesamt konnte durch dieses Verfahren wegen der Vorfiltration und der mechanochemischen Wiederaufarbeitung der Aktivkohle reines Wasser effektiv und effizient hergestellt werden.

### Beispiel 24

### Die Bindung von Noxen A mithilfe imprägnierter Aktivkohlen G und die Wiederaufbereitung der beladenen imprägnierten Aktivkohlen G

Die Abluftfilter von Viehställen, Faultürmen, Biogasanlagen und geschlossenen Abfalldeponien wurden mit mehrschichtigen imprägnierten Aktivkohlefiltern A ausgestattet. Die einzelnen Schichten waren mit Kaliumiodid, Kohlendioxid, Kohlenmonoxid, Schwefelwasserstoff und anderen Schwefelverbindungen imprägniert. Dadurch wurde die Adsorptionskapazität der Aktivkohle G signifikant gesteigert, weil Noxen A wie Ammoniak, Amine, Feinstaub, Ultrafeinstaub, Arsen und Quecksilber nicht nur durch die Adsorption, sondern zusätzlich durch Chemiesorption oder katalysierte Umsetzungen gebunden wurden. Die mit Kaliumiodid imprägnierten Aktivkohlen G waren in dieser Hinsicht besonders wirksam.

Die mit Noxen A beladenen imprägnierten Aktivkohlen G konnten dann mithilfe des erfindungsgemäßen mechanochemischen Verfahrens recycelt und reaktiviert werden.

### Beispiel 25

### Die Sichtung von Aktivkohlepartikeln G einer Teilchengröße von 1 µm bis 3 µm

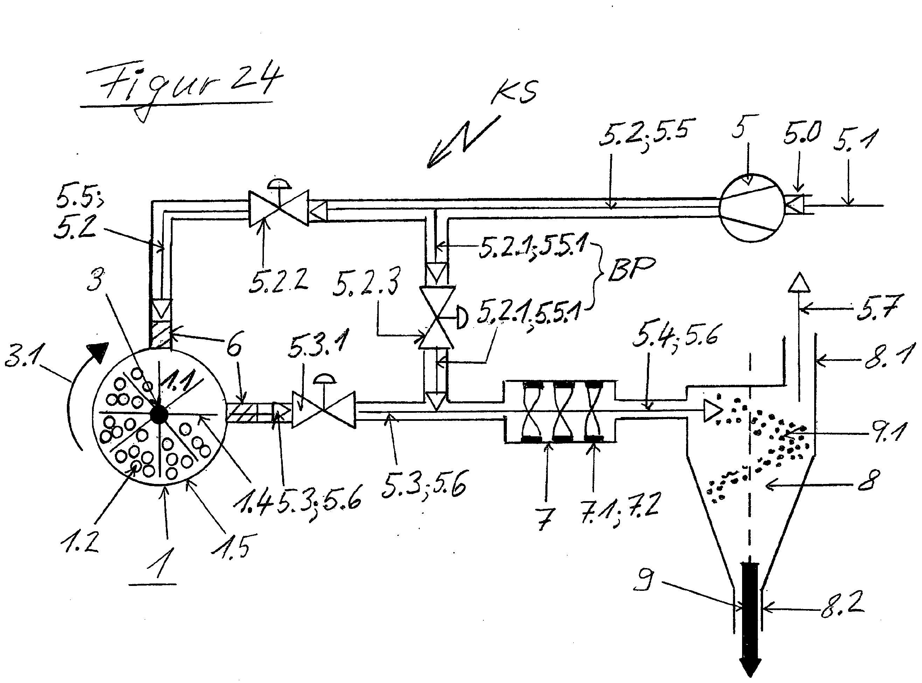

Eine weitere vorteilhafte Anwendung des erfindungsgemäßen mechanochemischen Verfahrens war die Sichtung die Abtrennung und Sichtung von Aktivkohlepartikeln G einer mittleren Teilchengröße d₅₀ von 1 µm 3 µm in der Vorrichtung gemäß der Figur 24.

Zu diesem Zweck wurde mithilfe eines Gebläses 5 gereinigter, getrockneter Stickstoff 5.1 durch ein Ansaugrohr 5.0 angesaugt und als Gasstrom 5.2 durch ein erstes Rohr 5.5 in den Mahlraum 1.1 einer mechanischen 1 Mühle geblasen. Vor dem Eintritt in den Mahlraum 1.1 durchströmte das Gas 5.2 ein gasdurchlässiges Schutzgitter 6, welches während des Betriebs der mechanischen Mühle 1 den Eintritt von Mahlkugeln 1.2 in das Rohr 5.5 verhinderte. Der Gasstrom 5.2 wurde in Strömungsrichtung gesehen unmittelbar vor dem Eintritt in den Mahlraum 1.1 mithilfe eines Regelventils 5.2.2 geregelt.

Die feinteiligen, pulverförmigen Aktivkohleteilchen G wurden mit den Gasstrom 5.3 einer mittleren Teilchengröße <1 µm durch ein weiteres Schutzgitter 6 über ein zweites Rohr 5.6 aus dem Mahlraum 1.1 ausgetragen. Der Gasstrom 5.3 wurde durch ein Regelventil 5.3.1 geregelt.

Der Gasstrom 5.3 wurde im weiteren Verlauf des Rohres 5.6 mit einem durch einen Bypass BP mit einem Rohr 5.5.1 geleitetet und mit einem mithilfe eines Regelventils 5.2.3 geregelten Gasstrom 5.2.1 vereinigt. Die vereinigten Gasströme 5.3; 5.2.1 wurden in eine Akustophoreseeinheit 7 gemäß der internationalen Patentanmeldung WO 2017/153038 geleitet, worin die feinteiligen Aktivkohleteilchen G mittels stehender Ultraschallwellen 7.2, die von einander gegenüberliegenden Ultraschallquellen 7.1 erzeugt wurden, agglomeriert wurden, sodass sie die gewünschten mittleren Teilchengröße d₅₀ aufwiesen. Der austretende Gasstrom 5.4 mit den agglomerierten Aktivkohleteilchen G wurde über die Gaszuleitung 5.6 in den Zyklon 8 geblasen, worin die agglomerierten Aktivkohleteilchen G; 9.1 aus der Gasphase (Abgas 5.7), die über die Abgasleitung 8.1 abgeleitet wurde, abgeschieden und als pulverförmiger Feststoff 9 über den Feststoffauslass 8.2 ausgeleitet wurden.

Ein wesentlicher Vorteil dieser Vorrichtung war, dass durch den Bypass BP, der die Gasleitung 5.5 und die Gasleitung 5.6 fluidmäßig miteinander verband, dafür gesorgt wurde, dass ein stärkerer Gasstrom 5.4 durch den Zyklon 8 als durch den Mahlraum 1.1 strömte.

### Beispiel 26

### Die mechanochemische Beseitigung des Schlupfes organischer Gase und Kohlendioxid in den Abgasen von Biogasanlagen und Gasmotoren

Der Schlupf organischer Gase F und Kohlendioxid D, insbesondere der Methanschlupf F bei Biogasanlagen und bei mit Methan und/oder mit Erdgas betriebenen Gasmotoren konnte effektiv und effizient eliminiert werden, indem die Schlupfgase mithilfe des erfindungsgemäßen mechanochemischen Verfahrens in der Gegenwart von Aktivkohle G mechanochemisch in Kohlenstoff G umgewandelt wurden und dadurch nicht mehr in die Atmosphäre gelangten, wo sie als besonders starke Treibhausgase gewirkt hätten. Somit konnte nicht nur die Emission von Treibhausgasen durch das erfindungsgemäße mechanochemische Verfahren wirksam verhindert werden, sondern es konnte der resultierende Kohle G erneut zur Mahlung eingesetzt werden.

### Beispiele 27 und 28

### Die Spaltung von Kohlendioxid in die Elemente - Proof of Concept

### Beispiel 27: Mit 13 C markiertem Kohlendioxid auf normaler Aktivkohle

20 g Aktivkohle mit einem typischen Isotopenverhältnis von 98,9 % C-12 und 1,1 % C-13 wurde mit C-13-markiertem Kohlendioxid (Sigma Aldrich 364592-1L EU, 99%-Atom C-13) bis zur Sättigung in einer mechanischen Mühle mit einem Volumen von 1 L während 12 Stunden bei Raumtemperatur begast. Die Aktivkohle wurde zuerst bei 110 °C während 12 Stunden getrocknet und anschließend unter vermindertem Druck entgast. Der Unterdruck war ein Hochvakuum von 10-3 hPa (mbar).

Danach wurde die Kohle mit 5 Gew. % Siliziumdioxid vermischt und bei 1200 UPM in einer mechanischen Mühle eines Mahlraums von 1 L mit 1250 g Chromstahlkugeln von 5 mm Durchmesser bei Raumtemperatur mechanochemisch behandelt. Anschließend wurde der Gehalt der Aktivkohle an C-13 mittels Massenspektrometrie bestimmt. Die Messsungen ergaben, dass 3,4 % C-13 vorhandeen waren. Damit waren bei der Mahlung 3,4 x 100 / 3,854 = **88,2 % C-13** in die Aktivkohle eingebaut worden.

### Berechnung:

1 Liter C-13 CO2 enthielt 0,04461 mol C-13 CO2
0,04461 mol enthielten bei einer Molmasse von M = 45 g/mol (O-16 99%) n x M = m, m = 2,0076 g
Davon wären 13/45 Anteile bei einer 100 %-igen Umsetzung zu Kohle umgesetzt worden. Das wären 0,579 g C-13 gewesen.

Bei einer theoretischen Umsetzung von 100 % hätte sich ergeben:

| | | | | |
|---|---|---|---|---|
| 20g Aktivkohle AK | mit | 98,9 % C-12 | und | 1,1 % C-13 |
| Ergab | | 19,780 g | 0,220 g | |
| 0,579g AK | mit | 1 % C-12 | und | 99 % C-13 |
| Ergab | 0,006 g | | 0,573 g | |
| Summe: | 19,786 g C-12 | und | 0,793 g C-13 | |
| Gesamtsumme | 19,786 g + 0,793 g = 20,579 g | | | |
| Davon | 96,146 % C-12 | und | 3,854 % C-13 | |

Zuvor war das Massenverhältnis in der AK = 98,9 C-12 / 1,1 % C-13

Nach einer 100 % Adsorption und Umsetzung wäre das Verhältnis in der AK = 96,146 % C-12 / 3,854 % C-13 gewesen.

### Beispiel 28: Mit 13-C markiertem Kohlendioxid auf mit Ammoniak beladerener Aktivkohle

20 g Aktivkohle mit einem typischen Isotopenverhältnis von 98,9 % C-12 und 1,1 % C-13 wurden mit C-13- markiertem Kohlendioxid (Sigma Aldrich 364592-1L EU, 99%-Atom C-13) und der stöchiometrisch gleichen Menge Ammoniak bis zur Sättigung in einer mechanischen Mühle mit einem Volumen von 1 L während 12 Stunden bei Raumtemperatur begast. Die Aktivkohle wurde zuerst bei 110 °C während 12 Stunden getrocknet und anschließend unter vermindertem Druck entgast. Der Unterdruck war ein Hochvakuum von 10-3 hPa (mbar).

Danach wurde die Kohle mit 5 Gew. % Siliziumdioxid vermischt und bei 1200 rpm in mechanischen Mühle mit einem Mahlraum von 1 L mit 1250 g Chromstahlkugeln von 5 mm Durchmesser mechanochemisch bei Raumtemperatur behandelt. In der gemahlenen Kohle wurde nun der Gehalt an C-13 mittels Massenspektrometrie bestimmt. Die Messungen ergaben, dass 3,4 % C-13 enthalten waren. Damit waren 3,6 x 100 / 3,854 = **93,4 % C-13** in die Aktivkohle eingebaut worden.

### Berechnung:

1 Liter C-13 CO₂ enthielt 0,04461 mol C-13 CO₂
0,04461 mol enthielten bei einer Molmasse von M = 45 g/mol (O-16 99%) n x M = m, m = 2,0076 g
Davon wären 13/45 Anteile bei einer 100 % igen Umsetzung zu Kohle umgesetzt gewesen. Das wären 0,579 g C-13 gewesen.

Bei einer theoretischen Umsetzung von 100 % hätte sich ergeben:

| | | | | |
|---|---|---|---|---|
| 20g AK | mit | 98,9 % C-12 | und | 1,1 % C-13 |
| Ergab | | 19,780 g C-12 | und | 0,220 g C-13 |
| 0,579g AK | mit | 1 % C-12 | und | 99 % C-13 |
| Ergab | | 0,006 g | und | 0,573 g |
| Summe | | 19,786 g C-12 | und | 0,793 g C-13 |
| Gesamtsumme | 19,786 g + 0,793 g = 20,579 g | | | |
| Davon | 96,146 % C-12 | und | 3,854 % C-13 | |

Zuvor war das Massenverhältnis der AK = 98,9 C-12 / 1,1 % C-13

Nach einer 100 %-igen Adsorption und Umsetzung wäre das Verhältnis in der AK = 96,146 % C-12 / 3,854 % C-13

### Fazit:

In der Gegenwart von Ammoniak wurde der Einbau von C-13 in die Aktivkohle signifikant gesteigert. Der Einbau von C-13 in die Aktivkohle war der Nachweis, dass das Kohlendioxid in die Elemente gespalten worden war.

## Patentansprüche

1. Mechanochemisches Verfahren zur Dekontamination und/oder Eliminierung von problembehafteten, synthetischen, biogenen und biologischen Materialien A bei dem man
(I) als Mahlgut F mindestens ein Fluid F, mindestens eine Lösung F, mindestens eine Suspension F, mindestens eine feinteilige feste Mischung F und/oder mindestens ein reaktives Gas F, enthaltend
- mindestens ein Material A und
- mindestens ein Material G, ausgewählt aus der Gruppe bestehend aus reiner, feinteiliger, mineralischer Kohle, teilpyrolisierter Kohle, Biokohle und Aktivkohle, kontaminierter oder imprägnierter, feinteiliger, mineralischer Kohle, teilpyrolisierter Kohle, Biokohle und Aktivkohle, feinteiliger Braunkohle und reiner und kontaminierter oder imprägnierter, feinteiliger Kohlenstofflieferanten sowie aus den vorstehend genannten, angefeuchteten Materialien G,
bereitstellt oder alternativ die Bestandteile F und G getrennt voneinander bereitstellt,
(II) das mindestens eine Fluid F, die mindestens eine Lösung F, die mindestens eine Suspension F, die mindestens eine feinteilige feste Mischung F und/oder das mindestens eine reaktive Gas F kontinuierlich oder diskontinuierlich in den Mahlraum (1.1) mindestens einer mechanischen Mühle (1) einfüllt oder alternativ
(III) die Bestandteile A sowie G des Mahlguts F nacheinander oder gleichzeitig kontinuierlich oder diskontinuierlich in den Mahlraum (1.1) der mindestens einen mechanischen Mühle (1) einfüllt und
(IV) darin mit durch Agitationsmittel (1.4) bewegten Mahlkörpern (1.2) oder mit Walzen (1.4.6) bei konstanter und/oder variabler Umdrehungsgeschwindigkeit fein vermahlt, wonach man
(V) die resultierende mindestens eine Suspension H mindestens eines pulverförmigen Produkts I und/oder das mindestens eine pulverförmige Produkt I kontinuierlich oder diskontinuierlich von den Mahlkörpern (1.2) oder den Walzen (1.4.6) trennt und aus dem Mahlraum (1.1) austrägt und
(VI) das mindestens eine fein verteilte, feste Produkt I aus der Suspension H abtrennt, wodurch mindestens ein aufgeschlossenes, biologisch verfügbares, lösliches Material als Wertprodukt E in das flüssige Medium übergeht, oder
(VII) das in dem mindestens einen fein verteilten, festen Produkt I vorhandene oder noch vorhandene mindestens eine aufgeschlossene, biologisch verfügbare, lösliche Material E mit mindestens einem flüssigen Medium auswäscht oder in dem mindestens einen Produkt I bis zu dessen Weiterverwendung als Wertprodukt E belässt und/oder
(VIII) das mindestens eine gewaschene, fein verteilte, feste Produkt I aus Aktivkohle G in den Verfahrensschritt (I) zurückführt und/oder als Wertprodukt E anderweitig verwendet und/oder
(X) den entstandenen elementaren Stickstoff und/oder Sauerstoff abtrennt,
wobei
das mindestens eine Material A aus der Gruppe bestehend aus natürlichen, synthetischen, biogenen und biologischen Materialien, die ökologisch problematisch, intensiv riechend, giftig, brennbar, brandfördernd, radioaktiv, Kohlenstoff liefernd und/oder explosiv sind, ihren Gemischen und ihren Abfällen sowie aus kontaminierten mineralischen Kohlen, Biokohlen, Aktivkohlen und Kohlenstofflieferanten, ausgewählt wird,
**dadurch gekennzeichnet, dass**
bei der Mahlung im Mahlraum (1.1) der Mühlen (1) ein Plasma zugegen ist, wobei das Plasma durch piezoelektrische Partikel erzeugt wird.

2. Mechanochemisches Verfahren nach Anspruch 1, **dadurch gekennzeichnet, dass**
- die piezoelektrischen Partikel aus der Gruppe, bestehend aus Kohlenstoff, Quarz, Glas Bariumtitanat (BTO), Bleizirkonattitanat (PZT), Bleimagnesiumniobate (PMN), Galliumorthophosphat, Berlinit, Turmaline, Seignettesalz, piezoelektrische Dünnschichten aus Zinkoxid, Aluminiumnitrid, Siliziumnitrid, Siliziumcarbid, Aluminiumoxid, Zirkoniumoxid und Titannitrid, Polyvinylidenfluorid (PVDF) sowie ferroelektrischen, polykristallinen Keramiken
ausgewählt werden.

3. Mechanochemisches Verfahren nach einem der Ansprüche 1 oder 2, **dadurch gekennzeichnet, dass** die Mahlung des mindestens einen Mahlguts F bei einer Temperatur der Mahlkörper (1.2) und des mindestens einen Mahlguts F von - 273 °C bis +1.200 °C durchgeführt wird.

4. Mechanochemisches Verfahren nach Anspruch 3, **dadurch gekennzeichnet, dass** die Temperaturen in den Hotspots und in den Plasmen bis zu 15.000 °C betragen.

5. Mechanochemisches Verfahren nach einem der Ansprüche 1 bis 4, **dadurch gekennzeichnet, dass** in dem Mahlgut F das Gewichtsverhältnis (Y) = (A) : (G) gleich 0,01 bis 10¹² beträgt.

## Claims

1. Mechanochemical process for decontaminating and/or eliminating problematic, synthetic, biogenic and biological materials A, wherein
(I) as material F to be milled, at least one fluid F, at least one solution F, at least one suspension F, at least one finely divided solid mixture F and/or at least one reactive gas F, containing
- at least one material A, and
- at least one material G, selected from the group consisting of pure, finely divided, mineral coal, partially pyrolyzed coal, biochar and activated charcoal, contaminated or impregnated, finely divided mineral coal, partially pyrolyzed coal, biochar and activated charcoal, finely divided lignite and pure and contaminated or impregnated, finely divided carbon suppliers, as well as from the above-mentioned, moistened materials G,
are provided or alternatively, the components F and G are provided separately from one another,
(II) the at least one fluid F, the at least one solution F, the at least one suspension F, the at least one finely divided solid mixture F and/or the at least one reactive gas F are filled continuously or discontinuously into the milling chamber (1.1) of at least one mechanical mill (1) or alternatively
(III) the components A and G of the material F to be milled are filled into the milling chamber (1.1) of the at least one mechanical mill (1) one after the other or at the same time, continuously or discontinuously, and
(IV) are finely milled therein by milling elements (1.2) moved by agitation means (1.4), or by rollers (1.4.6) at constant and/or variable speed of rotation, after which
(V) the resulting at least one suspension H of at least one pulverulent product I and/or the at least one pulverulent product I are/is separated continuously or discontinuously from the milling elements (1.2) or the rollers (1.4.6) and is discharged from the milling chamber (1.1), and
(VI) the at least one finely divided, solid product I is separated from the suspension H, as a result of which at least one disintegrated, biologically available, soluble material passes into the liquid medium as valuable product E, or
(VII) the at least one disintegrated, biologically available, soluble material E present or still present in the at least one finely divided, solid product I is washed out with at least one liquid medium or is left in the at least one product I as valuable product E until it is further used, and/or
(VIII) the at least one washed, finely divided, solid product I from activated charcoal G is returned to process step (I) and/or is used as valuable product E elsewhere, and/or
(X) the resulting elemental nitrogen and/or oxygen are/is separated,
wherein
the at least one material A is selected from the group consisting of natural, synthetic, biogenic and biological materials that are ecologically problematic, intensely smelling, toxic, combustible, oxidizing, radioactive, carbon supplying and/or explosive, mixtures thereof and waste thereof, as well as contaminated mineral coals, biochars, activated charcoals and carbon suppliers,
**characterized in that**
a plasma is present during the milling in the milling chamber (1.1) of the mills (1), wherein the plasma is generated by piezoelectric particles.

2. Mechanochemical process according to claim 1, **characterized in that**
- the piezoelectric particles are selected from the group consisting of carbon, quartz, glass barium titanate (BTO), lead zirconate titanate (PZT), lead magnesium niobate (PMN), gallium orthophosphate, berlinite, tourmaline, seignette salt, piezoelectric thin layers of zinc oxide, aluminum nitride, silicon nitride, silicon carbide, aluminum oxide, zirconium oxide and titanium nitride, polyvinylidene fluoride (PVDF) and ferroelectric, polycrystalline ceramics.

3. Mechanochemical process according to any one of claims 1 or 2, **characterized in that** the milling of the at least one material F to be milled is carried out at a temperature of the milling elements (1.2) and of the at least one material F to be milled of -273°C to +1200°C.

4. Mechanochemical process according to claim 3, **characterized in that** the temperatures in the hotspots and in the plasmas are up to 15000°C.

5. Mechanochemical process according to any one of claims 1 to 4, **characterized in that** the weight ratio (Y) = (A) : (G) in the material F to be milled is 0.01 to 10¹².

## Revendications

1. Procédé mécanochimique de décontamination et/ou d'élimination de matières synthétiques, biogéniques et biologiques problématiques A, dans lequel on fournit:
(I) en tant que matériau à broyer F, au moins un fluide F, au moins une solution F, au moins une suspension F, au moins un mélange solide à particules fines F et/ou au moins un gaz réactif F, contenant
- au moins une matière A et
- au moins une matière G choisie dans le groupe constitué par du charbon minéral pur à particules fines, du charbon partiellement pyrolysé, du biocharbon et du charbon actif, du charbon minéral contaminé ou imprégné à particules fines, du charbon partiellement pyrolysé, du biocharbon et du charbon actif, du lignite à particules fines, et des fournisseurs de carbone purs et contaminés ou imprégnés à particules fines, ainsi que les matières humidifiées G mentionnées ci-dessus,
ou, alternativement, les composants F et G sont fournis séparément l'un de l'autre,
(II) ledit au moins un fluide F, ladite au moins une solution F, ladite au moins une suspension F, ledit au moins un mélange solide à particules fines F et/ou ledit au moins un gaz réactif F sont introduits de manière continue ou discontinue dans la chambre de broyage (1.1) d'au moins un broyeur mécanique (1), ou, alternativement,
(III) les composants A et G du matériau à broyer F sont introduits successivement ou simultanément de manière continue ou discontinue dans la chambre de broyage (1.1) dudit au moins un broyeur mécanique (1) et
(IV) y sont finement broyés au moyen de corps de broyage (1.2) déplacés par des moyens d'agitation (1.4) ou au moyen de rouleaux (1.4.6) à une vitesse de rotation constante et/ou variable, ce après quoi
(V) ladite au moins une suspension H résultante d'au moins un produit pulvérulent I et/ou ledit au moins un produit pulvérulent I sont séparés de manière continue ou discontinue des corps de broyage (1.2) ou des rouleaux (1.4.6) et sont évacués de la chambre de broyage (1.1), et
(VI) ledit au moins un produit solide finement divisé I est séparé de la suspension H, ce qui permet à au moins une matière solubilisée, biodisponible, soluble de passer en tant que produit valorisable E dans le milieu liquide, ou
(VII) ladite au moins une matière solubilisée, biodisponible, soluble E présente ou encore présente dans ledit au moins un produit solide finement divisé I est éliminée par lavage avec au moins un milieu liquide ou est laissée dans ledit au moins un produit I jusqu'à son utilisation ultérieure en tant que produit valorisable E, et/ou
(VIII) ledit au moins un produit solide, lavé, finement divisé I de charbon actif G est ramené à l'étape de procédé (I) et/ou est utilisé ailleurs en tant que produit valorisable E, et/ou
(X) l'azote et/ou l'oxygène élémentaires résultants sont séparés,
dans lequel ladite au moins une matière A est choisie dans le groupe constitué par des matières naturelles, synthétiques, biogéniques et biologiques qui sont écologiquement problématiques, à forte odeur, toxiques, inflammables, oxydantes, radioactives, fournisseurs de carbone et/ou explosives, par leurs mélanges et leurs déchets, ainsi que par des charbons minéraux contaminés, biocharbons, charbons actifs et fournisseurs de carbone,
**caractérisé en ce qu'**un plasma est ajouté lors du broyage dans la chambre de broyage (1.1) des broyeurs (1),
le plasma étant généré par des particules piézoélectriques.

2. Procédé mécanochimique selon la revendication 1, **caractérisé en ce que**
- les particules piézoélectriques sont choisis dans le groupe constitué par le carbone, le quartz, le verre, le titanate de baryum (BTO), le titanate de zirconate de plomb (PZT), le niobate de plomb et de magnésium (PMN), l'orthophosphate de gallium, la berlinite, les tourmalines, le sel de Seignette, les couches minces piézoélectriques d'oxyde de zinc, de nitrure d'aluminium, de nitrure de silicium, de carbure de silicium, d'oxyde d'aluminium, d'oxyde de zirconium et de nitrure de titane, de fluorure de polyvinylidène (PVDF) ainsi que de céramiques ferroélectriques polycristallines.

3. Procédé mécanochimique selon l'une quelconque des revendications 1 ou 2, **caractérisé en ce que** le broyage dudit au moins un matériau à broyer F est effectué à une température des corps de broyage (1.2) et dudit au moins un matériau à broyer F qui est comprise entre -273 °C et +1.200 °C.

4. Procédé mécanochimique selon la revendication 3, **caractérisé en ce que** les températures dans les points chauds et dans les plasmas peuvent atteindre 15.000 °C.

5. Procédé mécanochimique selon l'une quelconque des revendications 1 à 4, **caractérisé en ce que**, dans le matériau à broyer F, le rapport pondéral (Y) = (A) : (G) est compris entre 0,01 et 10¹².
